# EUROPEAN PATENT APPLICATION

(11) **EP 4 730 065 A1**
(43) Date of publication of application: **22.04.2026**
(21) Application number: 25209300.0
(22) Date of filing: 16.10.2025
(51) Int. Cl.: G05D 1/648, A01B 69/00, G01C 21/00, G05D 105/15, G05D 107/20, G05D 109/10

(54) **PATH GENERATION METHOD, PATH GENERATION PROGRAM, AND PATH GENERATION SYSTEM**

(30) Priority: 17.10.2024 JP 2024181438; 18.07.2025 JP 2025120946
(71) Applicant: Yanmar Holdings Co., Ltd., Osaka-shi, Osaka (JP)
(72) Inventor: NISHII, Yasuto, Okayama-shi (JP); YAMAGUCHI, Yuji, Okayama-shi (JP); SATO, Shoichi, Okayama-shi (JP); MURAYAMA, Masaaki, Okayama-shi (JP)
(74) Representative: Sekiguchi, Kazuya

(57) **Abstract**

[Problem] Provided are a path generation method, a path generation program, and a path generation system that can improve the work accuracy when working at a corner of a work area.

[Solution] A generation processing unit 312 determines whether work at a corner of a work area has been completed up to a predetermined position inside the work area, and generates a corner work path for performing the work at the corner when it is determined that the work at the corner of the work area has not been completed up to the predetermined position.

## Description

### TECHNICAL FIELD

The present invention relates to a technique for generating a path on which a work vehicle travels.

### BACKGROUND ART

In the related art, a system is known that generates a spiral travel path for performing reaping work from the outside to the inside of a field, and causes a work vehicle to automatically travel along the travel path (see, for example, Patent Document 1).

### PRIOR ART DOCUMENT

### PATENT DOCUMENT

Patent Document 1: JP-A-2020-124149

### SUMMARY OF INVENTION

### TECHNICAL PROBLEM

When a work vehicle is caused to automatically travel along the spiral travel path, it is necessary to change direction of the work vehicle toward the next work path at a corner of a reaping target area where there are objects to be reaped in the field. Here, for example, in a case where the reaping work of the object to be reaped is insufficient at a corner, a problem occurs in that the work vehicle may come into contact with or trample on the object to be reaped when changing direction at the corner.

An object of the present invention is to provide a path generation method, a path generation program, and a path generation system that can improve the work accuracy when working at a corner of a work area.

### SOLUTION TO PROBLEM

A path generation method according to the present invention is a path generation method for generating an automatic travel path for a work vehicle to perform predetermined work on a work target in a work area. The path generation method includes: determining whether work at a corner of the work area has been completed up to a predetermined position inside the work area; and generating a corner work path for performing the work at the corner when it is determined that the work at the corner of the work area has not been completed up to the predetermined position.

A path generation program according to the present invention is a program for generating an automatic travel path for a work vehicle to perform predetermined work on a work target in a work area. The path generation program is a program for causing one or more processors to execute: determining whether work at a corner of the work area has been completed up to a predetermined position inside the work area; and generating a corner work path for performing the work at the corner when it is determined that the work at the corner of the work area has not been completed up to the predetermined position.

A path generation system according to the present invention is a system for generating an automatic travel path for a work vehicle to perform predetermined work on a work target in a work area. The path generation system includes a generation processing unit that determines whether work at a corner of the work area has been completed up to a predetermined position inside the work area, and generates a corner work path for performing the work at the corner when it is determined that the work at the corner of the work area has not been completed up to the predetermined position.

### ADVANTAGEOUS EFFECTS OF INVENTION

According to the present invention, it is possible to provide a path generation method, a path generation program, and a path generation system that can improve the work accuracy when working at a corner of a work area.

### BRIEF DESCRIPTION OF DRAWINGS

Fig. 1 is a functional block diagram showing a configuration of a traveling system according to an embodiment of the present invention;
Fig. 2 is an external view showing a configuration of a combine according to the embodiment of the present invention;
Fig. 3 is a diagram showing an example of a target path set in a field according to the embodiment of the present invention;
Fig. 4A is a diagram showing an example of a work procedure of the combine according to the embodiment of the present invention;
Fig. 4B is a diagram showing an example of a work procedure of the combine according to the embodiment of the present invention;
Fig. 4C is a diagram showing an example of a work procedure of the combine according to the embodiment of the present invention;
Fig. 5A is a diagram showing an example of corner reaping work by the combine according to the embodiment of the present invention;
Fig. 5B is a diagram showing an example of corner reaping work by the combine according to the embodiment of the present invention;
Fig. 6A is a diagram showing an example of an operation screen displayed on an operation terminal according to the embodiment of the present invention;
Fig. 6B is a diagram showing an example of a path creation result screen displayed on the operation terminal according to the embodiment of the present invention;
Fig. 7A is a diagram showing a specific example of a position (a non-working height) of a reaping unit of the combine according to the embodiment of the present invention;
Fig. 7B is a diagram showing a specific example of a position (an intermediate height) of the reaping unit of the combine according to the embodiment of the present invention;
Fig. 7C is a diagram showing a specific example of a position (a working height) of the reaping unit of the combine according to the embodiment of the present invention;
Fig. 8A is a diagram showing a specific example of reaping work in an outermost peripheral area in the combine according to the embodiment of the present invention;
Fig. 8B is a diagram showing a specific example of reaping work in the outermost peripheral area in the combine according to the embodiment of the present invention;
Fig. 8C is a diagram showing a specific example of reaping work in the outermost peripheral area in the combine according to the embodiment of the present invention;
Fig. 8D is a diagram showing a specific example of reaping work in the outermost peripheral area in the combine according to the embodiment of the present invention;
Fig. 8E is a diagram showing a specific example of reaping work in the outermost peripheral area in the combine according to the embodiment of the present invention;
Fig. 8F is a diagram showing a specific example of turning travel in the outermost peripheral area in the combine according to the embodiment of the present invention;
Fig. 9 is a diagram showing a state in which the reaping work in the outermost peripheral area of the field according to the embodiment of the present invention has been completed;
Fig. 10 is a diagram showing an example of an inner peripheral path (a corner reaping path) at a corner of the field according to the embodiment of the present invention;
Fig. 11 is a diagram showing an example of an inner peripheral path (a turning path) at the corner of the field according to the embodiment of the present invention;
Fig. 12 is a diagram showing an example of an inner peripheral path in an inner peripheral area of the field according to the embodiment of the present invention;
Fig. 13 is a diagram showing another example of the corner reaping path according to the embodiment of the present invention;
Fig. 14 is a diagram showing another method for generating a corner reaping path according to the embodiment of the present invention;
Fig. 15 is a diagram showing another method for generating a corner reaping path according to the embodiment of the present invention;
Fig. 16 is a flowchart showing an example of a procedure of generation processing of an inner peripheral path executed by the traveling system according to the embodiment of the present invention;
Fig. 17A is a diagram showing a state in which the field according to the embodiment of the present invention is divided into a grid pattern;
Fig. 17B is a diagram showing position information of each section of the field according to the embodiment of the present invention;
Fig. 18 is a diagram showing a specific example of a work rate calculated for each section of the field according to the embodiment of the present invention;
Fig. 19 is a diagram showing an example of work site information stored in the traveling system according to the embodiment of the present invention;
Fig. 20A is a diagram showing an example of a traveling method of the combine at a corner according to the embodiment of the present invention;
Fig. 20B is a diagram showing an example of a traveling method of the combine at the corner according to the embodiment of the present invention;
Fig. 20C is a diagram showing an example of a traveling method of the combine at the corner according to the embodiment of the present invention;
Fig. 20D is a diagram showing an example of a traveling method of the combine in the inner peripheral area according to the embodiment of the present invention;
Fig. 20E is a diagram showing an example of a traveling method of the combine in the inner peripheral area according to the embodiment of the present invention;
Fig. 21 is a diagram showing a specific example of a work rate calculated for each section of the field according to the embodiment of the present invention;
Fig. 22 is a diagram showing an example of a travel screen displayed on the operation terminal according to the embodiment of the present invention;
Fig. 23 is a flowchart showing an example of a procedure of automatic traveling processing executed by the traveling system according to the embodiment of the present invention;
Fig. 24A is a diagram for describing an operation of the reaping unit of the combine according to the embodiment of the present invention;
Fig. 24B is a diagram for describing an operation of the reaping unit of the combine according to the embodiment of the present invention;
Fig. 25 is a flowchart showing an example of a procedure of operation control processing of the reaping unit executed by the traveling system according to the embodiment of the present invention;
Fig. 26 is a diagram showing another example of a traveling method of the combine at the corner according to the embodiment of the present invention;
Fig. 27 is a diagram showing another example of a traveling method of the combine at the corner according to the embodiment of the present invention;
Fig. 28 is a diagram showing an example of a plurality of work target lines according to the embodiment of the present invention;
Fig. 29 is a diagram showing an example of a method for setting a work target line according to the embodiment of the present invention;
Fig. 30 is a diagram showing an example of a method for setting a terminal end of a work path according to the embodiment of the present invention;
Fig. 31A is a diagram showing a specific example of a work method at a corner according to the embodiment of the present invention;
Fig. 31B is a diagram showing a specific example of a work method at the corner according to the embodiment of the present invention;
Fig. 31C is a diagram showing a specific example of a work method at the corner according to the embodiment of the present invention;
Fig. 32A is a diagram showing a specific example of a traveling method of a movement path at a corner according to the embodiment of the present invention;
Fig. 32B is a diagram showing a specific example of a traveling method of a movement path at the corner according to the embodiment of the present invention;
Fig. 32C is a diagram showing a specific example of a traveling method of a movement path at the corner according to the embodiment of the present invention;
Fig. 33A is a diagram showing a specific example of a turning path at a corner according to the embodiment of the present invention;
Fig. 33B is a diagram showing a specific example of a turning path at the corner according to the embodiment of the present invention;
Fig. 34 is a diagram showing a specific example of a work path at a corner according to the embodiment of the present invention;
Fig. 35 is a diagram showing a specific example of a work path at a corner according to the embodiment of the present invention;
Fig. 36A is a diagram showing a specific example of turning travel at a corner according to the embodiment of the present invention;
Fig. 36B is a diagram showing a specific example of turning travel at the corner according to the embodiment of the present invention;
Fig. 36C is a diagram showing a specific example of turning travel at the corner according to the embodiment of the present invention;
Fig. 36D is a diagram showing a specific example of turning travel at the corner according to the embodiment of the present invention;
Fig. 36E is a diagram showing a specific example of turning travel at the corner according to the embodiment of the present invention;
Fig. 36F is a diagram showing a specific example of turning travel at the corner according to the embodiment of the present invention;
Fig. 36G is a diagram showing a specific example of turning travel at the corner according to the embodiment of the present invention;
Fig. 36H is a diagram showing a specific example of turning travel at the corner according to the embodiment of the present invention;
Fig. 37 is a flowchart showing an example of a procedure of generation processing of a turning path executed by the traveling system according to the embodiment of the present invention;
Fig. 38 is a diagram showing a specific example of a traveling method of a movement path at a corner according to the embodiment of the present invention;
Fig. 39A is a diagram showing a specific example of a method for generating a turning path at a corner according to the embodiment of the present invention;
Fig. 39B is a diagram showing a specific example of a method for generating a turning path at the corner according to the embodiment of the present invention;
Fig. 40A is a diagram showing a specific example of a turning path at a corner according to the embodiment of the present invention;
Fig. 40B is a diagram showing a specific example of a turning path at the corner according to the embodiment of the present invention;
Fig. 40C is a diagram showing a specific example of a turning path at the corner according to the embodiment of the present invention;
Fig. 41 is a diagram showing a specific example of a turning path at a corner according to the embodiment of the present invention;
Fig. 42 is a diagram showing a specific example of a turning path at a corner according to the embodiment of the present invention;
Fig. 43 is a diagram showing a specific example of a turning path at a corner according to the embodiment of the present invention;
Fig. 44A is a diagram showing a specific example of a turning path at a corner according to the embodiment of the present invention;
Fig. 44B is a diagram showing a specific example of a turning path at the corner according to the embodiment of the present invention;
Fig. 45 is a diagram showing a specific example of a turning path at a corner according to the embodiment of the present invention;
Fig. 46A is a diagram showing a specific example of a turning path at a corner according to the embodiment of the present invention; and
Fig. 46B is a diagram showing a specific example of a turning path at the corner according to the embodiment of the present invention.

### DESCRIPTION OF EMBODIMENTS

The following embodiment is an embodied example of the present invention, and does not limit the technical scope of the present invention.

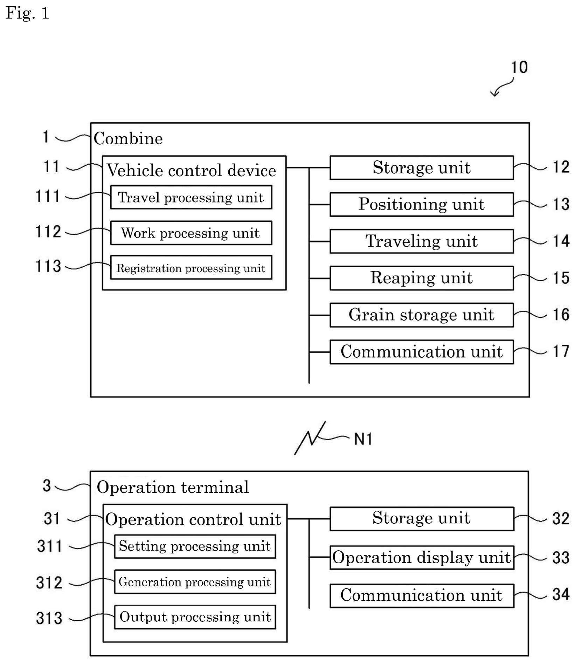

A combine 1 will be described as an example of a work vehicle of the present invention. As shown in Fig. 1, a traveling system 10 according to an embodiment of the present invention includes the combine 1 and an operation terminal 3. The combine 1 and the operation terminal 3 can communicate with each other via a communication network N1. For example, the combine 1 and the operation terminal 3 can communicate with each other via a mobile phone network, a packet network, or a wireless LAN.

The combine 1 is a work vehicle that performs agricultural work such as reaping in a field (an example of predetermined work of the present invention). The combine 1 performs work while traveling, and transmits GNSS information from a GNSS antenna mounted on the combine 1, that is, the vehicle position of the combine 1, to the operation terminal 3 as measurement point data.

In addition, the combine 1 can automatically travel along a preset target path. The combine 1 may be configured to manually travel in some areas of the field (for example, the outermost peripheral area) and automatically travel in other areas (for example, the inner peripheral area). The combine 1 may also be configured to receive various types of setting information from the operation terminal 3 and automatically travel in accordance with the setting information.

The operation terminal 3 is a portable terminal capable of remotely operating the combine 1, and includes, for example, a tablet terminal, a laptop personal computer, a smartphone, or the like. An operation device similar to the operation terminal 3 may be mounted on the combine 1.

An operator (a worker) can use the operation terminal 3 to perform setting operations for various setting items (for example, setting of an automatic travel path). The operation terminal 3 also displays information such as a work status and a traveling status of the combine 1 during automatic traveling. The operator can ascertain the work status and the traveling status on the operation terminal 3.

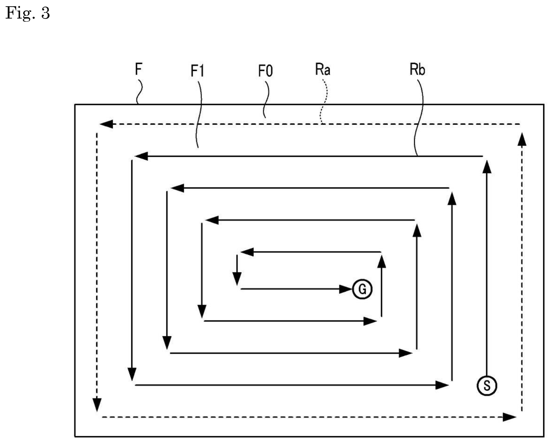

Fig. 3 shows an example of a target path R set for a field F. For example, within the field F, the combine 1 performs reaping work while traveling along an outermost peripheral path Ra in an outermost peripheral area F0 on the boundary side of the field F, and performs reaping work while traveling along an inner peripheral path Rb in an inner peripheral area F1 inside the outermost peripheral area F0. The target path R includes the outermost peripheral path Ra and the inner peripheral path Rb. The combine 1 may travel and perform reaping work on the outermost peripheral path Ra in response to manual operation (manual steering) by an operator, and may perform reaping work while automatically traveling on the inner peripheral path Rb. The combine 1 may also perform reaping work while automatically traveling along the outermost peripheral path Ra and the inner peripheral path Rb.

In the present embodiment, an example of a configuration will be described in which the combine 1 travels and performs reaping work (corner reaping work) on at least a part of the outermost peripheral path Ra (corners and edges of the field F) in response to manual operation by the operator, and performs reaping work while automatically traveling along the inner peripheral path Rb (the automatic travel path) in the inner peripheral area F1 from a start position S (an automatic travel start position) to an end position G (an automatic travel end position). Note that Fig. 3 shows a work method in which the combine 1 performs reaping work while traveling in a circular motion from the outer periphery to the inner periphery from the start position S to the end position G ("circular reaping"). However, as another embodiment, a work method in which the combine 1 performs reaping work while traveling back and forth from the start position S to the end position G ("reciprocating reaping") may be employed.

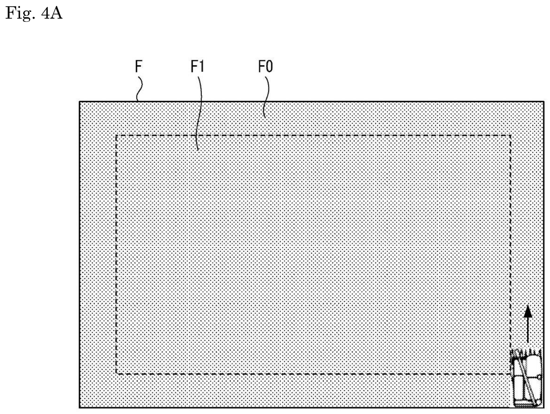

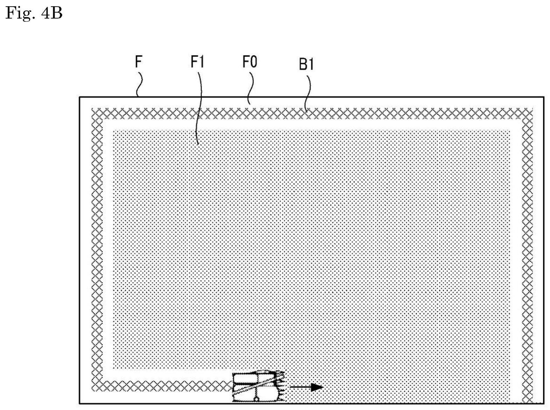

An example of a work procedure of the combine 1 will be described with reference to Figs. 4A to 4C. First, as shown in Fig. 4A, the combine 1 starts traveling in response to an operation of the operator at a predetermined position (for example, a corner) of the field F, and then travels in the outermost peripheral area F0 along the outer periphery of the field F while cutting grain stalks. In addition, after threshing the cut grain stalks, the combine 1 discharges waste straw such as straw chips to the outside from the rear of the machine body. Accordingly, as shown in Fig. 4B, waste straw B1 is piled up in the wake of the combine 1, and a waste straw row is formed on the path where the combine 1 has completed its reaping work. The combine 1 is set up to discharge the waste straw from the cut grain stalks to the position of the grain stalks to be cut, and is configured to be able to ascertain the position, the width (the lateral width of the waste straw row in a left-right direction), the length, and the like of the waste straw B1. For example, the waste straw B1 is discharged with a width narrower than the lateral width of the machine body, based on the center of the combine 1 in the left-right direction.

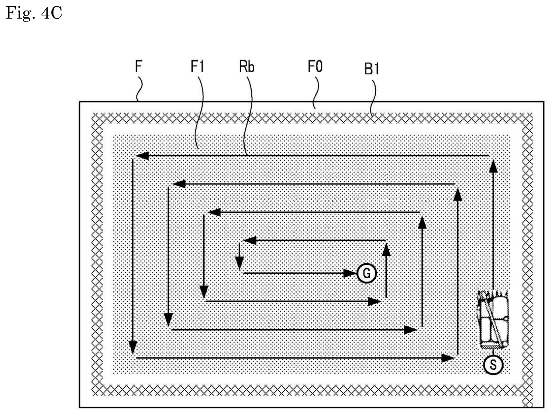

When the combine 1 ends the reaping work in the outermost peripheral area F0, the combine 1 starts automatic traveling and reaping work from the start position S in the inner peripheral area F1, as shown in Fig. 4C. The combine 1 performs the reaping work while automatically traveling along the inner peripheral path Rb, and ends the automatic traveling and reaping work when the combine 1 reaches the end position G.

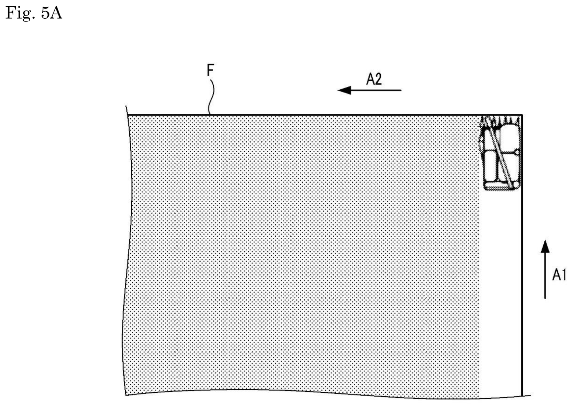

Here, the combine 1 changes direction (turns) at a corner of the field F when performing reaping work. For example, as shown in Fig. 5A, when the combine 1 performs reaping work on one side of the field (the right side of Fig. 5A) in an A1 direction and then performs reaping work on the other side of the field (the upper side of Fig. 5A) in an A2 direction, the orientation of the combine 1 is changed from the A1 direction to the A2 direction at the corner (the upper right corner of Fig. 5A). In this way, the combine 1 needs a turning area at each corner of the field F to move (turn) to the next path.

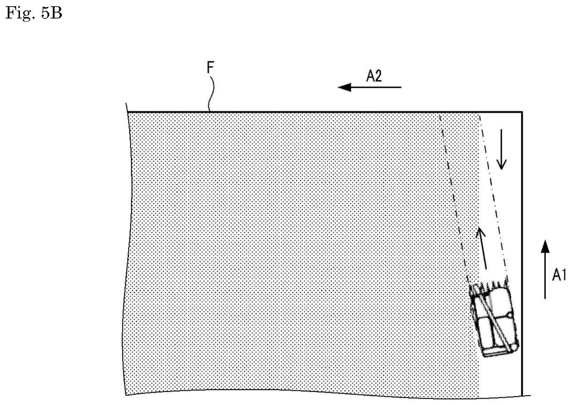

To generate the turning area, as shown in Fig. 5B, when the combine 1 completes the reaping work in the A1 direction (see Fig. 5A), the combine 1 moves backward to a predetermined position and stops, and then changes its direction of travel at the corner and moves forward to perform reaping work in a diagonal direction. The combine 1 repeatedly moves forward and backward until an area is secured in which the orientation of the vehicle body can be changed in the A2 direction, thereby performing reaping work at a corner (hereinafter referred to as corner reaping work).

The traveling system 10 according to the present embodiment has a configuration ("first configuration") for causing the combine 1 to perform corner reaping work in the outermost peripheral area F0, a configuration ("second configuration") for generating an inner peripheral path Rb (an automatic travel path) in the inner peripheral area F1, a configuration ("third configuration") for controlling the automatic traveling of the combine 1 on the generated inner peripheral path Rb, and a configuration ("fourth configuration") for controlling the operation (for example, lifting and lowering) of a work implement (the reaping unit 15) based on the generated inner peripheral path Rb. Specific examples of the first to fourth configurations will be described later. The traveling system 10 may have any one of the first to fourth configurations, or may have a plurality of configurations.

### [Operation Terminal 3]

As shown in Fig. 1, the operation terminal 3 is an information processing apparatus including an operation control unit 31, a storage unit 32, the operation display unit 33, a communication unit 34, and the like. The operation terminal 3 includes, for example, a tablet terminal.

The communication unit 34 is a communication interface for connecting the operation terminal 3 to the communication network N1 in a wired or wireless manner and for executing data communication according to a predetermined communication protocol with an external device such as one or more combines 1 via the communication network N1.

The operation display unit 33 is a user interface including a display unit such as a liquid crystal display or an organic EL display that displays various types of information, and an operation unit such as a touch panel, a mouse, or a keyboard that receives an operation. An operator can operate the operation unit to register various types of setting information on a setting screen (not shown) displayed on the display unit. In addition, the operator can operate the operation unit to issue an automatic traveling instruction to the combine 1. In addition, the operator can ascertain the traveling state of the combine 1 traveling automatically within the field F from a travel trajectory displayed on the operation terminal 3 at a location away from the combine 1. In addition, the operator can ascertain the work status displayed on the operation terminal 3 at a location away from the combine 1.

The storage unit 32 is a non-volatile storage unit such as a hard disk drive (HDD), a solid state drive (SSD), or a flash memory that stores various types of information. The storage unit 32 stores a control program for causing the operation control unit 31 to execute predetermined processing. For example, the control program is recorded in a non-transitory manner on a computer-readable recording medium such as a flash ROM, an EEPROM, a CD, or a DVD, and is read by a predetermined reading device (not shown) provided in the operation terminal 3 and stored in the storage unit 32. Note that the control program may be downloaded from a server (not shown) to the operation terminal 3 via the communication network N1 and stored in the storage unit 32. The storage unit 32 may also store work information transmitted from the combine 1. The control programs include control programs corresponding to the first to fourth configurations, respectively.

In addition, a dedicated application for causing the combine 1 to automatically travel is installed in the storage unit 32. The operation control unit 31 activates the dedicated application and performs setting processing of various types of setting information related to the combine 1, automatic traveling instructions for the combine 1, and the like.

The operation control unit 31 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Then, the operation control unit 31 controls the operation terminal 3 by executing, with the CPU, various control programs stored in advance in the ROM or the storage unit 32.

As shown in Fig. 1, the operation control unit 31 includes various processing units such as a setting processing unit 311, a generation processing unit 312, and an output processing unit 313. Note that the operation control unit 31 functions as the various processing units by executing, with the CPU, various types of processing according to a control program. In addition, some or all of the processing units may include an electronic circuit. Note that the control program may be a program for causing a plurality of processors to function as the processing unit.

The setting processing unit 311 sets various types of setting information for the combine 1 to perform automatic traveling. Specifically, the setting processing unit 311 sets field information related to the field F. The field information includes, for example, a shape, a size, and position information (coordinates and the like) of the outermost periphery of the field, measurement point data that constitutes the outermost periphery of the field, and a shape, a size, and position information (coordinates and the like) of the work area within the field where work is performed in the field F. The field information also includes an address of the field F, a registration name and a registration date of the field information, a registration name and a registration date of the work area within the field, and the like. The setting processing unit 311 receives an operation of the operator to register the field information and sets the field information.

Furthermore, the setting processing unit 311 sets the traveling speed (the vehicle speed) of the combine 1. For example, the operator can set a straight vehicle speed, a turning vehicle speed, and a reverse vehicle speed during work and non-work times on the setting screen.

In addition to the above information, the setting processing unit 311 sets well-known information such as a type of combine 1 (the maximum number of reaping rows), a vehicle width, and a vehicle length.

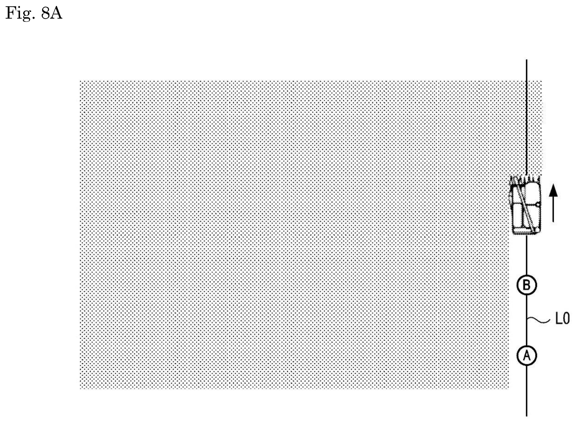

The generation processing unit 312 generates an automatic travel path for the combine 1 to perform predetermined work on a work target in the field F. Specifically, the generation processing unit 312 generates a target path R (an outermost peripheral path Ra and an inner peripheral path Rb) including a work path and a turning path. For example, the generation processing unit 312 generates the outermost peripheral path Ra in response to a registration operation performed by an operator during manual travel. For example, when an operator operates to register two reference points (points A and B shown in Fig. 8A) when causing the combine 1 to travel straight in the outermost peripheral area F0 of the field F, the generation processing unit 312 sets a straight line (a reference line L0) passing through the two reference points as the outermost peripheral path Ra. The generation processing unit 312 sets an outermost peripheral path Ra corresponding to each side of the outer periphery of the field F. The method for generating the outermost peripheral path Ra is not limited to thereto, and the generation processing unit 312 may generate a path parallel to the outer edges of the field F as the outermost peripheral path Ra when the shape of the field F has already been registered, or may create the outermost peripheral path Ra based on the vehicle orientation when a predetermined operation is performed by the operator.

In addition, when the shape of the field F has not been registered, the setting processing unit 311 may register the shape and the size of the field F based on the travel trajectory (the measurement point data) acquired while the operator causes the combine 1 to manually travel and execute reaping work. In addition, the setting processing unit 311 may register the shape and the size of the field F based on the travel trajectory acquired while the operator causes the combine 1 to manually travel and execute reaping work along the outermost peripheral path Ra.

The operator also selects a path pattern, a turning type, and the like on a setting screen (not shown). The path pattern includes "circular reaping", in which laps along the inner periphery of the inner peripheral area F1 are repeatedly performed while being shifted toward the center, and "reciprocating reaping", in which a plurality of passes are performed back and forth, and the operator selects one of the path patterns. The turning type includes a "small turn" with a small turning radius, a "large turn (soft)" with a large turning radius, and a "standard" type between them, and the operator selects one of the turning types. Furthermore, the operator can correct the turning radius on the setting screen. The operator also selects on the setting screen whether to perform corner reaping work in the field F.

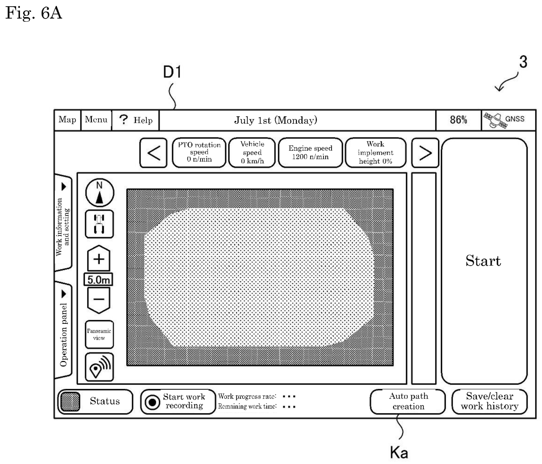

The generation processing unit 312 generates an inner peripheral path Rb (an automatic travel path) from the start position S to the end position G based on information such as the field information, the path pattern, the turning type, the turning radius, and whether corner reaping work is performed. For example, when the operator presses a path generation button Ka ("auto path creation") on an operation screen D1 (see Fig. 6A) at the point in time when the reaping work in the outermost peripheral area F0 has ended, the generation processing unit 312 generates the inner peripheral path Rb.

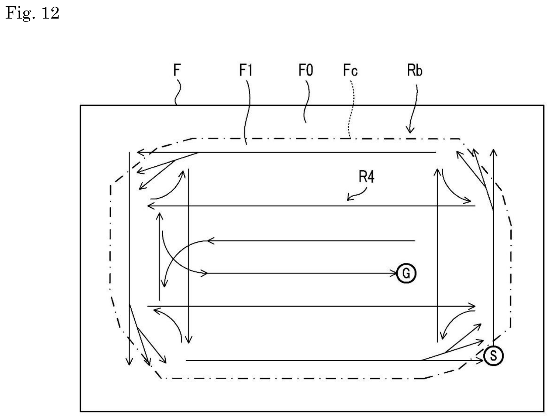

The generation processing unit 312 may set the start position S to the current position of the combine 1 when generating the inner peripheral path Rb, or may set the start position S to a position designated on the map by the operator. In addition, when corner reaping work is set to "Yes" on the setting screen, the generation processing unit 312 generates an automatic travel path (hereinafter referred to as a corner reaping path) for causing the combine 1 to automatically travel and perform corner reaping work. The corner reaping path includes a straight path and a turning path in both the forward direction and the backward direction. Furthermore, the corner reaping path may be included in one or more (for example, two to three) rounds of the inner peripheral path Rb on the outer peripheral side of the inner peripheral path Rb, but may not be included in the inner peripheral path Rb on the inner peripheral side of that (see Fig. 12).

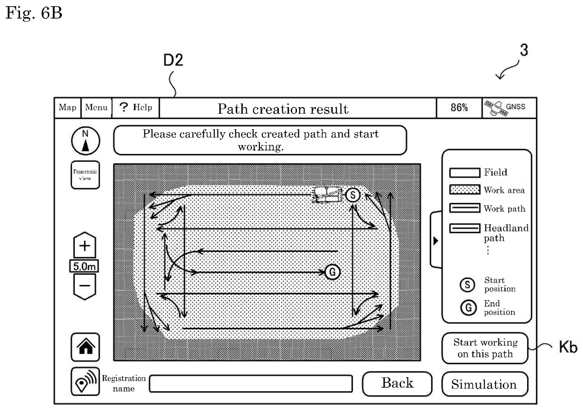

After generating the inner peripheral path Rb, the generation processing unit 312 displays the generated path information on a path creation result screen D2 (see Fig. 6B). The generation processing unit 312 also registers the generated inner peripheral path Rb in association with the field F (a registered field name). A specific example of the method for generating the target path R (a second configuration) will be described later.

The output processing unit 313 outputs the various types of setting information set by the setting processing unit 311 to the combine 1. Furthermore, the output processing unit 313 outputs an automatic traveling start instruction (a work start instruction) and an automatic traveling end instruction (a work end instruction) to the combine 1 based on the operation of the operator.

For example, when the combine 1 satisfies the automatic traveling start conditions, that is, when the position of the combine 1 is within a predetermined distance from the start position S, the orientation of the combine 1 is within a predetermined angle with respect to the orientation of the work path, and other automatic traveling start conditions are also satisfied, automatic traveling is permitted. When automatic traveling is permitted, the operator can perform an automatic traveling start instruction operation on the operation terminal 3, and when the operation control unit 31 receives the automatic traveling start instruction operation from the operator, the output processing unit 313 outputs the automatic traveling start instruction to the combine 1. For example, when starting automatic traveling, the operator presses an automatic traveling start operation button Kb on the path creation result screen D2 (see Fig. 6B) or a start button on the operation screen D1 (see Fig. 6A).

When the vehicle control device 11 of the combine 1 acquires the automatic traveling start instruction from the operation terminal 3, the vehicle control device 11 causes the combine 1 to start automatic traveling and reaping work, and executes automatic traveling and reaping work along the inner peripheral path Rb from the start position S to the end position G. Furthermore, when the operation control unit 31 receives the automatic traveling stop instruction operation from the operator, the output processing unit 313 outputs the automatic traveling stop instruction to the combine 1. Accordingly, the vehicle control device 11 acquires the automatic traveling stop instruction from the operation terminal 3. When the vehicle control device 11 acquires the automatic traveling stop instruction, the vehicle control device 11 stops the automatic traveling and reaping work of the combine 1.

Note that the operation terminal 3 may be able to access a website (an agricultural support site) of an agricultural support service provided by a server (not shown) via the communication network N1. In this case, the operation terminal 3 can function as an operation terminal of the server, by the operation control unit 31 executing a browser program. Then, the server includes the above-described individual processing units and executes the individual processes.

### [Combine 1]

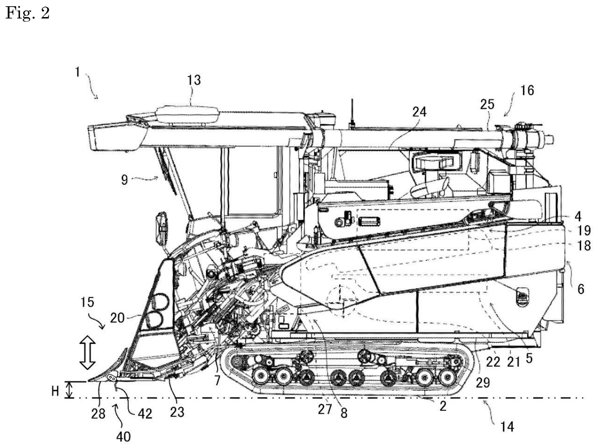

Fig. 2 is an external view of the combine 1 as viewed from the side. As shown in Figs. 1 and 2, the combine 1 includes a threshing unit 4, a sorting unit 5, a waste straw processing unit 6, a power unit 8, a steering unit 9, a vehicle control device 11, a storage unit 12, a positioning unit 13, a traveling unit 14, a reaping unit 15 (an example of a work implement of the present invention), a grain storage unit 16, a communication unit 17, and the like. The combine 1 travels on the traveling unit 14, threshes the grain stalks cut by the reaping unit 15 on the threshing unit 4, and sorts the grains in the sorting unit 5 and stores them in the grain storage unit 16. The combine 1 processes the waste straw after threshing in the waste straw processing unit 6. The combine 1 drives the traveling unit 14, the reaping unit 15, the grain storage unit 16, the threshing unit 4, the sorting unit 5, and the waste straw processing unit 6 using power supplied by the power unit 8.

The traveling unit 14 is provided below a machine body frame 29, and includes a pair of left and right crawler-type traveling devices 2 and a transmission (not shown). The traveling unit 14 rotates the crawlers of the crawler-type traveling device 2 using power (for example, rotational power) transmitted from an engine 27 of the power unit 8, causing the combine 1 to travel in the forward-backward direction and turn in the left-right direction. The transmission transmits the power (the rotational power) of the power unit 8 to the crawler-type traveling device 2, and is also capable of changing the speed of the rotational power.

The reaping unit 15 is provided in front of the traveling unit 14 and performs reaping work on rows within the number of rows that can be reaped. The reaping unit 15 includes a divider 28, a raising device 20, a cutting device 23, a transport device 7, and a cutting height detection device 40.

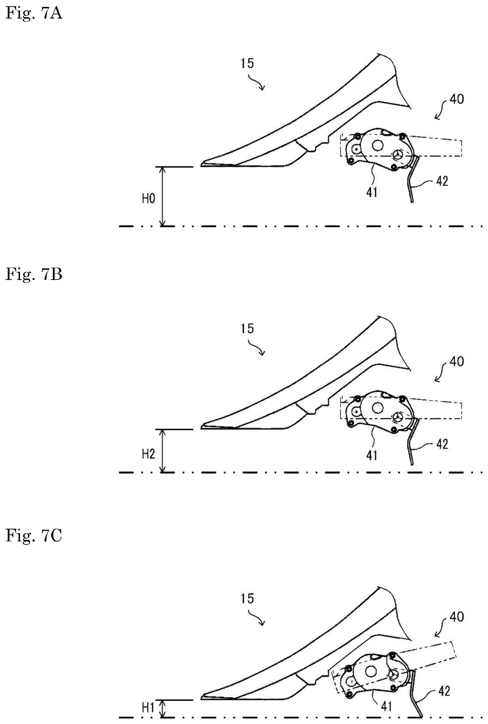

As shown in Figs. 7A to 7C, the cutting height detection device 40 includes a device main body 41, a grounding body 42, a detection sensor (not shown), and the like, and detects a height H of the reaping unit 15 (see Fig. 2). For example, as shown in Fig. 7C, the detection sensor detects the amount of rotation of the device main body 41 when the reaping unit 15 descends and the grounding body 42 comes into contact with the ground, and the cutting height detection device 40 detects the height H based on the detection signal from the detection sensor. The vehicle control device 11 (the work processing unit 112) adjusts the height H by operating the drive unit (the hydraulic cylinder or the like) of the reaping unit 15 to maintain the height H detected by the cutting height detection device 40 at a set height (a working height H1). Note that Fig. 7A shows the height of the reaping unit 15 when the combine 1 is not working (a non-working height H0), and Fig. 7B shows the height of the reaping unit 15 when the combine 1 is working, at a height (an intermediate height H2) that can avoid entanglement with the waste straw B1. In this way, the reaping unit 15 is configured to be able to change between a height at the time of non-work (the non-working height H0), a height at the time of work (the working height H1), and a height between these (the intermediate height H2). The intermediate height H2 may be a position set when not working, or may be a position set when working.

The divider 28 divides the grain stalks in the field F row by row and guides a predetermined number of grain stalks within the number of rows that can be reaped to the raising device 20. The raising device 20 raises the grain stalks guided by the divider 28. The cutting device 23 cuts the grain stalks raised by the raising device 20. The transport device 7 transports the grain stalks cut by the cutting device 23 to the threshing unit 4.

The threshing unit 4 is provided behind the reaping unit 15. The threshing unit 4 includes a feed chain 18 and a threshing drum 19. The feed chain 18 transports the grain stalks transported from the transport device 7 of the reaping unit 15 for threshing, and further transports the grain stalks after threshing, that is, waste straw, to the waste straw processing unit 6. The threshing drum 19 threshes the grain stalks being transported by the feed chain 18.

The sorting unit 5 is provided below the threshing unit 4. The sorting unit 5 includes a swing sorting device 21, an air blow sorting device 22, a grain transport device (not shown), and a straw chip discharge device (not shown). The swing sorting device 21 sifts the threshed materials that have fallen from the threshing unit 4 to sort them into grains, straw chips, and the like. The air blow sorting device 22 further sorts the threshed materials sorted by the swing sorting device 21 into grains, straw chips, and the like by blowing air. The grain transport device transports the grains sorted by the swing sorting device 21 and the air blow sorting device 22 to the grain storage unit 16. The straw chip discharge device discharges straw chips and the like sorted by the swing sorting device 21 and the air blow sorting device 22 outside the machine.

The grain storage unit 16 is provided on the right side of the threshing unit 4. The grain storage unit 16 includes a grain storage tank (a grain tank) 24 and a discharge device 25. The grain storage tank 24 stores the grains transported from the sorting unit 5. The discharge device 25 includes an auger or the like, and discharges the grains stored in the grain storage tank 24 to a transport vehicle at a predetermined discharge position in the field F.

The waste straw processing unit 6 is provided behind the threshing unit 4. The waste straw processing unit 6 includes a waste straw transport device (not shown) and a waste straw cutting device (not shown). The waste straw transport device transports the waste straw transported from the feed chain 18 of the threshing unit 4 to the waste straw cutting device. The waste straw cutting device cuts the waste straw transported by the waste straw transport device and discharges the waste straw outside the machine. The waste straw processing unit 6 discharges the waste straw from the cut grain stalks to the position of the grain stalks to be cut. In this way, the combine 1 cuts the grain stalks while traveling and discharges the waste straw B1 to the rear of the machine, and thereby the waste straw B1 is piled up in rows in the wake of the combine 1 (see Fig. 4B and the like).

The power unit 8 is provided above the traveling unit 14 and in front of the grain storage unit 16. The power unit 8 includes an engine 27 that generates rotational power. The power unit 8 transmits the rotational power generated by the engine 27 to the traveling unit 14, the reaping unit 15, the grain storage unit 16, the threshing unit 4, the sorting unit 5, and the waste straw processing unit 6.

The steering unit 9 is provided above the power unit 8. The steering unit 9 is provided around the driver's seat which is a seat where the operator sits, with operating tools for operating the traveling of the combine 1, such as a steering wheel for instructing the turning of the machine body of the combine 1, a main shift lever and a sub-shift lever for instructing changes in the forward and backward speed of the combine 1, and the like. The manual travel of the combine 1 is executed by the traveling unit 14, which receives operations of the steering wheel of the steering unit 9, the main shift lever, and the sub-shift lever. The steering unit 9 also includes mechanisms for operating the reaping work by the reaping unit 15, the threshing work by the threshing unit 4, the discharge work by the discharge device 25 of the grain storage unit 16, and the like.

The positioning unit 13 acquires the vehicle position of the combine 1 using a satellite positioning system such as a GPS. For example, the positioning unit 13 receives a positioning signal from a positioning satellite via a positioning antenna, and acquires position information of the positioning unit 13, that is, the vehicle position of the combine 1 (the measurement point data), based on the positioning signal. The positioning unit 13 may include a quantum compass instead of a positioning antenna.

The communication unit 17 (see Fig. 1) is a communication interface for connecting the combine 1 to the communication network N1 in a wired or wireless manner and for executing data communication according to a predetermined communication protocol with an external device such as the operation terminal 3 via the communication network N1.

The storage unit 12 is a non-volatile storage unit such as an HDD, an SSD, or a flash memory that stores various types of information. The storage unit 12 stores a control program for causing the vehicle control device 11 to execute predetermined processing. For example, the control program is non-temporarily recorded in a computer-readable recording medium such as a flash ROM, an EEPROM, a CD, or a DVD, and is read by a predetermined reading device (not shown) and stored in the storage unit 12. Note that the control program may be downloaded from a server (not shown) to the combine 1 via the communication network N1 and stored in the storage unit 12. The storage unit 12 also stores various types of setting information acquired from the operation terminal 3. The control programs include control programs corresponding to the first to fourth configurations, respectively.

The vehicle control device 11 includes control devices such as a CPU, a ROM, and a RAM. The CPU is a processor that executes various types of arithmetic processing. The ROM is a non-volatile storage unit in which control programs such as a BIOS and an OS for causing the CPU to execute various types of arithmetic processing are stored in advance. The RAM is a volatile or non-volatile storage unit that stores various types of information, and is used as a temporary storage memory for various types of processing executed by the CPU. Then, the vehicle control device 11 controls the combine 1 by executing, with the CPU, various control programs stored in advance in the ROM or the storage unit 12.

Specifically, as shown in Fig. 1, the vehicle control device 11 includes various processing units such as a travel processing unit 111, a work processing unit 112, and a registration processing unit 113. Note that the vehicle control device 11 functions as the various processing units by executing various types of processing according to the control program with the CPU. In addition, some or all of the processing units may include an electronic circuit. Note that the control program may be a program for causing a plurality of processors to function as the processing unit.

The travel processing unit 111 causes the combine 1 to travel along a target path R set for the field F. Specifically, when the manual travel mode is set, the travel processing unit 111 causes the combine 1 to travel in response to manual operation by the operator. For example, the travel processing unit 111 causes the combine 1 to travel straight along the outermost peripheral path Ra in the outermost peripheral area F0 of the field F (see Fig. 3) in response to the operation of the operator to switch between forward travel and backward travel, or to switch the vehicle speed. Furthermore, the travel processing unit 111 causes the combine 1 to automatically travel along the inner peripheral path Rb (the automatic travel path) from the start position S to the end position G in the inner peripheral area F1.

The work processing unit 112 changes the position (the posture) of the reaping unit 15 based on the position of the combine 1, and causes the reaping unit 15 to execute reaping work. Specifically, the work processing unit 112 changes (for example, raises and lowers) the position (the height) of the reaping unit 15 in stages between a working height and a non-working height. For example, when the combine 1 reaches a position a predetermined distance before the start end of the work path, the work processing unit 112 sets the reaping unit 15 to the working height H1 (see Fig. 7C), and when the combine 1 passes the terminal end of the work path, the work processing unit 112 sets the reaping unit 15 to the non-working height H0 (see Fig. 7A). The work processing unit 112 may set the height of the reaping unit 15 to an intermediate height H2 that can avoid entanglement with the waste straw B1 (see Fig. 4B) when the combine 1 passes over the waste straw B1.

### [Corner Reaping Work Method in Outermost Peripheral Area F0 (First Configuration)]

Next, a specific example of corner reaping work in the outermost peripheral area F0 of the field F will be described. The combine 1 performs reaping work at the corners of the field F while traveling in the outermost peripheral area F0 in response to the operation of the operator.

For example, as shown in Fig. 8A, first, the operator gets on the combine 1 and starts traveling straight (manual traveling) along the outer periphery (the right side in Fig. 8A) of the work area to be reaped, and sets the reaping unit 15 to the working height H1 (see Fig. 7C) to start the reaping work. At the point in time when the combine 1 has traveled a predetermined distance in a straight line, the operator performs a registration operation on the operation terminal 3 to register the current position (the point A) of the combine 1. Thereafter, at the point in time when the combine 1 has traveled a predetermined distance in a straight line from the point A, the operator performs a registration operation on the operation terminal 3 to register the current position (the point B) of the combine 1. When the generation processing unit 312 acquires the registered points A and B, it generates a straight line (a reference line L0) that passes through the points A and B.

When the reference line L0 is generated, the combine 1 is ready for automatic travel, and when the operator issues an automatic traveling start instruction, the combine 1 starts automatic traveling in a straight direction along the reference line L0. For example, when the operator shifts the main shift lever to the forward position, the combine 1 automatically travels in the forward direction along the reference line L0 at a vehicle speed according to the shift position. This allows the reaping work to be executed on the outer periphery (the right side) of the work area (the first pass).

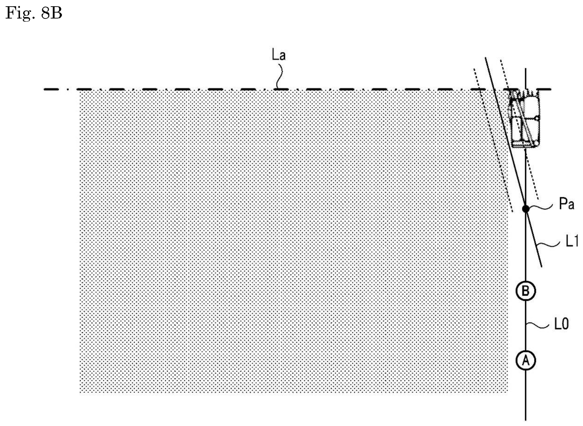

Subsequently, when the combine 1 reaches the outer peripheral end of the work area (the upper side in Fig. 8A), the operator shifts the main shift lever to a stop position (a neutral position and the like) to stop the automatic traveling. The operator also stops the reaping work by raising the reaping unit 15 to the non-working height H0. When the combine 1 stops automatic traveling and reaping work, the generation processing unit 312 generates an outer line La of the work area based on the stop position of the combine 1 (see Fig. 8B). For example, the generation processing unit 312 sets the outer line La to a straight line that passes through the tip of the combine 1 (the tip of the reaping unit 15) and is perpendicular to the reference line L0. As another embodiment, the generation processing unit 312 may set an outer line La that follows the outer shape of the work area based on map information.

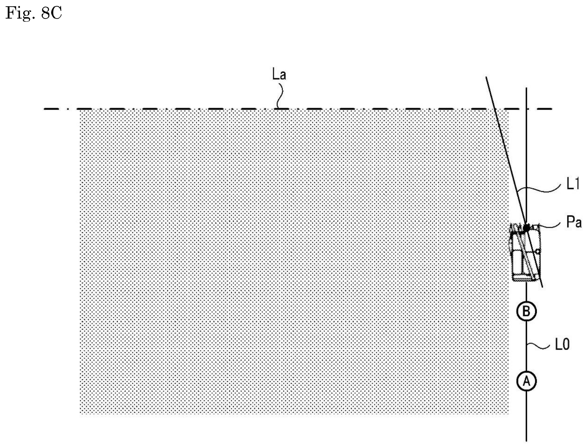

Subsequently, when the operator shifts the main shift lever to the backward position, the combine 1 starts automatic traveling in the backward direction along the reference line L0. In addition, when the operator shifts the main shift lever to the backward position, the generation processing unit 312 generates an inclined path L1 that passes through an unworked area (an uncut area) of the second pass adjacent to an already worked area (an already cut area) of the outer periphery (the right side) (the first pass) and is inclined by a predetermined angle with respect to the reference line L0 (see Fig. 8B). The combine 1 automatically travels in a backward direction along the reference line L0 from the backward movement start position (the stop position) and stops the automatic traveling at an intersection point Pa of the reference line L0 and the inclined path L1 (see Fig. 8C). The combine 1 may be stopped at the intersection point Pa such that the vehicle orientation is aligned with the orientation of the inclined path L1. As another embodiment, the combine 1 may move backward along the reference line L0 until the combine 1 passes the intersection point Pa and then stop.

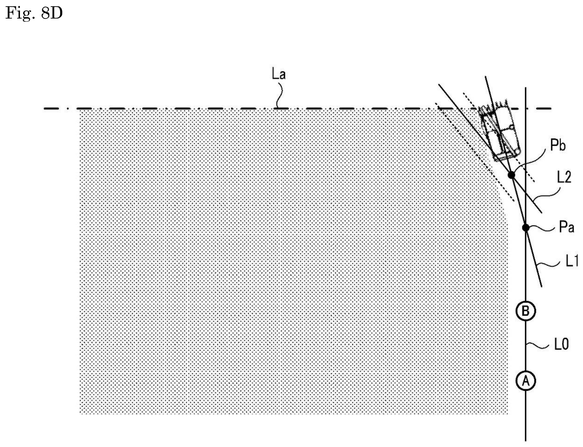

Next, when the operator lowers the reaping unit 15 to the working height H1 and shifts the main shift lever to the forward position, the combine 1 starts automatic traveling and reaping work in the forward direction along the inclined path L1 (see Fig. 7C). The combine 1 travels along the inclined path L1 and stops automatic traveling when the combine 1 reaches the outer line La (see Fig. 8D). The operator also stops the reaping work by raising the reaping unit 15 to the non-working height H0. This completes the reaping work in the area (the second pass) in the work area corresponding to the inclined path L1 (see Fig. 8D). The combine 1 may emit a buzzer sound when the remaining distance to the outer line La is less than a predetermined distance, to notify the operator that the combine 1 is approaching the outer line La. The combine 1 may also be automatically stopped when the combine 1 reaches the outer line La.

Subsequently, when the operator shifts the main shift lever to the backward position, the combine 1 starts automatic traveling in the backward direction along the inclined path L1. In addition, when the operator shifts the main shift lever to the backward position, the generation processing unit 312 generates an inclined path L2 that passes through an unworked area (an uncut area) of the third pass adjacent to the already worked area (the second pass) corresponding to the inclined path L1 and is inclined by a predetermined angle with respect to the inclined path L1 (see Fig. 8D). The combine 1 automatically travels in a backward direction along the inclined path L1 from the backward movement start position (the stop position) and stops the automatic traveling at an intersection point Pb of the inclined path L1 and the inclined path L2. The combine 1 may be stopped at the intersection point Pb such that the vehicle orientation is aligned with the orientation of the inclined path L2. As another embodiment, the combine 1 may move backward along the inclined path L1 until the combine 1 passes the intersection point Pb and then stop.

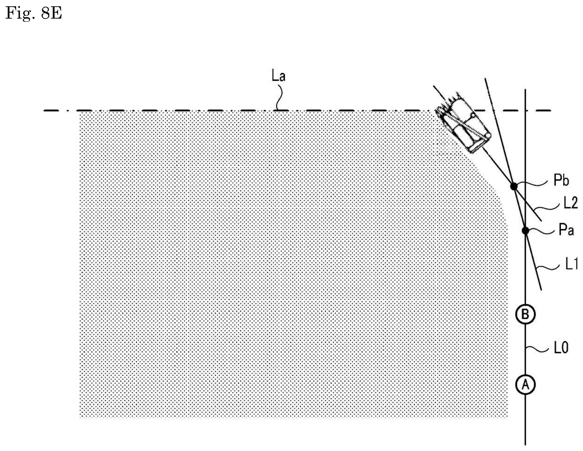

Next, when the operator lowers the reaping unit 15 to the working height H1 (see Fig. 7C) and shifts the main shift lever to the forward position, the combine 1 starts automatic traveling and reaping work in the forward direction along the inclined path L2. The combine 1 stops automatic traveling when the combine 1 reaches the outer line La (see Fig. 8E). The operator also stops the reaping work by raising the reaping unit 15 to the non-working height H0. This completes the reaping work in the area (the third pass) in the work area corresponding to the inclined path L2 (see Fig. 8E). The combine 1 may emit a buzzer sound when the remaining distance to the outer line La is less than a predetermined distance, to notify the operator that the combine 1 is approaching the outer line La.

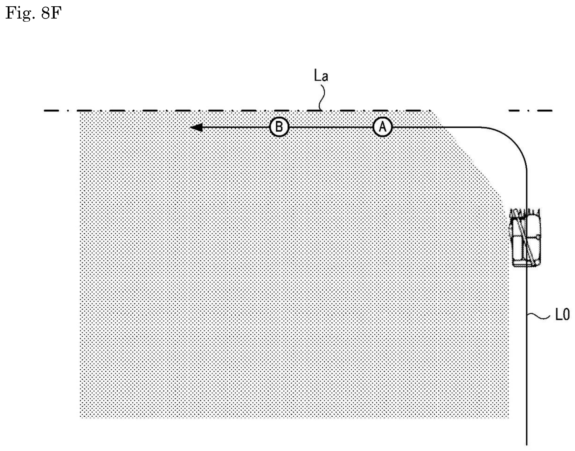

When a turning area necessary for the combine 1 to turn when moving to the next work path is secured at the corner (the upper right corner) of the work area by the reaping work of the first, second, and third passes, the operator ends the corner reaping work of the work area and moves the combine 1 to the next work path. For example, when the operator shifts the main shift lever to the backward position, the combine 1 starts automatic traveling in the backward direction along the inclined path L2, the inclined path L1, and the reference line L0, and stops at a predetermined position on the reference line L0. Thereafter, the operator shifts the main shift lever to the forward position and manually steers the combine 1 to turn in the already worked area and move the combine 1 to the next work path (see Fig. 8F).

When the combine 1 enters the next work path, the operator starts traveling straight (manual traveling) along the outer periphery (the upper side in Fig. 8F) of the work area and starts reaping work, and performs a registration operation to register the points A and B on the operation terminal 3. This generates a reference line L0 corresponding to the next work path. Thereafter, the combine 1 performs corner reaping work at the corner (the upper left corner) of the work area in response to the operation of the operator in the above-described procedure. Similarly, the combine 1 performs corner reaping work at the lower left and right corners of the work area in response to the operation of the operator.

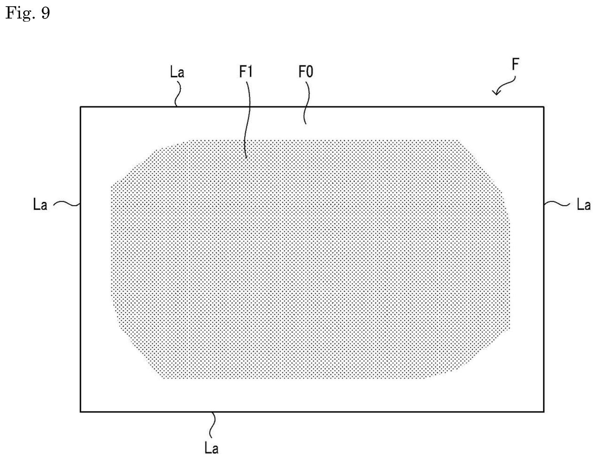

When the corner reaping work at each corner of the work area is completed, the setting processing unit 311 specifies the shape surrounded by the outer lines La, and registers the area surrounded by the outer lines La as the field F (see Fig. 9). In the field F, the outermost peripheral area F0 is an already worked area where the reaping work has ended, and the inner peripheral area F1 is an unworked area where the reaping work has not ended. The method for registering the field F is not limited to thereto, and the setting processing unit 311 may apply, for example, a publicly known technique (see JP-A-2022-87959 and JP-A-2023-56476) in which the vehicle position (the measurement point data, the positioning point) of the combine 1 is approximated to a straight line and the area surrounded by the approximate straight line is registered as the field F.

In this manner, the traveling system 10 executes corner reaping work in the outermost peripheral area F0. In the above embodiment, corner reaping work in the outermost peripheral area F0 in a state in which no field F is registered has been described, but when a field F is registered, the generation processing of the outer line La is omitted. In this case, the operator may cause the combine 1 to automatically travel according to the outer periphery of the field F (the right side, the upper side, the left side, and the lower side) and stop the automatic traveling. The reference line L0, the inclined path L1, and the inclined path L2 are included in the outermost peripheral path Ra.

In addition, in the above configuration, at the intersection point Pa (see Fig. 8C), the generation processing unit 312 sets the inclination angle of the inclined path L1 and the position of the intersection point Pa such that the body (the rear end) of the combine 1 does not jump out of the work area due to the turning operation when moving to the second pass. Similarly, at the intersection point Pb (see Fig. 8D), the generation processing unit 312 sets the inclination angle of the inclined path L2 and the position of the intersection point Pb such that the body of the combine 1 does not jump out of the work area due to the turning operation when moving to the third pass. The maximum value of the inclination angle (the maximum inclination angle) may be set in advance. In this case, the generation processing unit 312 may, for example, first draw an inclined straight line at the maximum inclination angle, and then reduce the inclination angle when the vehicle body jumps out of the work area, and set the inclined straight line at the maximum angle at which the vehicle body does not jump out of the work area as the inclined path L1. In this way, the generation processing unit 312 determines the inclination angles of the inclined paths L1 and L2 such that the rear end of the vehicle body does not jump out of the work area.

The corner reaping work method (the first configuration) in the outermost peripheral area F0 is not limited to the above method. As another embodiment of the first configuration, the combine 1 may perform reaping work while traveling (manual traveling) in accordance with manual steering by an operator in the outermost peripheral area F0. The setting processing unit 311 may also register the field F by specifying the shape of the already worked area based on the position information of the combine 1 acquired during manual travel.

As another embodiment, the combine 1 may perform the reaping work in the outermost peripheral area F0 by automatic travel without relying on the operation by the operator (for example, the shift operation of the main shift lever).

As another embodiment, the combine 1 may automatically travel along a path parallel to the outer edges of the field F when the shape of the field F has already been registered.

### [Method for Generating Inner Peripheral Path Rb (Automatic Travel Path) (Second Configuration)]

Next, a specific example of a method for generating an automatic travel path (an inner peripheral path Rb) for causing the combine 1 to automatically travel in the inner peripheral area F1 will be described. The traveling system 10 generates the inner peripheral path Rb based on the positions of the unworked area (an unworked site), the positions of the already worked area (an already worked site), the outer shape of the field F (the position of the outer periphery of the field), and the like. Furthermore, the traveling system 10 executes the generation processing of the inner peripheral path Rb after the reaping work in the outermost peripheral area F0 ends. As another embodiment, the travel processing unit 111 may acquire position information of the outermost peripheral area F0 and execute the generation processing of the inner peripheral path Rb before the reaping work in the outermost peripheral area F0.

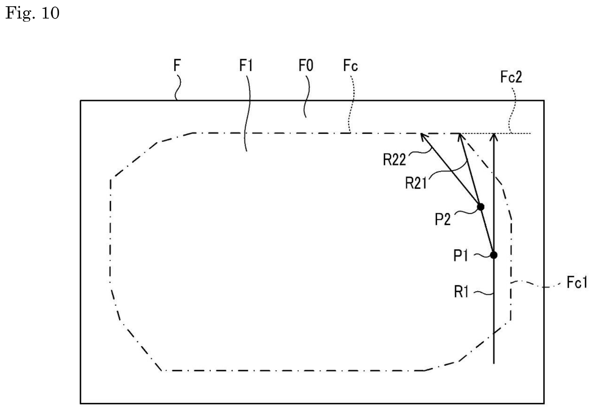

Fig. 10 shows a specific example of the inner peripheral path Rb in the field F. In Fig. 10, reference sign "Fc" indicates a boundary between the already worked area and the unworked area, that is, an outermost peripheral position of the unworked area or an outermost peripheral position of the already worked area. The outermost peripheral position Fc is specified by executing travel and work in the outermost peripheral area F0 (see Figs. 8 and 9).

The generation processing unit 312 of the operation terminal 3 generates a work path R1 based on an outermost peripheral position Fc1 of the unworked area or an outer end (the right side) of the field F, as shown in Fig. 10. Specifically, the generation processing unit 312 generates a work path R1 that is a straight path along the outermost peripheral position Fc1 at a position where the grain stalks at the outermost peripheral position Fc1 can be cut. In addition, the generation processing unit 312 generates a work path R1 that is parallel to the reference line L0 (see Fig. 8) of the outermost peripheral path Ra or the outer end (the right side) of the field F (see Fig. 9) and is located one work pass (the work width) inward from the work path corresponding to the reference line L0 (see Fig. 8A). The generation processing unit 312 also generates a work path R1 whose terminal end is on an extension line Fc2 of the outermost peripheral position Fc.

Furthermore, the generation processing unit 312 generates a first inclined path R21 inside the work path R1 and having a predetermined inclination angle with respect to the work path R1, based on the work path R1. Specifically, the generation processing unit 312 generates a first inclined path R21 whose terminal end is located one work pass (the work width) inward from the terminal end of the work path R1. In addition, the generation processing unit 312 determines the inclination angle of the first inclined path R21 such that the rear end of the body of the combine 1 does not jump out of the field F. The generation processing unit 312 sets an intersection point P1 between the first inclined path R21 having the determined inclination angle and the work path R1 as the start end of the first inclined path R21. The intersection point P1 may be set at a position 12 m (a backward distance) from the outer line La.

As another embodiment, the generation processing unit 312 may generate the first inclined path R21 based on an angle set by the operator within a range up to the maximum inclination angle. Furthermore, the operation terminal 3 may display an already worked area where work has been ended and a predicted work area when work is performed along the outermost peripheral path Ra and the corner reaping path, and receive an operation to set the inclination angle from the operator. This makes it possible to generate the corner reaping path intended by the operator. Furthermore, the generation processing unit 312 may automatically set the angle (the inclination angle) of the inclined path based on the unworked area such that the inclined path follows the unworked area.

The generation processing unit 312 may also set the start end of the first inclined path R21 at a position on the front side of the terminal end of the work path R1 by a predetermined distance that has been set in advance, and determine the inclination angle of the first inclined path R21. The predetermined distance may be set by an operator. The predetermined distance may also be a distance that the combine 1 travels backward after completing work on the work path R1. That is, the generation processing unit 312 may determine the inclination angle of the first inclined path R21 based on the work width corresponding to the work path R1, the work width (one work pass) corresponding to the first inclined path R21, and the distance that the combine 1 travels backward after completing work on the work path R1.

After generating the first inclined path R21, the generation processing unit 312 determines whether a turning area necessary for the combine 1 to turn is secured at the corner of the inner peripheral area F1, and when it is determined that the turning area is not secured, the generation processing unit 312 generates a second inclined path R22 that is inclined with respect to the first inclined path R21, inside the first inclined path R21.

Specifically, the generation processing unit 312 generates a second inclined path R22 whose terminal end is located one work pass (the work width) inward from the terminal end of the first inclined path R21. In addition, the generation processing unit 312 determines the inclination angle of the second inclined path R22 such that the rear end of the body of the combine 1 does not jump out of the field F. The generation processing unit 312 sets an intersection point P2 between the second inclined path R22 having the determined inclination angle and the first inclined path R21 as the start end of the second inclined path R22. In this way, the generation processing unit 312 generates a first inclined path R21 inside the work path R1 and having a first inclination angle with respect to the work path R1, and generates a second inclined path R22 inside the first inclined path R21 and having a second inclination angle that is greater than the first inclination angle with respect to the work path R1. As another embodiment, the generation processing unit 312 may generate a second inclined path R22 inside the first inclined path R21 and having the same inclination angle as the first inclination angle.

As another embodiment, the generation processing unit 312 may set the start end of the second inclined path R22 at the intersection point P1.

The generation processing unit 312 generates a work path having an inclination angle inside the work path of one work pass until the turning area required to move from work path R1 to the next work path (the work path along the upper side of field F shown in Fig. 10) is secured. The work path R1, the first inclined path R21, and the second inclined path R22 are corner reaping paths and are included in the inner peripheral path Rb. The work path R1 is an example of a first path of the present invention, and the first inclined path R21 and the second inclined path R22 are examples of a second path of the present invention. The generation processing unit 312 may set the terminal ends of the work path R1, the first inclined path R21, and the second inclined path R22 on the outer edge of the field F (the upper side of the field F shown in Fig. 10).

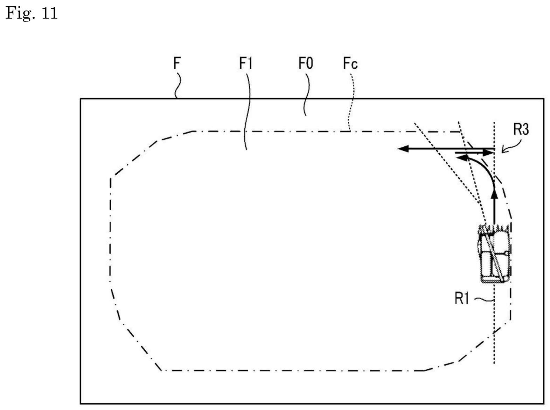

After generating the work path for corner reaping work, the generation processing unit 312 generates a movement path R3 for moving to the next work path. For example, as shown in Fig. 11, the generation processing unit 312 generates a movement path R3 at a corner of the field F, the movement path R3 including a turning path and a straight path that connect the work path R1 and the next work path. Specifically, in a specification in which a work path is generated for each side of the unworked area, even when a work path is generated along the short side created between the upper side and the right side of the unworked area by traveling along the corner reaping path, when the work path corresponding to the short side is less than a predetermined length, the generation processing unit 312 generates a movement path R3 that moves to the work path corresponding to the upper side without traveling along the work path corresponding to the short side. In addition, the generation processing unit 312 may generate a movement path R3 in which the combine 1 travels forward along the second inclined path R22 (see Fig. 10) and then turns backward to the right to move to the work path corresponding to the upper side. The movement path R3 is included in the inner peripheral path Rb.

The generation processing unit 312 generates corner reaping paths and movement paths R3 at each corner of the field F. In addition, when a turning area for the combine 1 is not secured at the corner by the corner reaping path corresponding to the circling travel of the first round, the generation processing unit 312 generates a corner reaping path corresponding to the circling travel of the second round. The generation processing unit 312 generates corner reaping paths for a plurality of rounds until a turning area is secured at the corner. In addition, the generation processing unit 312 may determine whether it is necessary to generate corner reaping paths corresponding to the circling travel of the second round at the point in time when the circling travel of the first round has been executed, or may determine how many rounds of corner reaping paths need to be generated before starting automatic travel on the inner peripheral path Rb.

When a turning area is secured at each corner of the field F by the corner reaping path, the generation processing unit 312 generates a work path R4 (see Fig. 12) that does not include a corner reaping path inside the turning area. The work path R4 does not include a corner reaping path, but includes a straight work path and a movement path including a turning path. The work path R4 is included in the inner peripheral path Rb. The turning method of the turning path included in the work path R4 may be set in advance by the operator.

In this way, when the reaping work in the outermost peripheral area F0 ends (see Fig. 9), the generation processing unit 312 executes the generation processing of the inner peripheral path Rb, which includes the corner reaping path and the work path R4 inside the corner reaping path (see Figs. 10 to 12).

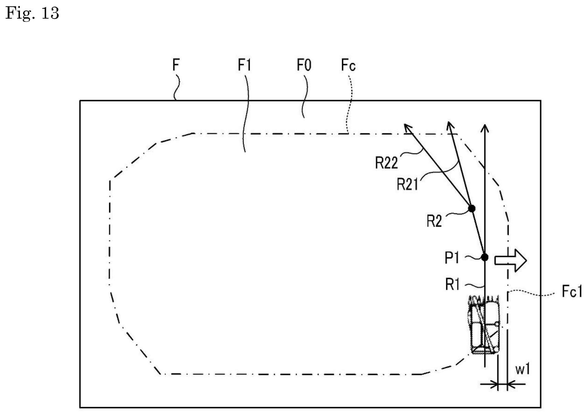

Here, the generation processing unit 312 may execute processing to correct the position of the corner reaping path. For example, as shown in Fig. 13, when the work path R1 is generated, in a case where a gap w1 occurs between the work end of the combine 1 (the right end of the reaping unit 15) and the outermost peripheral position Fc1, the generation processing unit 312 shifts the work path R1 to the right such that the gap w1 is eliminated. For example, the generation processing unit 312 may generate the work path R1 based on the outer end of the field F, and shift the work path R1 based on the position of the unworked area. The generation processing unit 312 may shift the work path R1 such that the right side of the work width of the work path R1 and the left side of the work width of the outermost peripheral path Ra overlap by a predetermined amount.

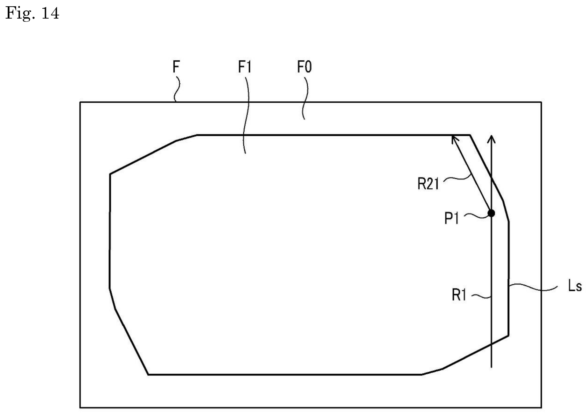

As another embodiment, the generation processing unit 312 may set a work target line Ls (a recommended reaping line) in the outermost peripheral area F0 as shown in Fig. 14, and determine the inclination angle of the corner reaping path based on the work target line Ls. The work target line Ls represents a target position (a mark) when the operator causes the combine 1 to manually travel and perform reaping work in the outermost peripheral area F0. For example, the work target line Ls is displayed on the operation terminal 3, and the operator performs the reaping work while traveling the combine 1 in the outermost peripheral area F0 while checking the work target line Ls. Accordingly, the reaping work can be performed reliably up to the work target line Ls. The work target line Ls is set, for example, at a position narrower than the work width from the end of the field F and at a corner where the combine 1 can turn.

The generation processing unit 312 generates, for example, a work path R1 and a first inclined path R21 that are parallel to the work target line Ls. The travel processing unit 111 causes the combine 1 to automatically travel along the inner peripheral path Rb generated based on the work target line Ls, thereby preventing the boundary between the outermost peripheral area F0 and the inner peripheral area F1 from being left uncut, and also reliably securing a turning area. The travel processing unit 111 may permit automatic travel along the inner peripheral path Rb on the condition that the reaping work has ended up to the work target line Ls.

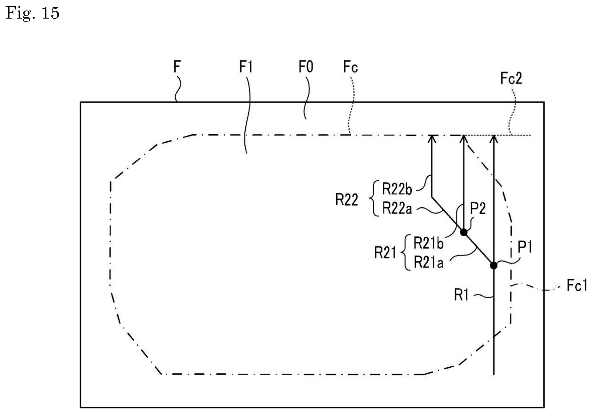

As another embodiment, the generation processing unit 312 may generate a work path for performing reaping work by traveling parallel to corners (parallel reaping). For example, as shown in Fig. 15, the generation processing unit 312 generates a first inclined path R21 and a second inclined path R22, portions of which are parallel to the work path R1. Specifically, the generation processing unit 312 generates a first inclined path R21 that has a predetermined inclination angle with respect to the work path R1 and includes an inclined path R21a that passes through the intersection point P1, and a parallel path R21b that connects to the inclined path R21a and is parallel to the work path R1. The generation processing unit 312 also generates a second inclined path R22 that has a predetermined inclination angle with respect to the work path R1 and includes an inclined path R22a that passes through the intersection point P2 between the inclined path R21a and the parallel path R21b, and a parallel path R22b that connects to the inclined path R22a and is parallel to the work path R1. According to the configuration in which corners are worked by parallel reaping, the distance of the turning area (for example, the distance of the parallel path R22b) can be increased, making it easier to omit corner reaping work in the following rounds.

As described above, in the present invention, the first inclined path R21 may be entirely inclined with respect to the work path R1 (see Fig. 10), or may be partially inclined with respect to the work path R1 (see Fig. 15). Similarly, the second inclined path R22 may be entirely inclined with respect to the work path R1 (see Fig. 10), or may be partially inclined with respect to the work path R1 (see Fig. 15). In the configuration shown in Fig. 15, the generation processing unit 312 generates an inclined path R22a inside the first inclined path R21 and having the same inclination angle as the inclination angle of the inclined path R21a.

### [Generation Processing of Inner Peripheral Path Rb (Second Configuration)]

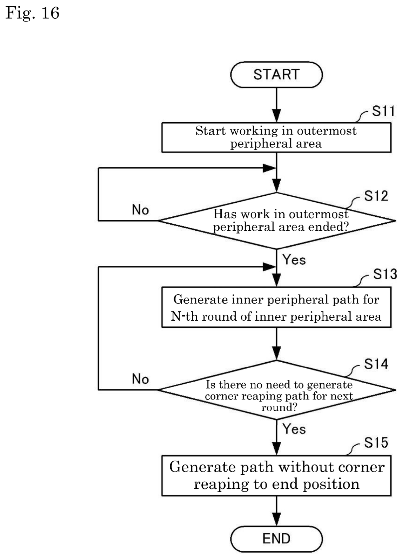

An example of generation processing of the inner peripheral path Rb (path generation processing) executed by the traveling system 10 will be described below with reference to Fig. 16.

The present invention can be understood as an invention of a path generation method for executing one or more steps included in the path generation processing. Furthermore, one or more steps included in the path generation processing described here may be omitted as appropriate. Furthermore, the steps in the path generation processing may be executed in a different order as long as the same operational effect is achieved. Furthermore, here, a case where in which the vehicle control device 11 and the operation control unit 31 execute each step in the path generation processing will be described as an example, but a path generation method in which one or more processors execute each step in the path generation processing in a distributed manner is also considered as another embodiment.

### <Step S11>

In step S11, the vehicle control device 11 starts the reaping work in the outermost peripheral area F0 of the work area (the field F) in response to the operation of the operator. For example, as shown in Fig. 8A, the operator gets on the combine 1, starts traveling straight (manual traveling) along the outer periphery (the right side in Fig. 8A) in the work area, and starts reaping work. Furthermore, the operator performs a registration operation on the operation terminal 3 to register the points A and B. The operation control unit 31 generates a reference line L0 that passes through the points A and B. Accordingly, the vehicle control device 11 causes the combine 1 to perform reaping work while automatically traveling along the reference line L0.

In addition, the vehicle control device 11 causes the combine 1 to perform reaping work (corner reaping work) at the corners of the outermost peripheral area F0 by traveling the combine 1 along inclined paths L1 and L2 (see Figs. 8D and 8E) having a predetermined inclination angle in response to the operation of the operator.

### <Step S12>

In step S12, the vehicle control device 11 determines whether the reaping work in the outermost peripheral area F0 has ended. For example, when the combine 1 performs corner reaping work at each corner of the outermost peripheral area F0 along an inclined path and completes one round around the outermost peripheral area F0, the vehicle control device 11 determines that the reaping work in the outermost peripheral area F0 has ended. When the combine 1 completes one round around the work area, the operation control unit 31 registers the outer shape of the field F (see Fig. 9). When the reaping work in the outermost peripheral area F0 ends (S12: Yes), the processing transitions to step S13. The vehicle control device 11 continues the reaping work until the reaping work in the outermost peripheral area F0 ends (S12: No).

### <Step S13>

In step S13, the operation control unit 31 generates an automatic travel path (the inner peripheral path Rb) for the inner peripheral area F1. Specifically, the operation control unit 31 generates a corner reaping path for the first round of the inner peripheral area F1 based on the outermost peripheral position of the unworked area or the outer end of the field F.

For example, as shown in Fig. 10, the operation control unit 31 generates a work path R1, which is a straight path along the outermost peripheral position Fc1, to a position where the grain stalks at the outermost peripheral position Fc1 can be cut, based on the outermost peripheral position Fc1 of the unworked area. In addition, the generation processing unit 312 generates a work path R1 that is parallel to the reference line L0 (see Fig. 8) of the outermost peripheral path Ra or the outer end (the right side) of the field F (see Fig. 9) and is located one work pass (the work width) inward from the work path corresponding to the reference line L0 (see Fig. 8A).

Furthermore, the operation control unit 31 generates a first inclined path R21 inside the work path R1 and having a predetermined inclination angle with respect to the work path R1, based on the work path R1. For example, the operation control unit 31 determines the inclination angle of the first inclined path R21 such that the rear end of the body of the combine 1 does not jump out of the field F.

After generating the first inclined path R21, the operation control unit 31 determines whether a turning area necessary for the combine 1 to turn is secured at the corner of the inner peripheral area F1, and when it is determined that the turning area is not secured, the operation control unit 31 generates a second inclined path R22 that is inclined with respect to the first inclined path R21, inside the first inclined path R21. The operation control unit 31 determines the inclination angle of the second inclined path R22 such that the rear end of the body of the combine 1 does not jump out of the field F.

In this way, the operation control unit 31 generates a corner reaping path for each corner of the inner peripheral area F1, and generates an automatic travel path for the first round.

### <Step S14>

In step S14, the operation control unit 31 determines whether there is a need to generate a corner reaping path for the inner peripheral path Rb of the next round (for example, the second round). For example, when a turning area necessary for the combine 1 to turn is secured at the corner by the inner peripheral path Rb for the first round, the operation control unit 31 determines that there is no need to generate a corner reaping path on the inner peripheral path Rb for the second round. On the other hand, when a turning area necessary for the combine 1 to turn is not secured at the corner by the inner peripheral path Rb for the first round, the operation control unit 31 determines that there is a need to generate a corner reaping path on the inner peripheral path Rb for the second round. When the operation control unit 31 determines that there is no need to generate a corner reaping path for the inner peripheral path Rb for the next round (S14: Yes), the operation control unit 31 transitions the processing to step S15.

On the other hand, when the operation control unit 31 determines that there is a need to generate a corner reaping path for the inner peripheral path Rb for the next round (S14: No), the operation control unit 31 transitions the processing to step S13. Referring back to step S13, the operation control unit 31 generates corner reaping paths for each corner of the next round (for example, the second round) of the inner peripheral area F1, and generates an automatic travel path for the second round. The operation control unit 31 generates an inner peripheral path Rb including a corner reaping path until a turning area necessary for the combine 1 to turn at the corner is secured.

### <Step S15>

In step S15, the operation control unit 31 generates an automatic travel path that does not include a corner reaping path to the end position G. For example, as shown in Fig. 12, the operation control unit 31 generates a work path R4 that does not include a corner reaping path, but includes a straight work path and a movement path (a turning path).

In this manner, the operation control unit 31 generates the work path (the automatic travel path) for the outermost peripheral area F0 and the inner peripheral area F1. In addition, the operation control unit 31 may generate the inner peripheral path Rb for the next round each time the automatic traveling and the reaping work for one round in the inner peripheral area F1 end, or may generate the inner peripheral path Rb for the entire round of the inner peripheral area F1 at the point in time when the reaping work in the outermost peripheral area F0 has ended (before automatic travel in the inner peripheral area F1 is started).

As described above, the traveling system 10 according to the second configuration is configured to generate a path for the combine 1 to perform predetermined work (reaping work) on a work target (for example, grain stalks) at a corner of the field F. In addition, the traveling system 10 is configured to generate a first work path based on the outermost peripheral position of the unworked area of the field F or the outer end of the field F, and to generate a second work path inside the first work path based on the first work path, at least a part of which has a predetermined inclination angle with respect to the first work path. The first work path and the second work path are automatic travel paths generated in an inner area (the inner peripheral area F1) inside the outermost peripheral area F0 of the field F. Furthermore, work on the inner area is performed after work on the outermost peripheral area F0 ends.

Specifically, the traveling system 10 generates the first work path based on the outer end of the field F that is specified when working in the outermost peripheral area F0. Furthermore, the traveling system 10 determines the inclination angle of the second work path such that the body of the combine 1 does not jump out of the field when the combine 1 moves from the first work path to the second work path.

According to the above configuration, an optimal corner reaping path can be generated, for example, at the corner of the field F, to secure a turning area necessary for the combine 1 to turn. The combine 1 can then be caused to automatically travel along the corner reaping path. For example, when the operator performs reaping work by manual traveling only in the outermost peripheral area F0 of the field F, an inner peripheral path Rb for automatic travel can be generated for the inner peripheral area F1 inside the outermost peripheral area F0, including a corner path (a corner reaping path). This reduces the burden on the operator and improves the work efficiency of the work of the combine 1.

### [Method for Controlling Automatic Traveling of Combine 1 (Third Configuration)]

A specific example of a control method (a third configuration) for causing the combine 1 to automatically travel along the automatic travel path (the inner peripheral path Rb) generated in the inner peripheral area F1 in the second configuration will be described. The traveling system 10 is configured to determine whether to execute automatic traveling along the inner peripheral path Rb based on work site information indicating whether the work target site (the work target position) for the reaping work is an unworked site where reaping work has not ended or an already worked site where reaping work has ended.

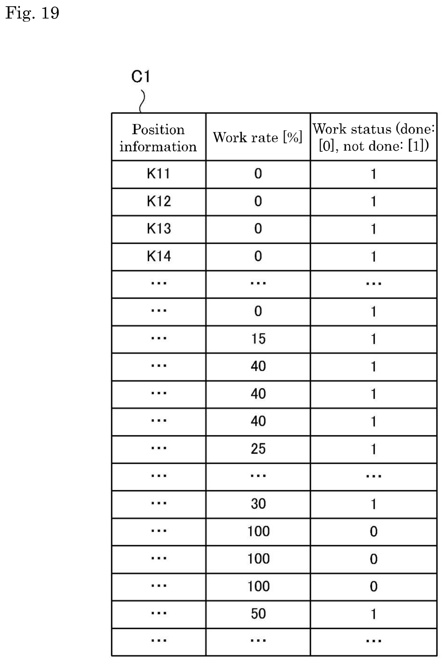

Specifically, the registration processing unit 113 of the vehicle control device 11 registers work site information C1 (see Fig. 19) based on the travel trajectory of the combine 1, and the travel processing unit 111 determines for each work path whether to execute automatic travel based on the registered work site information C1.

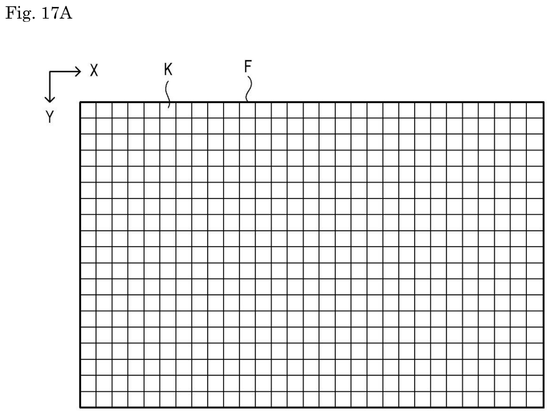

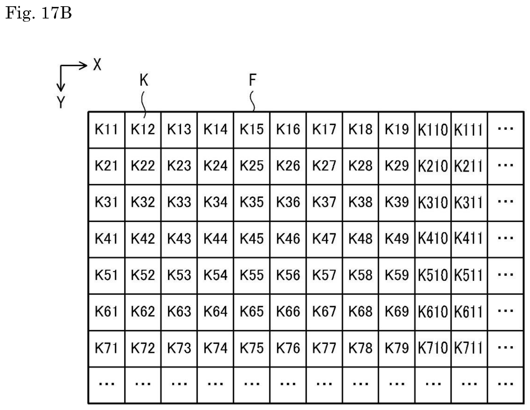

For example, the vehicle control device 11 divides the entire area of the field F into a grid pattern (mesh). Specifically, as shown in Fig. 17A, the vehicle control device 11 divides the field F into sections K of a predetermined width (for example, 10 cm × 10 cm) in X and Y directions on an XY plane corresponding to the field F. Fig. 17B shows identification information (position information) of each section K.

The registration processing unit 113 determines the work status (worked or unworked) of each section K based on the position where the combine 1 traveled while performing the reaping work, and registers the status in the work site information C1. For example, the registration processing unit 113 detects the position through which the reaping unit 15 has passed in a state in which the reaping unit 15 is set to the working height H1, and determines the work status of each section K.

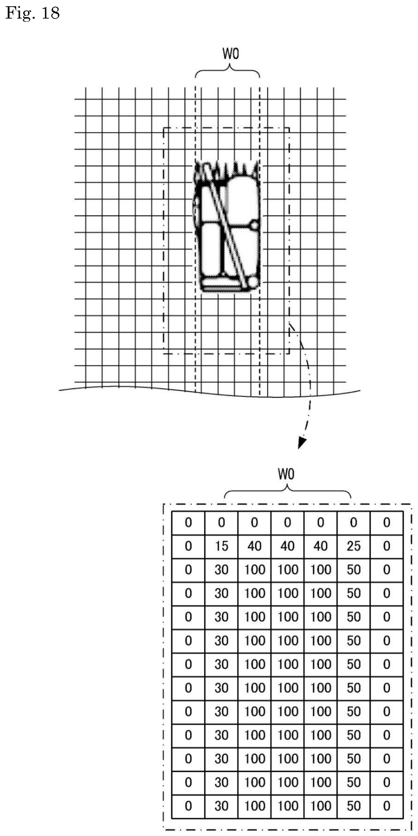

Fig. 18 shows an example of a method for determining the work status. For example, the combine 1 travels while performing reaping work within a range of a work width WO. The registration processing unit 113 calculates the work rate for each section K. The work rate indicates the proportion of the area of one section K where reaping work has been performed to the entire area of the section K. When the entire area of the section K is included within the range of the work width WO, the work rate will be 100%, when half of the area of section K is included within the range of the work width WO, the work rate will be 50%, and 30% of the area of the section K is included within the range of the work width WO, the work rate will be 30%.

In the example shown in Fig. 18, at the left end of the combine 1, only a part (for example, 30%) of the section K is included in the work width WO, and therefore the registration processing unit 113 calculates the work rate of the section K as 30%. Furthermore, at the right end of the combine 1, only a part (for example, 50%) of the section K is included in the work width WO, and therefore the registration processing unit 113 calculates the work rate of the section K as 50%. Furthermore, at the front end of the combine 1, only a part of each of the plurality of sections K is included in the work width WO, and therefore the registration processing unit 113 calculates the work rate of the section K as shown in Fig. 18. In this way, the registration processing unit 113 calculates, in each section K, the proportion of the area that overlaps the passing position of the work width WO (the reaping unit 15) of the combine 1 as the work rate.

The registration processing unit 113 determines that the section K is "worked" when the calculated work rate is equal to or greater than a threshold, and determines that the section K is "unworked" when the calculated work rate is less than the threshold. The registration processing unit 113 registers the determination result in the work site information C1.

Fig. 19 shows an example of the work site information C1. As shown in Fig. 19, in the work site information C1, for each section K, position information, a work rate, and a work status are registered in association with each other. The position information is information (coordinate information) indicating the location of the section K (see Fig. 17B). The work rate is the proportion of the area of the section K where the reaping work has been performed to the entire area of the section K. The work status is information indicating whether the section K is worked or unworked. For example, when the threshold is set to 90%, information "worked" ("0") is registered for the section with a work rate of 90% or more, and information "unworked" ("1") is registered for the section with a work rate of less than 90%.

The registration processing unit 113 registers the work status (worked or unworked) of each section K in the work site information C1 while the combine 1 is traveling, and also updates the registered work status.

As another embodiment, the registration processing unit 113 may determine a work status (worked or unworked) of each section K based on images captured by a camera (not shown) provided on the combine 1, and register the determined work status in the work site information C1.

As another embodiment, the above-described process of determining the work status of each section K and the process of registering the work site information C1 may be applied to a rice transplanter. For example, in a rice transplanter, row stopping control may be performed to stop any of a plurality of planting work units based on the registration information of worked ("0") and unworked ("1") for each section K.

The travel processing unit 111 determines whether to cause the combine 1 to automatically travel along the inner peripheral path Rb based on the work site information C1. Furthermore, the travel processing unit 111 determines, for each work path, whether to cause the combine 1 to execute automatic travel, based on the work site information C1.

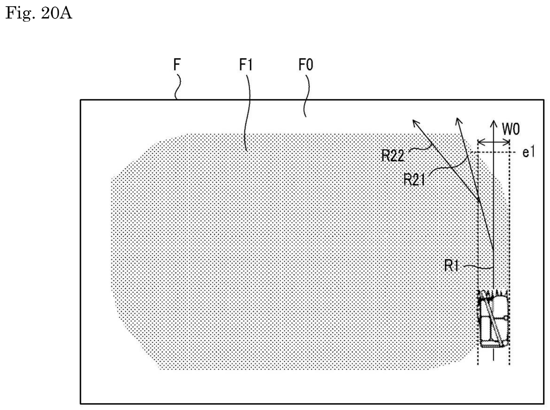

Figs. 20A to 20C show examples of a corner reaping path for the inner peripheral area F1. In Figs. 20A to 20C, for the sake of convenience, the unworked site and the already worked site of the work site information C1 are displayed in an identifiable manner. For each work path, the travel processing unit 111 determines whether each section K is an unworked site or an already worked site based on the work status (the work site information C1) of each section K included in a work target area (a planned reaping area with a work width WO) corresponding to that work path, and determines whether to cause the combine 1 to execute automatic travel along that work path. At the point in time when automatic travel along a work path is started, the travel processing unit 111 determines whether to cause the combine 1 to automatically travel along the work path.

For example, as shown in Fig. 20A, since a part of the work target area corresponding to the work path R1 is an unworked site, the travel processing unit 111 determines the work path R1 as a path on which automatic travel is to be performed (a target path for automatic travel). When the travel processing unit 111 determines the work path R1 as the path on which automatic travel is to be performed, the travel processing unit 111 starts the automatic traveling of the combine 1 on the work path R1.

Furthermore, the travel processing unit 111 causes the combine 1 to automatically travel to the terminal end of the unworked site included in the work target area corresponding to the work path, and stops the automatic traveling at the terminal end.

For example, in the example shown in Fig. 20A, the area up to a position e1 of the work target area corresponding to the work path R1 includes an unworked site, and the entire area beyond the position e1 is an already worked site. In this case, the travel processing unit 111 causes the combine 1 to automatically travel to the position e1, and stops the automatic traveling at the position e1. Then, the travel processing unit 111 causes the combine 1 to automatically travel in the backward direction at the position e1. The travel processing unit 111 may cause the combine 1 to travel backward along the work path R1, or may generate a path for backward travel that is different from the work path R1 and cause the combine 1 to travel backward along that path. In addition, the travel processing unit 111 may generate, as the path for backward travel, a path that passes through a position that is shifted a predetermined distance (for example, 10 cm) toward the outer periphery of the field F from the work path R1, for example (a path that is shifted 10 cm toward the outer periphery of the work path R1). Furthermore, the travel processing unit 111 may generate the path for backward travel based on the inclination angle of the path (the first inclined path R21) next to the work path R1.

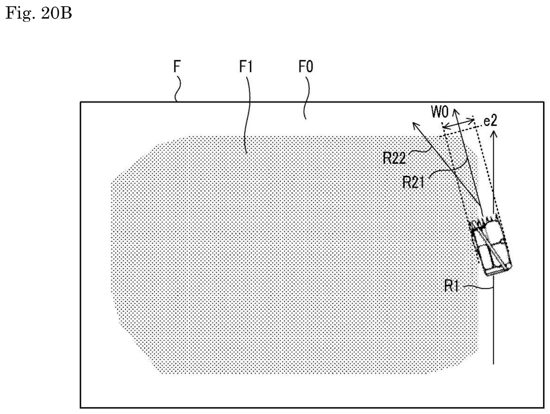

In the example shown in Fig. 20B, since a part of the work target area corresponding to the first inclined path R21 is an unworked site, the travel processing unit 111 determines the first inclined path R21 as a path on which automatic travel is to be performed (a target path for automatic travel). When the travel processing unit 111 determines the first inclined path R21 as the path on which automatic travel is to be performed, the travel processing unit 111 starts the automatic traveling of the combine 1 on the first inclined path R21.

Furthermore, the area up to a position e2 of the work target area corresponding to the first inclined path R21 includes an unworked site, and the entire area beyond the position e2 is an already worked site. Therefore, the travel processing unit 111 causes the combine 1 to automatically travel to the position e2, stops the automatic traveling at the position e2, and causes the combine 1 to automatically travel in the backward direction.

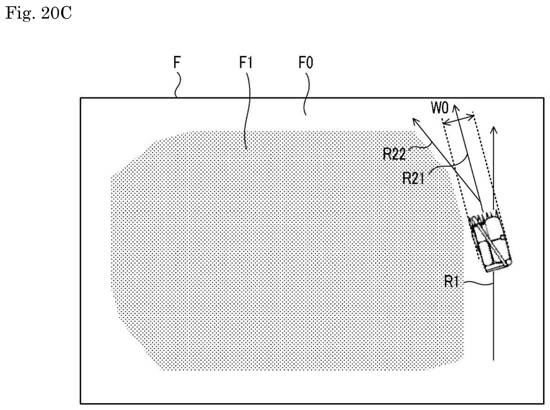

In contrast, in the example shown in Fig. 20C, since the entire work target area corresponding to the first inclined path R21 is an already worked site, the travel processing unit 111 determines the first inclined path R21 as a path on which automatic traveling is not to be performed (a non-target path for automatic travel). In this case, the travel processing unit 111 skips the first inclined path R21 and moves to the next second inclined path R22.

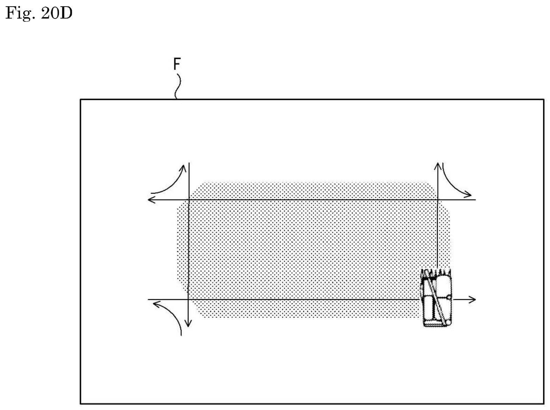

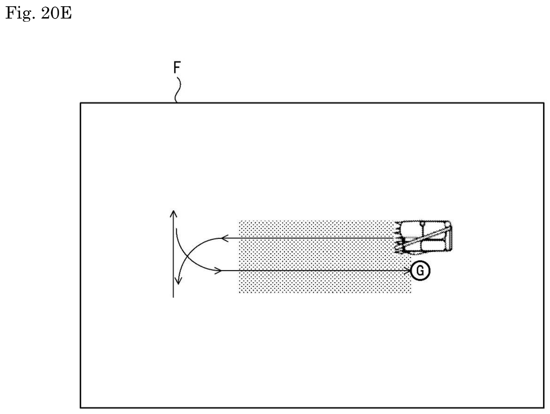

Figs. 20D and 20E show specific examples of the inner peripheral path Rb that does not include a corner reaping path. The combine 1 performs reaping work while traveling straight along the work path of the inner peripheral path Rb, and then turns in the already worked site to move to the next work path. The combine 1 repeats the circular travel until the combine 1 reaches the end position G.

Here, in the above configuration, the registration processing unit 113 registers a position where the combine 1 has traveled (a position where the reaping unit 15 has passed) as an already worked site. Therefore, a position where the combine 1 is not traveling (a position where the reaping unit 15 has not passed) is registered as an unworked site. In this case, for example, there arises a problem that, even if there is no work target (a grain stalk to be reaped) in an area, an area that the reaping unit 15 has not passed through will be registered as an unworked site and will be determined as the path on which automatic traveling is executed. Therefore, even if the travel processing unit 111 determines a work path as a path on which the combine 1 is caused to automatically travel, when predetermined operation by an operator, such as an operation to set the work path as a path that does not require automatic travel (a work-free path) or an operation to skip automatic travel, is received, the travel processing unit 111 may be configured not to automatically travel along the work path. As another embodiment, the registration processing unit 113 may be configured to register (change) an unworked site in the work site information C1 as an already worked site when a predetermined operation by an operator, such as an operation to change the work status, is received. As another embodiment, the registration processing unit 113 may acquire information indicating positions of a work target area (an area where grain stalks exist) and a non-work target area (an area where grain stalks do not exist) within the field F, and register the non-work target area as an already worked site, or may exclude the non-work target area from the determination targets for determining whether to cause the combine 1 to automatically travel.

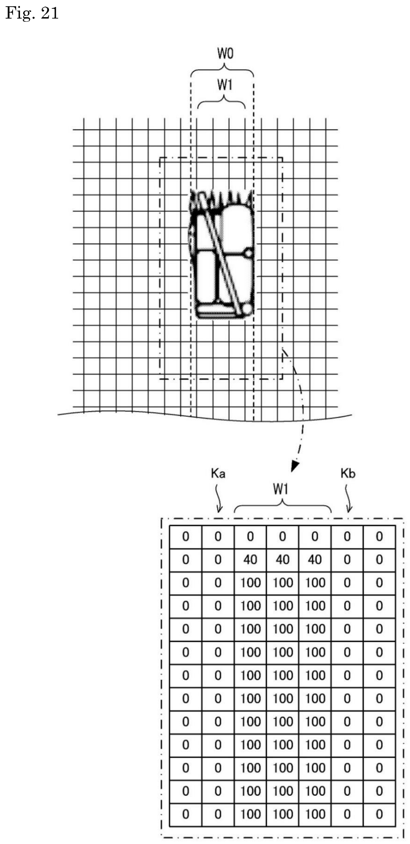

Furthermore, in the above configuration, the registration processing unit 113 determines whether the sections K included in the range of the work width WO corresponding to the width of the reaping unit 15 have been worked on (see Fig. 18). As another embodiment, the registration processing unit 113 may determine whether the section K included in a range W1 (see Fig. 21) narrower than the work width WO has been worked on. Accordingly, for example, as shown in Fig. 21, even if reaping work is actually executed on the sections K (a row Ka and a row Kb) located at the left and right ends of the work width WO, the sections are not work determination targets and are therefore registered as an unworked site. Therefore, the sections K in the row Ka and the row Kb are work target areas on other work paths and therefore the reaping work is reliably executed. This prevents any areas from being left uncut between adjacent work paths.

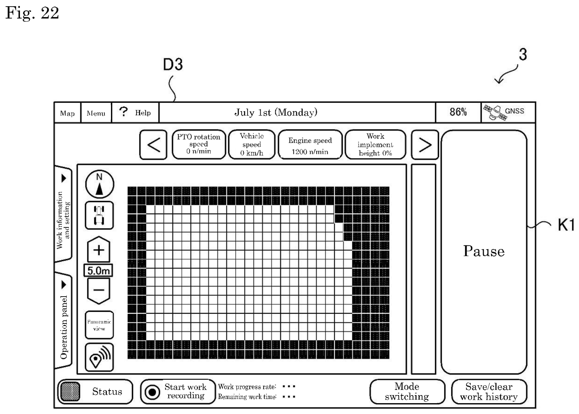

As another embodiment of the third configuration, the operation control unit 31 may cause the operation terminal 3 to display the work status included in the work site information C1 (see Fig. 19). For example, as shown on a travel screen D3 in Fig. 22, the operation control unit 31 displays the already worked site on the map of the section K corresponding to the field F by filling the already worked site in with a predetermined color. As another embodiment, the operation control unit 31 may display, on the map of the travel screen D3, the position (the section K) where the operator performed the reaping work by manual steering and the position (the section K) where the combine 1 performed the work by automatic traveling in different ways (different colors). The operation control unit 31 may also display the above-described work target line Ls on the map.

Furthermore, the operation control unit 31 may display the work rate for each section K on the map of the travel screen D3. Furthermore, when the operator selects a section K on the map of the travel screen D3, the operation control unit 31 may display the work rate of the selected section K.

Furthermore, the work site information C1 and the map may be applied to the generation processing of the corner reaping path according to the second configuration. For example, the generation processing unit 312 may generate a work path and an inclined path having a predetermined inclination angle with respect to the work path based on the positions (the sections K) of an unworked site and an already worked site in the work site information C1. The generation processing unit 312 may also display the map and generate an inclined path by receiving an operation from the operator to adjust the inclination angle.

In addition, the travel processing unit 111 may incline the side of the reaping unit 15 that has already been worked on higher (incline the entire vehicle body) (UFO control) such that the reaping unit 15 (the divider 28) does not catch on the waste straw B1 (see Fig. 4B) that is discharged into the already worked site when the combine 1 travels along each inclined path.

Furthermore, the travel processing unit 111 may set the vehicle speed of the combine 1 to a low speed when entering an inclined path. For example, in the corner reaping path shown in Fig. 10, the travel processing unit 111 may set the vehicle speed to a low speed when changing the direction of the vehicle for corner reaping work, such as the timing to enter the first inclined path R21 from the intersection point P1 and the timing to enter the second inclined path R22 from the intersection point P2. For example, the travel processing unit 111 sets the vehicle speed setting for the main shift lever to 100% when traveling backward along the work path R1 to the position of the intersection point P1, sets the vehicle speed setting to 70% when changing direction toward the first inclined path R21, when traveling backward just before that, and when entering the first inclined path R21, and sets the vehicle speed setting to 100% (the vehicle speed at the time of work) after entering the first inclined path R21. This improves the feeling (ride comfort) when making sudden changes in direction and secures safety.

In addition, during corner reaping work, the work processing unit 112 may continue driving the reaping unit 15 (cutting and threshing) for a predetermined time after the combine 1 stops at the terminal end (for example, the outermost peripheral position Fc) of the corner reaping path (each inclined path), and after the predetermined time has elapsed, stop driving the reaping unit 15 and raise it. Thereafter, the travel processing unit 111 causes the combine 1 to start traveling backward. This allows the grain stalks near the terminal end of each corner reaping path to be reliably cut, and also allows the cut grain stalks to be reliably threshed. In addition, in order to reliably cut the grain stalks in the unworked area, it is desirable that the travel processing unit 111 cause the combine 1 to travel to a position on each corner reaping path where the cutting blade of the reaping unit 15 enters outside the unworked area (the already worked area).

### [Automatic Traveling Processing (Third Configuration)]

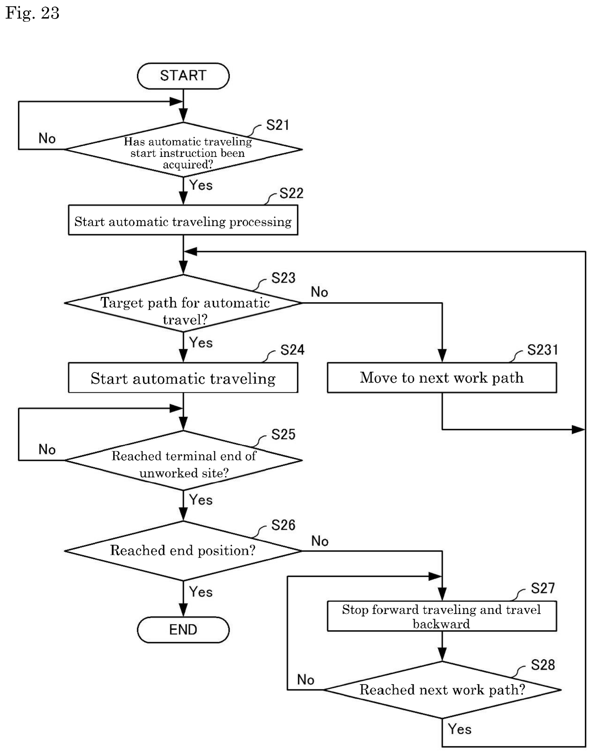

Hereinafter, an example of automatic traveling processing executed by the traveling system 10 will be described with reference to Fig. 23.

The present invention can be understood as an invention of an automatic traveling method for executing one or more steps included in automatic traveling processing. Furthermore, one or more steps included in the automatic traveling processing described here may be omitted as appropriate. Furthermore, the steps in the automatic traveling processing may be executed in a different order as long as the same operational effect is achieved. Furthermore, here, a case where in which the vehicle control device 11 executes each step in the automatic traveling processing will be described as an example, but an automatic traveling method in which one or more processors execute each step in the automatic traveling processing in a distributed manner is also considered as another embodiment.

### <Step S21>

In step S21, the vehicle control device 11 determines whether an automatic traveling start instruction has been acquired. For example, when the combine 1 satisfies the automatic traveling start condition and the operator performs an automatic traveling start instruction operation on the operation terminal 3, the vehicle control device 11 acquires the automatic traveling start instruction from the operation terminal 3. When the automatic traveling start instruction is acquired (S21: Yes), the vehicle control device 11 transitions the processing to step S22. The vehicle control device 11 waits until the automatic traveling start instruction is acquired (S21: No).

### <Step S22>

In step S22, the vehicle control device 11 starts the automatic traveling processing. Here, the vehicle control device 11 causes the combine 1 to start automatic traveling from the start position S (see Fig. 4C) of the inner peripheral area F1. Specifically, the vehicle control device 11 starts the automatic traveling of the combine 1 according to the inner peripheral path Rb generated in the above-described [method for generating inner peripheral path Rb (automatic travel path) (second configuration)]. For example, the vehicle control device 11 starts automatic traveling from the start position S of the work path R1 for the first round in the inner peripheral area F1.

### <Step S23>

In step S23, the vehicle control device 11 determines whether the work path is a path on which automatic travel is to be performed (a target path for automatic travel). For example, at the start end (the start position S) of the work path R1, the vehicle control device 11 determines whether the work path R1 is a target path for automatic travel. Specifically, based on the work status (worked or unworked) of each section K registered in the work site information C1 (see Fig. 19), the vehicle control device 11 determines the work path R1 as a target path for automatic travel when a part of the work target area corresponding to the work path R1 (for example, the planned reaping area with the work width WO) is an unworked site, and determines the work path R1 as a non-target path for automatic travel when the entire work target area corresponding to the work path R1 is an already worked site.

When it is determined that the work path is a target path for automatic travel (S23: Yes), the vehicle control device 11 transitions the processing to step S24. On the other hand, when it is determined that the work path is not a target path for automatic travel (S23: No), the vehicle control device 11 transitions the processing to step S231.

### <Step S24>

In step S24, the vehicle control device 11 causes the combine 1 to start automatic traveling. Specifically, the vehicle control device 11 causes the combine 1 to execute work (reaping work) while automatically traveling along a work path. For example, the vehicle control device 11 causes the combine 1 to execute reaping work while automatically traveling in a straight direction along the work path R1 (see Fig. 20A).

### <Step S25>

In step S25, the vehicle control device 11 determines whether the combine 1 has reached the terminal end of the unworked site. Specifically, the vehicle control device 11 determines whether the combine 1 has reached the terminal end of the unworked site included in the work target area (the planned reaping area with the work width WO) corresponding to the work path. In the example shown in Fig. 20A, when the tip (the reaping unit 15) of the combine 1 reaches the position e1, the vehicle control device 11 determines that the combine 1 has reached the terminal end of the unworked site. When it is determined that the combine 1 has reached the terminal end of the unworked site (S25: Yes), the vehicle control device 11 transitions the processing to step S26. The vehicle control device 11 continues the automatic traveling of the combine 1 along the work path R1 until the combine 1 reaches the terminal end of the unworked site (S25: No). In this way, when the combine 1 reaches the terminal end of the unworked site before reaching the terminal end of the work path, the vehicle control device 11 transitions the processing to step S26. In addition, the vehicle control device 11 may incline the side of the reaping unit 15 that has already been worked on higher (UFO control) such that the reaping unit 15 (the divider 28) does not catch on the waste straw B1 (see Fig. 4B) that is discharged into the already worked site when the combine 1 travels along each inclined path.

### <Step S26>

In step S26, the vehicle control device 11 determines whether the combine 1 has reached the end position G (see Fig. 4C). When the vehicle control device 11 determines that the combine 1 has reached the end position G (S26: Yes), that is, when the terminal end of the unworked site is the end position G, the vehicle control device 11 ends the automatic traveling processing. When it is determined that the combine 1 has not reached the end position G (S26: No), the vehicle control device 11 transitions the processing to step S27.

### <Step S27>

In step S27, the vehicle control device 11 stops the automatic traveling of the combine 1 in the forward direction and causes the combine 1 to automatically travel in the backward direction. In the example shown in Fig. 20A, the vehicle control device 11 stops the combine 1, which is automatically traveling along the work path R1, at the position e1, which is the terminal end of the unworked site, and stops the reaping work, and then causes the combine 1 to automatically travel in the backward direction along the work path R1 or another backward traveling path.

### <Step S28>

In step S28, the vehicle control device 11 determines whether the combine 1 has reached the next work path. When it is determined that the combine 1 has reached the next work path (S28: Yes), the vehicle control device 11 transitions the processing to step S23. The vehicle control device 11 continues the backward traveling of the combine 1 until it reaches the next work path (S28: No). For example, in the example shown in Fig. 10, when the combine 1 reaches the intersection point P1 between the first inclined path R21 and the work path R1, the vehicle control device 11 transitions the processing to step S23.

When transitioning to step S23, the vehicle control device 11 determines whether the next first inclined path R21 is a target path for automatic travel, and when the next first inclined path R21 is a target path for automatic travel (S23: Yes), the vehicle control device 11 starts automatic traveling (S24).

### <Step S231>

In step S231, the vehicle control device 11 moves the combine 1 to the next work path. Specifically, when the vehicle control device 11 determines that the entire work target area corresponding to the work path is an already worked site and that the work path is not a target path for automatic travel (a non-target path for automatic travel) (S23: No), the vehicle control device 11 causes the combine 1 to skip the work path and move to the next work path. Thereafter, the vehicle control device 11 transitions the processing to step S23, determines whether the next work path is a target path for automatic travel, and when the next work path is a target path for automatic travel (S23: Yes), the vehicle control device 11 starts automatic traveling (S24).

In this way, the vehicle control device 11 repeatedly executes the above-described processing in the inner peripheral area F1 from the start position S to the end position G, determines whether to execute automatic traveling for each work path, and causes the combine 1 to execute automatic traveling and reaping work according to the inner peripheral path Rb.

As described above, the traveling system 10 according to the third configuration is configured to cause the combine 1 to automatically travel along a target path including a plurality of work paths for the combine 1 to automatically travel while performing predetermined work (reaping work) in the field F. In addition, the traveling system 10 is configured to determine whether to cause the combine 1 to execute automatic traveling for each work path based on the work site information C1 (see Fig. 19) which includes information on unworked sites in the field F where work has not ended and information on already worked sites where work has ended.

Specifically, when the entire work target area corresponding to the work path is an already worked site, the traveling system 10 determines the work path as a path on which the combine 1 is not caused to automatically travel (a non-target path for automatic travel). Furthermore, when at least a part of the work target area corresponding to the work path is an unworked site, the traveling system 10 determines the work path as a path on which the combine 1 is caused to automatically travel (a target path for automatic travel).

According to the above configuration, for example, when starting automatic traveling on a work path, when it is determined that the entire work path is an already worked site and automatic traveling is not necessary, automatic traveling on the work path can be omitted. This prevents unnecessary automatic traveling in an already worked site, thereby improving work efficiency.

In the above configuration, the operation terminal 3 is configured to generate the inner peripheral path Rb, but as another embodiment, the vehicle control device 11 of the combine 1 may be configured to generate the inner peripheral path Rb. Alternatively, the operation terminal 3 may generate the inner peripheral path Rb excluding the corner reaping path, and the vehicle control device 11 may generate the corner reaping path. For example, the vehicle control device 11 may correct the inner peripheral path Rb generated by the operation terminal 3 based on the work site information C1 to generate the corner reaping path.

### [Operation Control of Work Implement (Reaping Unit 15) (Fourth Configuration)]

A specific example of a method (a fourth configuration) for controlling the operation of the work implement (the reaping unit 15) when the combine 1 is caused to automatically travel along the automatic travel path (the inner peripheral path Rb) generated in the inner peripheral area F1 in the second configuration will be described. The traveling system 10 is configured to control the position (the posture) of the reaping unit 15 based on work site information indicating whether the work target site (the work target position) for the reaping work is an unworked site where reaping work has not ended or an already worked site where reaping work has ended.

Specifically, the work processing unit 112 of the vehicle control device 11 controls the operation (the position) of the reaping unit 15 based on the work site information C1 (see Fig. 19) registered by the third configuration.

For example, the work processing unit 112 determines whether each section K is an unworked site or an already worked site based on the work status (the work site information C1) of each section K included in the work target area (the planned reaping area with the work width WO) corresponding to that work path, and sets the reaping unit 15 to the working height H1 (see Fig. 7C) or the non-working height H0 (see Fig. 7A) on the work path. Specifically, the work processing unit 112 sets the reaping unit 15 to the working height H1 in an unworked site on the work path, and sets the reaping unit 15 to the non-working height H0 in an already worked site.

For example, in the example shown in Fig. 20A, the area up to a position e1 of the work target area corresponding to the work path R1 includes an unworked site, and the entire area beyond the position e1 is an already worked site. In this case, the work processing unit 112 lowers the reaping unit 15 to the working height H1 at the start end of the work path R1 or before the start end, maintains the reaping unit 15 at the working height H1 until the position e1, and then raises the reaping unit 15 to the non-working height H0 at the position e1 or a position passing the position e1. Additionally, while the travel processing unit 111 causes the combine 1 to travel backward along the work path R1, the work processing unit 112 maintains the reaping unit 15 at the non-working height H0. As another embodiment, when the combine 1 is caused to travel backward, the work processing unit 112 may set the reaping unit 15 to the intermediate height H2 (see Fig. 7B) that can avoid entanglement with the waste straw B1. Furthermore, the work processing unit 112 may stop the operation of the reaping unit 15 when the reaping unit 15 is set to the intermediate height H2.

In the example shown in Fig. 20B, the area up to a position e2 of the work target area corresponding to the first inclined path R21 includes an unworked site, and the entire area beyond the position e2 is an already worked site. Therefore, the work processing unit 112 lowers the reaping unit 15 to the working height H1 at the start end of the first inclined path R21 or before the start end, maintains the reaping unit 15 at the working height H1 until the position e2, and then raises the reaping unit 15 to the non-working height H0 at the position e2 or a position passing the position e2. While the travel processing unit 111 causes the combine 1 to travel backward along the first inclined path R21, the work processing unit 112 maintains the reaping unit 15 at the non-working height H0 or the intermediate height H2.

In the example shown in Fig. 20C, since the entire work target area corresponding to the first inclined path R21 is an already worked site, the work processing unit 112 maintains the reaping unit 15 at the non-working height H0 or the intermediate height H2.

As another embodiment, the work processing unit 112 may lower the reaping unit 15 from the non-working height H0 to the working height H1 while the combine 1 is traveling backward. For example, the work processing unit 112 starts lowering the reaping unit 15 during backward travel such that the reaping unit 15 reaches the working height H1 at the point in time when the combine 1 reaches the terminal end of the backward path or the start end of the next work path. This allows the reaping work to start immediately on the next work path.

As another embodiment, when traveling on an inclined path (the first inclined path R21 or the second inclined path R22), the work processing unit 112 may raise the horizontal height of the reaping unit 15 on the side of the work path where work has already been performed, thereby inclining the reaping unit 15 (UFO control). For example, when the combine 1 travels along the first inclined path R21, the work processing unit 112 raises the right side (the work path R1 side) of the reaping unit 15 above the working height H1, and executes reaping work with the reaping unit 15 inclined. This allows the reaping work on the first inclined path R21 to be performed without entangling the waste straw B1 (see Fig. 4B) discharged during the reaping work on the work path R1. In addition, the work processing unit 112 may lower the right side of the reaping unit 15 to the normal working height H1 and return it to a horizontal state after the combine 1 has passed through the waste straw B1.

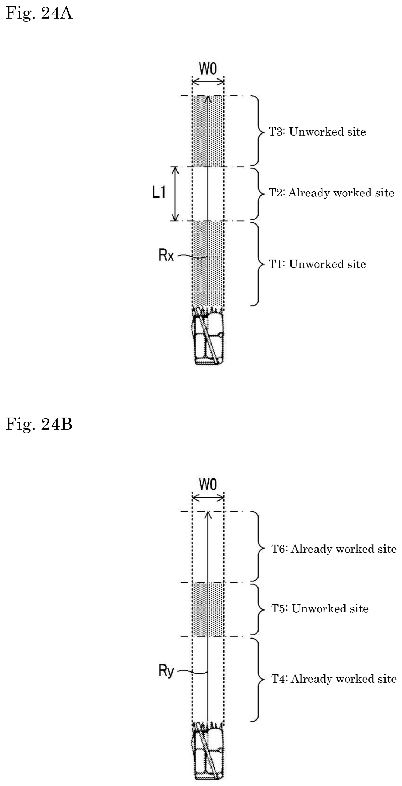

Here, in a work target area corresponding to one work path, an intermediate position between the start end and the terminal end of the work path may be an already worked site. For example, as shown in Fig. 24A, there may be a case where a segment T1 from the start end of a work path Rx is an unworked site, a segment T2 following the segment T1 is an already worked site, and a segment T3 following the segment T2 is an unworked site. In this case, the work processing unit 112 maintains the reaping unit 15 at the working height H1 in the segment T1, sets the reaping unit 15 to the non-working height H0 or the intermediate height H2 after entering the already worked site (the segment T2), and sets the reaping unit 15 to the working height H1 before entering the unworked site (the segment T3).

As another embodiment, the work processing unit 112 may set the height of the reaping unit 15 according to a distance L of the already worked site (the segment T2). For example, when the distance L is equal to or greater than a predetermined distance, the work processing unit 112 sets the reaping unit 15 to the non-working height H0 in the segment T2. On the other hand, when the distance L is less than the predetermined distance, the work processing unit 112 sets the reaping unit 15 to the intermediate height H2 in the segment T2. As another embodiment, the work processing unit 112 may set (maintain) the reaping unit 15 to the working height H1 in the segment T2 when the distance L is less than a predetermined distance and there is no waste straw in the already worked site in the segment T2.

For example, the work processing unit 112 may stop driving the reaping unit 15 in the segment T2 when the distance L is equal to or greater than a predetermined distance, and may maintain driving of the reaping unit 15 in the segment T2 when the distance L is less than the predetermined distance.

As another embodiment, when the distance L is less than a predetermined distance, the registration processing unit 113 may register "unworked" (see Fig. 19) as the work status of the section K included in the segment T2. For example, in the work site information C1, when the distance L of the section K of an already worked site ("worked: 0") located between unworked sites ("unworked: 1") is less than a predetermined distance, the registration processing unit 113 changes "worked" to "unworked". Accordingly, the work processing unit 112 can set (maintain) the reaping unit 15 to the working height H1 in the section K of the segment T2 by referring to the work site information C1.

Furthermore, in a work target area corresponding to one work path, an intermediate position between the start end and the terminal end of the work path may be an unworked site. For example, as shown in Fig. 24B, there may be a case where a segment T4 from the start end of a work path Ry is an already worked site, a segment T5 following the segment T4 is an unworked site, and a segment T6 following the segment T5 is an already worked site. In this case, the work processing unit 112 maintains the reaping unit 15 at the non-working height H0 or the intermediate height H2 in the segment T4, sets the reaping unit 15 to the working height H1 before entering the unworked site (the segment T5), and sets the reaping unit 15 to the non-working height H0 or the intermediate height H2 after passing the terminal end of the unworked site (the segment T5) (after entering the already worked site (the segment T6)).

In the above embodiment, the combine 1 is used as an example, but when the work vehicle is a tractor and the work implement is a tiller, the non-working height H0 is the height at which the tiller is at its highest position, and the intermediate height H2 is the height at which the rotary and the cover do not come into contact with the tilled ground. The fourth configuration is not limited to the combine 1, but can be applied to various work vehicles such as tractors.

Here, the work processing unit 112 may determine the timing to start lowering the work implement (the timing to issue a lowering instruction) based on the movement speed (the lowering speed) of the work implement and the traveling speed of the work vehicle. For example, when the lowering speed of the work implement is set in advance, the work processing unit 112 calculates a time required to move from the current height to the working height (the lowest position) (a required lowering time) based on the position information of the current height of the work implement and the lowering speed, and calculates a distance that the work vehicle will travel during the required lowering time based on the calculated required lowering time and the current travel speed of the work vehicle. Then, the work processing unit 112 outputs an instruction to lower the work implement at a position on the front side of the work start position by the distance. That is, the work processing unit 112 determines the operation timing of the work implement based on the travel speed of the work vehicle and the movement time required for the work implement to move from its current position (for example, a non-work position) to the work position.

### [Operation Control Processing of Work Implement (Reaping Unit 15) (Fourth Configuration)]

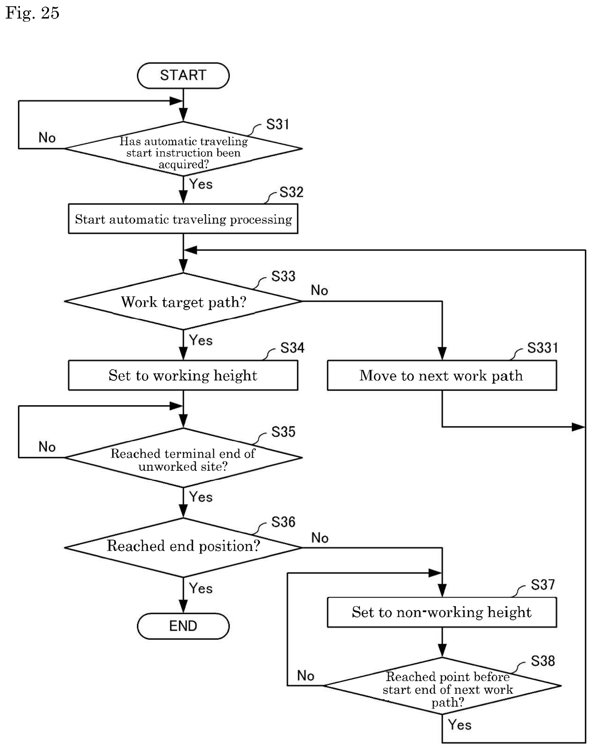

Hereinafter, an example of operation control processing of the reaping unit 15 executed by the traveling system 10 will be described with reference to Fig. 25.

The present invention can be understood as an invention of an operation control method for executing one or more steps included in operation control processing. Furthermore, one or more steps included in the operation control processing described here may be omitted as appropriate. In addition, an execution order of each step in the operation control processing may be different within a range in which similar operational effects are produced. Furthermore, here, a case where the vehicle control device 11 executes each step in the operation control processing will be described as an example, but an operation control method in which one or more processors dispersedly execute each step in the operation control processing is also considered as another embodiment.

The operation control processing is applicable to the automatic traveling processing (see Fig. 23) corresponding to the second configuration, and the traveling system 10 can execute the following operation control processing together with the automatic traveling processing. The following description focuses on the operation control processing of the reaping unit 15.

### <Step S31>

In step S31, the vehicle control device 11 determines whether an automatic traveling start instruction has been acquired. For example, when the combine 1 satisfies the automatic traveling start condition and the operator performs an automatic traveling start instruction operation on the operation terminal 3, the vehicle control device 11 acquires the automatic traveling start instruction from the operation terminal 3. When the automatic traveling start instruction is acquired (S31: Yes), the vehicle control device 11 transitions the processing to step S32. The vehicle control device 11 waits until the automatic traveling start instruction is acquired (S31: No).

### <Step S32>

In step S32, the vehicle control device 11 starts automatic traveling processing. Here, the vehicle control device 11 causes the combine 1 to start automatic traveling from the start position S (see Fig. 4C) of the inner peripheral area F1. Specifically, the vehicle control device 11 starts the automatic traveling of the combine 1 according to the inner peripheral path Rb generated in the above-described [method for generating inner peripheral path Rb (automatic travel path) (second configuration)]. For example, the vehicle control device 11 starts automatic traveling from the start position S of the work path R1 for the first round in the inner peripheral area F1.

### <Step S33>

In step S33, the vehicle control device 11 determines whether the work path is a path on which reaping work is to be performed (a work target path). For example, at the start end (the start position S) of the work path R1, the vehicle control device 11 determines whether the work path R1 is a work target path. Specifically, based on the work status (worked or unworked) of each section K registered in the work site information C1 (see Fig. 19), the vehicle control device 11 determines the work path R1 as a work target path when a part of the work target area corresponding to the work path R1 (for example, the planned reaping area with the work width WO) is an unworked site, and determines the work path R1 as a non-work target path when the entire work target area corresponding to the work path R1 is an already worked site.

When it is determined that the work path is a work target path (S33: Yes), the vehicle control device 11 transitions the processing to step S34. On the other hand, when it is determined that the work path is not a work target path (S33: No), the vehicle control device 11 transitions the processing to step S331.

### <Step S34>

In step S34, the vehicle control device 11 sets the reaping unit 15 to the working height H1 (see Fig. 7C). Furthermore, the vehicle control device 11 causes the combine 1 to execute work (reaping work) while automatically traveling along a work path. For example, the vehicle control device 11 causes the combine 1 to execute reaping work while automatically traveling in a straight direction along the work path R1 (see Fig. 20A).

### <Step S35>

In step S35, the vehicle control device 11 determines whether the combine 1 has reached the terminal end of the unworked site. Specifically, the vehicle control device 11 determines whether the combine 1 has reached the terminal end of the unworked site included in the work target area (the planned reaping area with the work width WO) corresponding to the work path. In the example shown in Fig. 20A, when the tip (the reaping unit 15) of the combine 1 reaches the position e1, the vehicle control device 11 determines that the combine 1 has reached the terminal end of the unworked site. When it is determined that the combine 1 has reached the terminal end of the unworked site (S35: Yes), the vehicle control device 11 transitions the processing to step S36. The vehicle control device 11 maintains the reaping unit 15 at the working height H1 until the combine 1 reaches the terminal end of the unworked site, and continues automatic traveling and reaping work along the work path R1 (S35: No). When the combine 1 reaches the terminal end of the unworked site before reaching the terminal end of the work path, the vehicle control device 11 transitions the processing to step S36.

### <Step S36>

In step S36, the vehicle control device 11 determines whether the combine 1 has reached the end position G (see Fig. 4C). When it is determined that the combine 1 has reached the end position G (S36: Yes), the vehicle control device 11 ends the operation control processing. When it is determined that the combine 1 has not reached the end position G (S36: No), the vehicle control device 11 transitions the processing to step S37.

### <Step S37>

In step S37, the vehicle control device 11 sets the reaping unit 15 to the non-working height H0. In the example shown in Fig. 20A, the vehicle control device 11 stops the automatic traveling of the combine 1 in the forward direction, raises the reaping unit 15 to the non-working height H0, and causes the combine 1 to automatically travel in the backward direction. Specifically, the vehicle control device 11 stops the combine 1, which is automatically traveling along the work path R1, at the position e1, which is the terminal end of the unworked site, or at a position passing the position e1, raises the reaping unit 15 to the non-working height H0, and then causes the combine 1 to automatically travel in the backward direction along the work path R1 or another backward traveling path. The vehicle control device 11 may set the reaping unit 15 to the intermediate height H2 (see Fig. 7B) when causing the combine 1 to travel backward. Furthermore, the vehicle control device 11 may start lowering the reaping unit 15 before the combine 1 reaches the terminal end of the backward travel (for example, the intersection point P1 (see Fig. 10)).

### <Step S38>

In step S38, the vehicle control device 11 determines whether the combine 1 has reached a point before the start end of the next work path. Specifically, the vehicle control device 11 calculates the lowering start timing of the reaping unit 15 based on the travel speed of the combine 1 and the required lowering time of the reaping unit 15, and determines whether the position at which the lowering start timing has arrived has been reached. When it is determined that the combine 1 has reached a point before the start end of the next work path (S38: Yes), the vehicle control device 11 transitions the processing to step S33. The vehicle control device 11 continues the backward traveling with the reaping unit 15 maintained at the non-working height H0 until the combine 1 reaches a point before the start end of the next work path (S38: No).

When transitioning to step S33, the vehicle control device 11 determines whether the next first inclined path R21 is a work target path, and when the next first inclined path R21 is a work target path (S33: Yes), the vehicle control device 11 sets the reaping unit 15 to the working height H1 and starts automatic traveling (S34). That is, the vehicle control device 11 starts lowering the reaping unit 15 at the point in time when the combine 1 reaches a point before the start end of the next work path such that the reaping unit 15 is at the working height H1 at the start end of the next work path.

### <Step S331>

In step S331, the vehicle control device 11 moves the combine 1 to the next work path. Specifically, when the vehicle control device 11 determines that the entire work target area corresponding to the work path is an already worked site and that the work path is not a work target path (a non-work target path) (S33: No), the vehicle control device 11 causes the combine 1 to skip the work path and move to the next work path. Thereafter, the vehicle control device 11 transitions the processing to step S33, determines whether the next work path is a work target path, and when the next work path is a work target path (S33: Yes), the vehicle control device 11 sets the reaping unit 15 to the working height H1 and starts automatic traveling (S34).

In this way, the vehicle control device 11 repeatedly executes the above-described processing to control the position of the reaping unit 15 while the combine 1 travels from the start position S to the end position G in the inner peripheral area F1.

As described above, the traveling system 10 according to the fourth configuration is configured to cause the reaping unit 15 to perform predetermined work while causing the combine 1 to automatically travel along a target path in the field F. In addition, the traveling system 10 is configured to control the operation of the reaping unit 15 based on the work site information C1 (see Fig. 19) which includes information on unworked sites in the field F where work has not ended and information on already worked sites where work has ended.

Specifically, the traveling system 10 sets the reaping unit 15 to a work position (the working height H1) before the combine 1 enters an unworked site from an already worked site, and sets the reaping unit 15 to a non-work position (the non-working height H0) after the combine 1 enters an already worked site from an unworked site.

According to the above configuration, for example, when the combine 1 starts automatic traveling on a work path, when it is determined that the entire work path is an already worked site and work is not necessary, work on the work path can be omitted. In addition, when the work path includes an already worked site and an unworked site, the reaping unit 15 is set to the working height H1 to execute work in the unworked site, and the reaping unit 15 is set to the non-working height H0 in the already worked site, thereby preventing unnecessary movement (posture changes) of the reaping unit 15. This prevents unnecessary automatic traveling and work in an already worked site, thereby improving work efficiency. In addition, by setting the reaping unit 15 to the working height H1 before the combine 1 enters the unworked site from the already worked site, and by setting the reaping unit 15 to the non-working height H0 after the combine 1 enters the already worked site from the unworked site, it is possible to prevent work from being missed (left uncut) in the unworked site.

### [Other Embodiments]

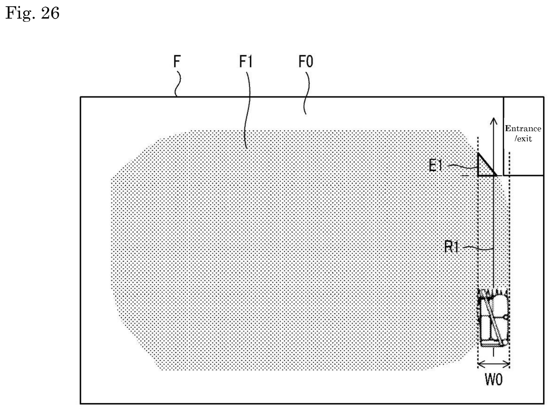

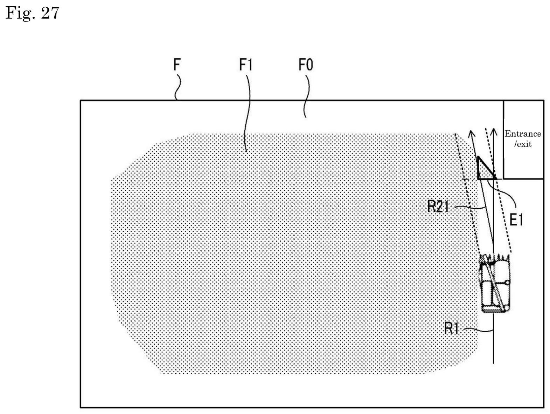

The present invention is not limited to the above-described embodiments. Other embodiments of the present invention are described below.
(1) For example, as shown in Fig. 26, an entrance/exit may be set at a corner of the field F. In this case, when the combine 1 automatically travels along the work path R1 to perform the reaping work, the combine 1 stops the automatic traveling at a point before the entrance/exit, resulting in the area of the work target area after the entrance/exit being left uncut (an uncut area E1). Therefore, the generation processing unit 312 may shift the first inclined path R21, which is the corner reaping path next to the work path R1, toward the work path R1 from its original position (the pitch of the work width WO), as shown in, for example, Fig. 27. Specifically, the generation processing unit 312 generates the first inclined path R21 such that the uncut area E1 is included in the work target area.

In this way, the generation processing unit 312 may be configured to generate a second work path for a corner reaping path such that, when an uncut area E1 is generated due to reaping work on the first work path, the uncut area E1 is included in the work target area of the second work path next to the first work path. This can prevent any areas from being left uncut.

In the above configuration, the generation processing unit 312 may generate or shift the second work path based on the work site information C1 (see Fig. 19), may generate or shift the second work path based on the work target line Ls (the recommended reaping line), or may generate or shift the second work path based on information on an unworked site or an already worked site specified from an image captured by the camera of the combine 1.

The above configuration is not limited to a configuration in which corners are reaped diagonally (see Fig. 10), but can also be applied to a configuration in which corners are reaped in parallel (see Fig. 15).

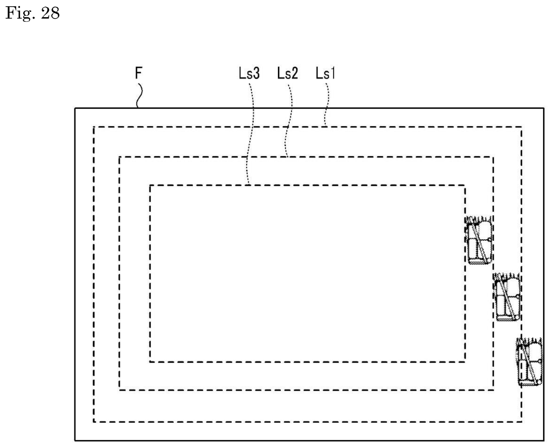

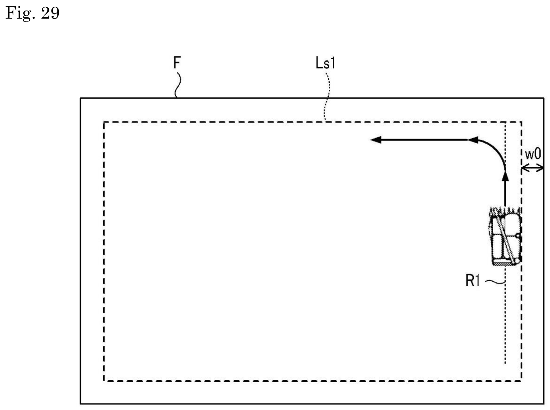

(2)
The generation processing unit 312 may set a plurality of work target lines Ls. For example, as shown in Fig. 28, the generation processing unit 312 sets a work target line Ls1 on the outermost peripheral side of the field F, a work target line Ls2 on the inside of the work target line Ls1, and a work target line Ls3 on the inside of the work target line Ls2. The work target line Ls1 represents a target position (a mark) when the operator manually travels one round of the outermost periphery of the field F to perform reaping work, and corresponds to the above-described work target line Ls (see Fig. 14). For example, as shown in Fig. 29, the work target line Ls1 is set at a position that allows turning at a corner of the work path for the second round and enables generation of an automatic travel path including a corner reaping path from the second round. For example, when the operator performs reaping work by manual traveling to include the position of the work target line Ls1, the generation processing unit 312 permits the generation of an automatic travel path from the second round onwards. Here, in order to enable automatic travel from the second round onwards, it is desirable that the work target line Ls1 be set at a position narrower than the work width (one work pass) from the boundary of the field F. That is, it is desirable that the width w0 shown in Fig. 29 be less than the work width. When the width w0 of the work target line Ls1 is too small, the area necessary for turning cannot be secured at the corners of the second round, and therefore the width w0 is set to a width that allows turning.

In addition, the work target line Ls2 represents a target position (a mark) when the operator manually travels two rounds of the outermost periphery of the field F to perform reaping work, and is set at a position inward from the work target line Ls1 by the work width (one work pass). For example, when the operator performs reaping work by manual traveling to include the position of the work target line Ls2, the generation processing unit 312 permits the generation of an automatic travel path from the third round onwards.

In addition, the work target line Ls3 represents a target position (a mark) when the operator manually travels three rounds of the outermost periphery of the field F to perform reaping work, and is set at a position further inward from the work target line Ls2 by the work width (one work pass). For example, when the operator performs reaping work by manual traveling to include the position of the work target line Ls3, the generation processing unit 312 permits the generation of an automatic travel path from the fourth round onwards.

The work target lines Ls1 to Ls3 are displayed on the operation terminal 3. As another embodiment, the generation processing unit 312 may display a predetermined work target line Ls out of the work target lines Ls1 to Ls3 in response to an operation of the operator. For example, when the operator manually travels the first round (the outermost periphery) and sets the vehicle to automatically travel from the second round onwards, the generation processing unit 312 displays only the work target line Ls1 out of the work target lines Ls1 to Ls3. Furthermore, for example, when the operator manually travels the first and the second rounds and sets the vehicle to automatically travel from the third round onwards, the generation processing unit 312 displays only the work target line Ls2 out of the work target lines Ls1 to Ls3. Furthermore, for example, when the operator manually travels the first to third rounds and sets the vehicle to automatically travel from the fourth round onwards, the generation processing unit 312 displays only the work target line Ls3 out of the work target lines Ls1 to Ls3.

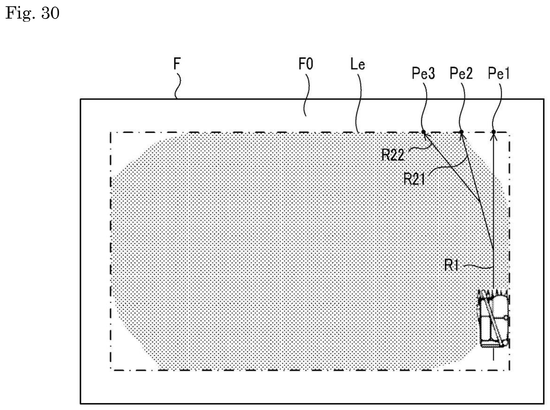

(3)
When generating the work path R1, the generation processing unit 312 may set a terminal end Pe of the work path R1 based on the work position in the outermost peripheral area F0. For example, as shown in Fig. 30, the generation processing unit 312 sets the inner boundary of the work trajectory of the reaping work in the outermost peripheral area F0 (a line surrounding the remaining uncut area (an already worked line Le)), and sets a terminal end Pe1 of the work path R1 on the already worked line Le. In this way, the generation processing unit 312 does not take into consideration the work trajectory at the corner (the boundary between the already cut area and the uncut area), and extends the work path R1 to the already worked line Le to set the terminal end Pe1. Similarly, the generation processing unit 312 sets terminal ends Pe2 and Pe3 of the first inclined path R21 and the second inclined path R22 on the already worked line Le.

In addition, when generating the work path R1, the generation processing unit 312 may determine the position of the work path R1 in the left-right direction such that the width of the combine 1 in the left-right direction partially overlaps the already cut area (such that the outer periphery of the second round of pass overlaps the inside of the outermost round of pass). This prevents gaps (unworked sites) from occurring between adjacent passes.

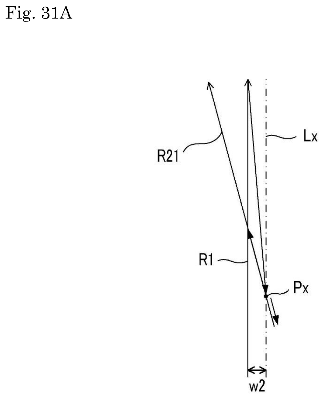

(4)
The vehicle control device 11 may perform the following work on the corner. For example, as shown in Fig. 31A, the vehicle control device 11 sets a reference line Lx parallel to the work path R1 at a position away from the work path R1 on the outer periphery of the field F by a predetermined distance w2 (for example, 10 cm), and sets an intersection point Px between the extension line of the first inclined path R21 and the reference line Lx. The vehicle control device 11 causes the combine 1 to travel along the work path R1, and then causes the combine 1 to travel backward toward the intersection point Px. Then, the vehicle control device 11 causes the combine 1 to turn backward along the extension line of the first inclined path R21 at the intersection point Px, and then switches to forward travel and causes the combine 1 to travel straight along the first inclined path R21. The distance that the combine 1 travels backward from the intersection point Px may be changeable. The intersection point Px may also be set at a position, for example, 12 m from the terminal end of the work path R1.

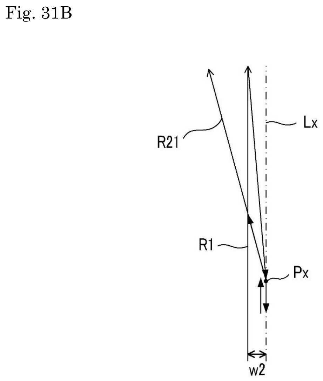

As another embodiment, in a case where the rear end of the body of the combine 1 jumps out of the field F when making a backward turn from the intersection point Px, the vehicle control device 11 may cause the combine 1 to travel straight backward along the reference line Lx at the intersection point Px, as shown in Fig. 31B, and then switch to forward travel and make a forward turn to travel straight along the first inclined path R21. The distance that the combine 1 travels backward from the intersection point Px may be changeable.

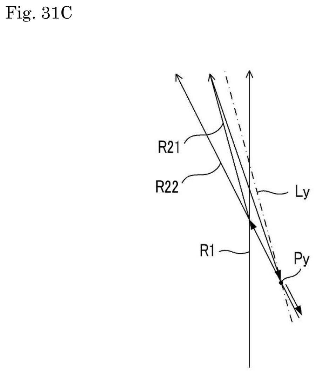

Similarly, for the second inclined path R22, as shown in Fig. 31C, the vehicle control device 11 sets a reference line Ly parallel to the first inclined path R21 at a position away from the first inclined path R21 on the outer periphery of the field F by a predetermined distance, and sets an intersection point Py between an extension line of the second inclined path R22 and the reference line Ly. The vehicle control device 11 causes the combine 1 to travel straight along the first inclined path R21, and then causes the combine 1 to travel backward toward the intersection point Py. Then, the vehicle control device 11 causes the combine 1 to turn backward along the extension line of the second inclined path R22 at the intersection point Py, and then switches to forward travel and causes the combine 1 to travel straight along the second inclined path R22. In addition, when the rear end of the body of the combine 1 jumps out of the field F, the vehicle control device 11 may cause the combine 1 to travel backward along the reference line Ly at the intersection point Py, and then switch to forward travel and make a forward turn to travel straight along the second inclined path R22.

In addition, when the combine 1 is switched from backward travel to forward travel, the vehicle control device 11 may set the vehicle speed to a low speed, then start lowering the reaping unit 15, and cause the combine 1 to travel at a low speed for the time required for the reaping unit 15 to descend to the working height H1, and then return the vehicle speed to the original speed (the set vehicle speed) after that time has elapsed.

In addition, when the combine 1 moves from a work path (for example, the work path R1) to a non-work path (the backward path), the vehicle control device 11 may switch to backward travel at the point in time when the tip of the reaping unit 15 reaches the terminal end of the work path R1. On the other hand, when the combine 1 moves from a non-work path to a work path, the vehicle control device 11 may switch to forward travel at the point in time when the center position of the combine 1 (the center position of the crawler) reaches the terminal end of the non-work path. In other words, when the combine 1 moves from a work path to a non-work path, the vehicle control device 11 controls (path switching control, vehicle speed control, and the like) the tip position of the combine 1 (the position of the reaping unit 15) as the current position of the vehicle, and when the combine 1 moves from a non-work path to a work path, the vehicle control device 11 controls the center position of the combine 1 (the center position of the crawler) as the current position of the vehicle.

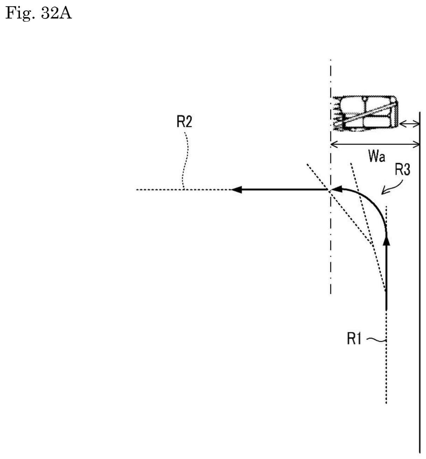

(5)
The vehicle control device 11 may cause the combine 1 to travel along the movement path R3 (see Fig. 11) at the corner as follows. For example, when the combine 1 moves from the work path R1 to the next work path R2 on the second round, the vehicle control device 11 causes the combine 1 to perform corner reaping work such that a width Wa that allows turning can be secured by traveling forward only without switching between forward and backward movement (see Fig. 32A). Furthermore, the vehicle control device 11 may also include backward traveling and turning traveling when the width Wa cannot be secured. The width Wa is a width that allows the combine 1 to directly face the work path R2 and prevents the tip of the reaping unit 15 from entering an unworked area. The width Wa may be a width that allows the combine 1 to directly face the work path R2 in a state in which the cutting blade of the reaping unit 15 has entered the unworked area.

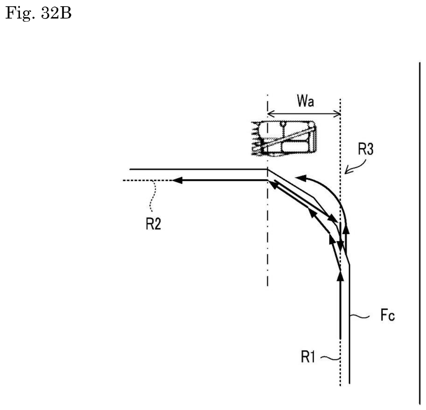

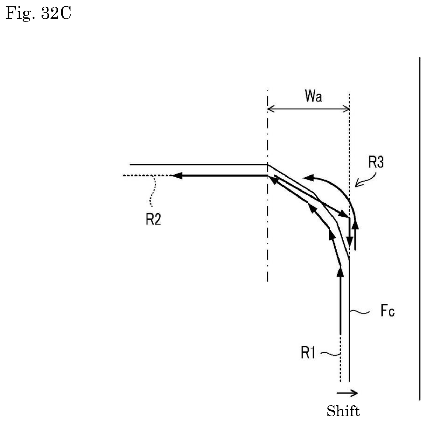

Fig. 32B shows an example in which the combine 1 performs corner reaping on the third round, travels along the movement path R3, and moves to the next work path R2. The vehicle control device 11 causes the combine 1 to travel along the outermost peripheral position Fc (the filled-in shape on the map) of the unworked area to execute corner reaping work. On the third round, when the combine 1 moves from the work path R1 to the next work path R2, in a case where a width Wa that allows turning can be secured by traveling forward only without switching between forward and backward movement (see Fig. 32B), that is, in a case where the reaping unit 15 (the cutting blade) enters an unworked area when the combine 1 directly faces the work path R2, the vehicle control device 11 may shift the turning start position toward the outer periphery of the field F, as shown in Fig. 32C.

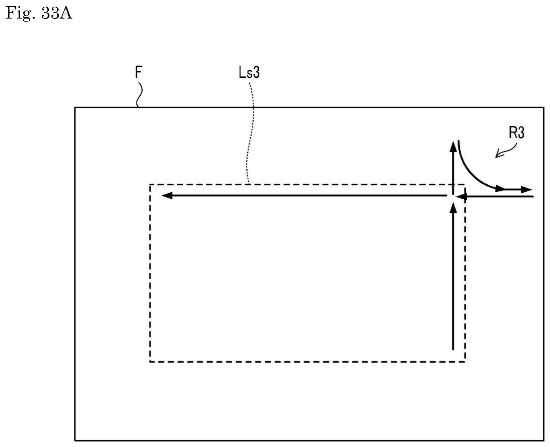

(6)
When the operator manually travels the combine 1 three rounds along the work target line Ls3 to perform reaping work, and then causes the combine 1 to automatically travel from the fourth round onwards, the vehicle control device 11 causes the combine 1 to travel along a movement path R3 including switching between forward and backward movement at the corner of the unworked area, as shown in Fig. 33A. When the turning travel shown in Fig. 33A is possible, the vehicle control device 11 causes the combine 1 to turn without performing corner reaping work on the fourth round.

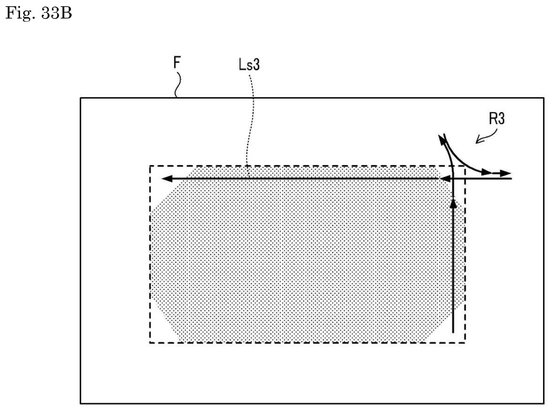

Furthermore, for example, as shown in Fig. 33B, when the corners of the work path for the fourth round have been cut by the first to third rounds of travel and corner reaping work, the vehicle control device 11 can shift the turning area inward by including a forward turning path in the movement path R3, thereby preventing the combine 1 from approaching the boundary of the field F or jumping out of the field F when traveling along the movement path R3.

(7)
The vehicle control device 11 may cause the combine 1 to automatically travel while avoiding an area in the field F where automatic traveling is not possible, such as an entrance/exit. For example, as shown in Fig. 26, when an entrance/exit is located at a corner of the field F, the vehicle control device 11 causes the combine 1 to automatically travel and execute corner reaping work to avoid the entrance/exit. Furthermore, for example, when there is an area on the circular work path where automatic traveling is not possible and the circular work path intersects with the area where automatic traveling is not possible, the vehicle control device 11 may stop automatic traveling when the combine 1 reaches the area where automatic traveling is not possible, and the operator may manually operate the combine 1 to avoid the area where automatic traveling is not possible.

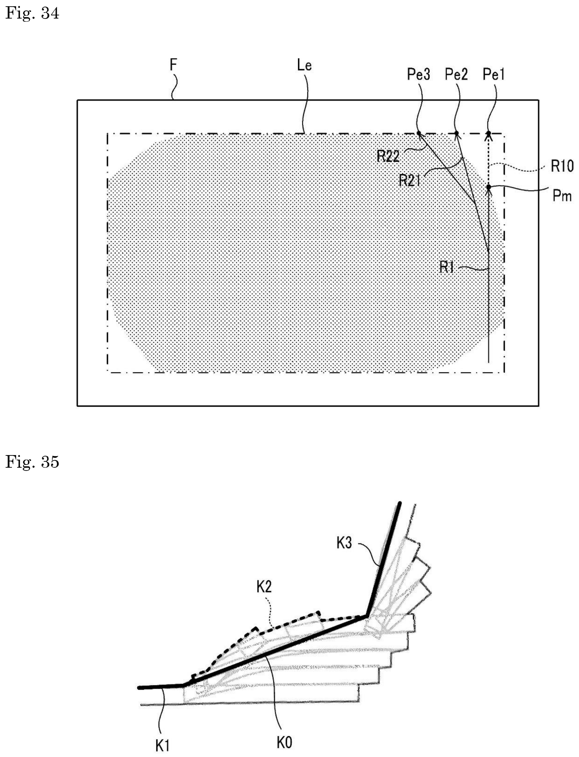

(8)
As shown in Fig. 34, when a part of the work path R1 overlaps an already cut area, the vehicle control device 11 may exclude the portion overlapping the already cut area from the work target path and change the work path to a work-free path R10. In this case, the vehicle control device 11 determines that it is not necessary to travel along the work-free path R10, and when it reaches the intermediate position Pm on the work path R1 (the terminal end position of the unworked area on the work path R1), the vehicle control device 11 raises the reaping unit 15 to stop the reaping work, and travels toward the next work path without traveling along the work-free path R10.

(9)
The vehicle control device 11 may have a search function of searching for a path for starting automatic traveling. For example, the vehicle control device 11 sets a predetermined search range ahead of the combine 1, and searches for a plurality of (for example, up to three) paths (candidate paths) that are included in the search range and are close to the current position of the combine 1. Then, the vehicle control device 11 determines, from among the plurality of candidate paths, the candidate path that is closest to the current orientation and the current position of the combine 1 as the automatic traveling start path. Here, the vehicle control device 11 may set the search function to OFF on the corner reaping path. For example, when the combine 1 automatically travels along the corner reaping path for the second round, the vehicle control device 11 switches off the search function to prevent an inclined path from being determined as the automatic traveling start path. In this case, the vehicle control device 11 determines the work path R1 on the outer periphery of the field F as the automatic traveling start path. In addition, when the combine 1 stops after traveling along the work path R1, the vehicle control device 11 determines the first inclined path R21, which is on the outer periphery of the field F, as the automatic traveling start path out of the first inclined path R21 and the second inclined path R22.

Furthermore, when the automatic traveling start path is determined, the vehicle control device 11 sets a start position to the start end of the automatic traveling start path. Furthermore, when the combine 1 is stopped while traveling on a corner reaping path, the vehicle control device 11 may set the start position to the start end of the path where the travel was stopped.

(10)
When the combine 1 discharges grains stored in the grain storage tank 24 to a transport vehicle at a predetermined discharge position within the field F during operation, the vehicle control device 11 may control the combine 1 such that it does not transition to discharge work while working on the corner reaping path. For example, when the combine 1 travels in a circular motion, the vehicle control device 11 determines, before traveling along the corner reaping path, whether the total reaping amount, which is the sum of the reaping amount for one round of the outer peripheral path and the reaping amount for the corner reaping paths at each corner, can be stored in the grain storage tank 24 (whether there is space). When the vehicle control device 11 determines that the total reaping amount can be stored, the combine 1 travels one round of the outer peripheral path. On the other hand, when the vehicle control device 11 determines that the total reaping amount cannot be stored, the vehicle control device 11 generates a discharge path toward the discharge position at that point in time and moves the combine 1 along the discharge path to perform the discharge work. This prevents the need for discharge work during corner reaping work.

(11)
The vehicle control device 11 may perform processing to remove the inner work trajectory (the point cloud) from the polygonal shape (the external shape of the unworked area) defined by the work trajectory of the corner reaping work. For example, as shown in Fig. 35, in a polygonal shape including actual work trajectories K1, K2, and K3, when the point cloud of the work trajectory K2 is located to encroach on the inside of the polygonal shape, the vehicle control device 11 may remove the work trajectory K2 and replace it with a work trajectory K0 that connects to the work trajectories K1 and K3.

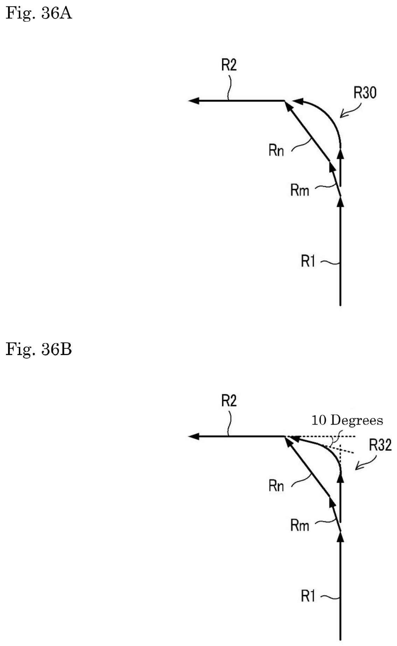

(12)
The generation processing unit 312 may generate the turning path after corner reaping work as follows. Fig. 36A shows an example of a corner reaping path. For example, the corner reaping path includes a work path R1, a first inclined path Rm, and a second inclined path Rn. When the combine 1 ends corner reaping work on the corner reaping path, the combine 1 travels along the movement path R3 toward the next work path R2. The generation processing unit 312 generates a movement path R3 including a turning path.

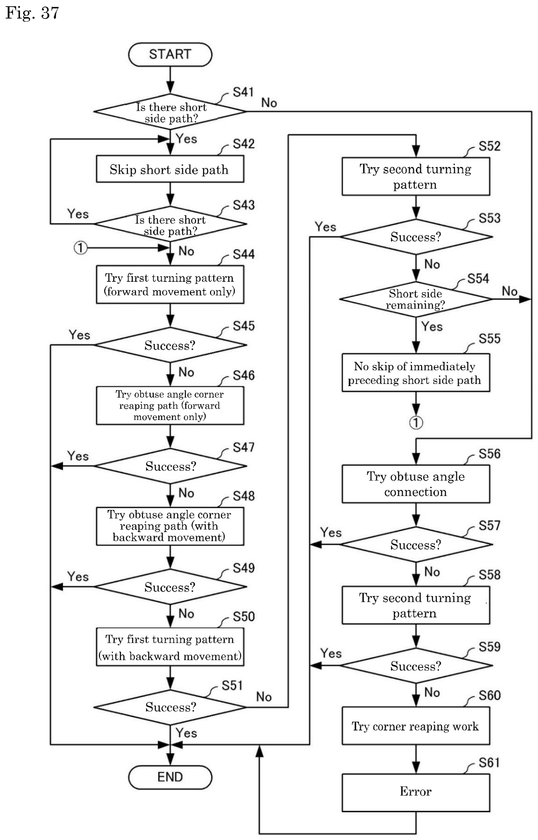

Specifically, the generation processing unit 312 generates a turning path in accordance with the procedure shown in Fig. 37. In step S41, the generation processing unit 312 determines whether the corner reaping path includes a path (a short side path) having a length less than a predetermined length. When the corner reaping path includes a short side path (S41: Yes), the generation processing unit 312 transitions the processing to step S42. When the corner reaping path does not include the short side path (S41: No), the generation processing unit 312 transitions the processing to step S56. In the example shown in Fig. 36A, a first inclined path Rm and a second inclined path Rn, which are short side paths, are included between the work path R1 and the work path R2.

In step S42, the generation processing unit 312 skips (removes) the short side path, and in step S43, determines whether there is a short side path included. In step S43, when the corner reaping path further includes a short side path (S43: Yes), the generation processing unit 312 transitions the processing to step S42 and skips the short side path. The generation processing unit 312 repeats the above processing and skips the short side path until the short side path is no longer included.

When the short side path is no longer included, the generation processing unit 312 tries a turning pattern that connects the work path R1 and the work path R2. Specifically, the generation processing unit 312 sequentially tries a plurality of turning patterns, determines a turning pattern that allows the combine 1 to move to the work path R2, that is, allows the combine 1 to directly face the work path R2 after turning, and generates a turning path.

First, in step S44, the generation processing unit 312 tries a first turning pattern (a plain turn) for forward travel only along the shortest path with a narrow turning range. As shown in Fig. 36A, when the combine 1 can move to the next work path R2 by a turning path R30 of the first turning pattern for forward travel only (S45: Yes), the generation processing unit 312 determines the turning path R30 of the first turning pattern (forward travel only). On the other hand, when the combine 1 cannot move to the next work path R2 by the turning path R30 of the first turning pattern (S45: No), that is, when the combine 1 cannot directly face the work path R2 after turning, the generation processing unit 312 transitions the processing to step S46.

In step S46, the generation processing unit 312 tries a third turning pattern (an obtuse angle corner reaping path) for forward travel only. For example, as shown in Fig. 36B, the generation processing unit 312 generates a third turning pattern (an obtuse angle corner reaping path) including a forward straight path that travels on an extension line of the work path R1, a forward turning path that connects to the forward straight path, and a forward straight path that connects to the forward turning path and is connected to the work path R2 at an obtuse angle (for example, 10 degrees). When the combine 1 can move to the next work path R2 by a turning path R32 of the third turning pattern (S47: Yes), the generation processing unit 312 determines the turning path R32 of the third turning pattern (forward travel only). On the other hand, when the combine 1 cannot move to the next work path R2 by the turning path R32 of the third turning pattern (S47: No), that is, when the combine 1 cannot directly face the work path R2 after turning, the generation processing unit 312 transitions the processing to step S48.

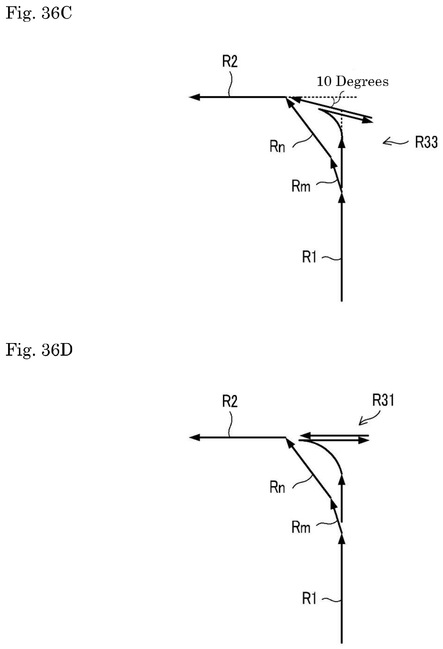

In step S48, the generation processing unit 312 tries a third turning pattern (an obtuse angle corner reaping path) including backward travel. For example, as shown in Fig. 36C, the generation processing unit 312 generates a third turning pattern (an obtuse angle corner reaping path) including a forward straight path that travels on an extension line of the work path R1, a forward turning path that connects to the forward straight path, a backward straight path that connects to the forward turning path, and a forward straight path that connects to the backward straight path and is connected to the work path R2 at an obtuse angle (for example, 10 degrees). When the combine 1 can move to the next work path R2 by a turning path R33 of the third turning pattern (S49: Yes), the generation processing unit 312 determines the turning path R33 of the third turning pattern (including backward travel). On the other hand, when the combine 1 cannot move to the next work path R2 by the turning path R33 of the third turning pattern (S49: No), that is, when the combine 1 cannot directly face the work path R2 after turning, the generation processing unit 312 transitions the processing to step S50.

In step S50, the generation processing unit 312 tries a first turning pattern (a plain turn) including backward travel. For example, as shown in Fig. 36D, after traveling along the corner reaping path, the generation processing unit 312 generates a turning path R31 of a first turning pattern including a forward straight path that travels on an extension line of the work path R1, a forward left turning path, a backward straight path, and a forward straight path. When the combine 1 can move to the next work path R2 by the turning path R31 of the first turning pattern (S51: Yes), the generation processing unit 312 determines the turning path R31 of the first turning pattern (including backward travel). On the other hand, when the combine 1 cannot move to the next work path R2 by the turning path R31 of the first turning pattern (S51: No), that is, when the combine 1 cannot directly face the work path R2 after turning, the generation processing unit 312 transitions the processing to step S52. The first turning pattern (forward movement only), the first turning pattern (with backward movement), the obtuse angle corner reaping path (forward movement only), and the obtuse angle corner reaping path (with backward movement) may be tried in any order.

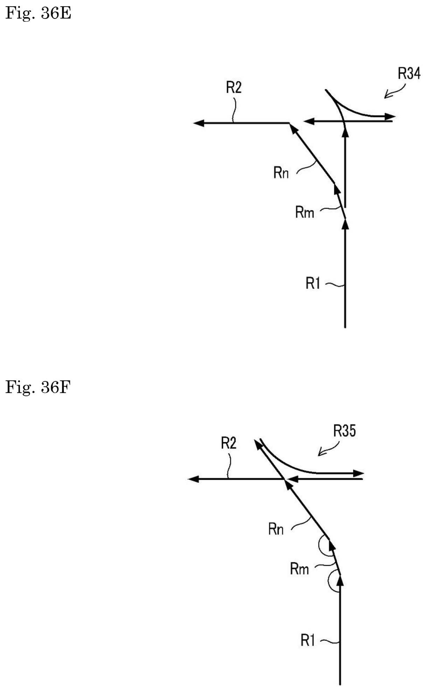

In step S52, the generation processing unit 312 tries a second turning pattern (an α turn) having a wider turning range than the first turning pattern. For example, as shown in Fig. 36E, after traveling along the corner reaping path, the generation processing unit 312 generates a turning path R34 of a second turning pattern including a forward straight path that travels on an extension line of the work path R1, a forward left turning path, a backward right turning path, a backward straight path, and a forward straight path. When the combine 1 can move to the next work path R2 by the turning path R34 of the second turning pattern (S53: Yes), the generation processing unit 312 determines the turning path R34 of the second turning pattern. On the other hand, when the combine 1 cannot move to the next work path R2 by the turning path R34 of the second turning pattern (S53: No), that is, when the combine 1 cannot directly face the work path R2 after turning, the generation processing unit 312 transitions the processing to step S54.

In step S54, the generation processing unit 312 determines whether a short side path remains in the corner reaping path, and when a short side path remains (S54: Yes), the generation processing unit 312 transitions the processing to step S55, and when no short side path remains (S54: No), the generation processing unit 312 transitions the processing to step S56.

In step S55, the generation processing unit 312 restores the immediately preceding short side path that was skipped. Specifically, the skip of the first inclined path Rm (the short side path) among the corner reaping paths shown in Fig. 36A is restored. Thereafter, the processing transitions to step S44, where the generation processing unit 312 tries each turning pattern to generate a path for moving from the work path R1 to the first inclined path Rm.

In step S56, the generation processing unit 312 tries a third turning pattern (an obtuse angle connection path) set based on the connection angle for two consecutive paths. For example, as shown in Fig. 36F, when the connection angle between the work path R1 and the first inclined path Rm is an obtuse angle, the generation processing unit 312 tries the third turning pattern (the obtuse angle connection path). When the combine 1 can move to the next first inclined path Rm by the turning path of the third turning pattern (S57: Yes), the generation processing unit 312 determines the turning path of the third turning pattern. On the other hand, when the combine 1 cannot move to the next first inclined path Rm by the turning path of the third turning pattern (S57: No), that is, when the combine 1 cannot directly face the first inclined path Rm after turning, the generation processing unit 312 transitions the processing to step S58.

In step S58, the generation processing unit 312 tries the second turning pattern (the α turn) for two consecutive paths. For example, as shown in Fig. 36F, when the combine 1 can move from the second inclined path Rn to the next work path R2 by a turning path R35 of the second turning pattern (S59: Yes), the generation processing unit 312 determines the turning path R35 of the second turning pattern. On the other hand, when the combine 1 cannot move to the next work path R2 by the turning path R35 of the second turning pattern (S59: No), that is, when the combine 1 cannot directly face the work path R2 after turning, the generation processing unit 312 transitions the processing to step S60.

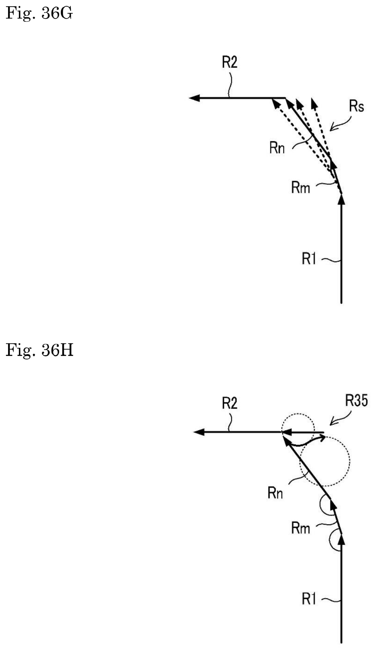

In step S60, the generation processing unit 312 performs corner reaping work to secure a turning area, as shown in Fig. 36G. Specifically, the generation processing unit 312 further generates an inclined path Rs in addition to the first inclined path Rm and the second inclined path Rn, and executes the corner reaping work. When a turning path cannot be determined even in the processing of step S60, the generation processing unit 312 outputs an error (step S61) and ends the processing.

When a turning path of any one of the turning patterns is determined, the generation processing unit 312 generates a movement path R3 including the determined turning path. In this way, the generation processing unit 312 does not generate a turning pattern (a turning path) by determining the already cut area and the uncut area, but rather tries predetermined turning patterns, determines a possible turning pattern, and generates a turning path.

As another embodiment, the generation processing unit 312 may generate a turning path that causes the combine 1 to make a pivot turn at the terminal end of the second inclined path Rn in Fig. 36F and enter the work path R2. Furthermore, the generation processing unit 312 may generate a turning path R35 including a right backward turning path, a left backward turning path, and a forward straight path from the terminal end of the second inclined path Rn, as shown in Fig. 36H.

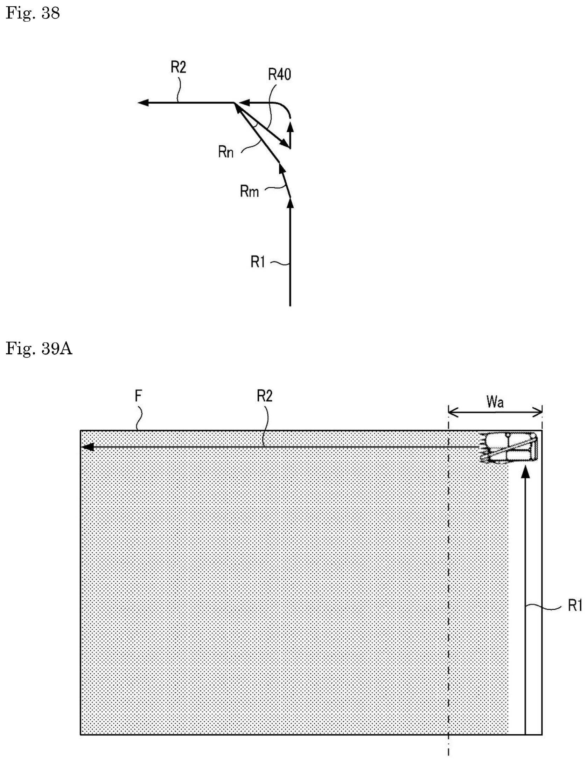

Furthermore, as shown in Fig. 38, when turning after traveling on the second inclined path Rn, the generation processing unit 312 may set a backward path R40 at a predetermined angle with respect to the second inclined path Rn. By increasing the predetermined angle, the distance of the backward path R40 can be shortened.

(13)
In the embodiment shown in (12) above, the generation processing unit 312 tries predetermined turning patterns to determine a possible turning pattern, and generates a turning path according to the turning pattern. As another embodiment, the generation processing unit 312 may determine an already cut area and an uncut area, determine a turning pattern, and generate a turning path according to the turning pattern.

Specifically, the generation processing unit 312 determines whether the reaping work at a corner of the field F has been completed up to a predetermined position inside the field F, and when it is determined that the reaping work at the corner of the field F has not been completed up to the predetermined position, the generation processing unit 312 generates a corner reaping path (a corner work path of the present invention) for performing the reaping work at the corner. The corner reaping path includes one or more inclined paths that are inclined with respect to the outer edges of the field F.

For example, as shown in Fig. 39A, when the combine 1 moves from the work path R1 to the work path R2, a width Wa needs to be secured in the corner area of the work paths R1 and R2 such that the combine 1 can turn (change a direction). When the width Wa that allows turning cannot be secured, there is a problem that unworked areas (uncut sites) will be trampled when turning. In other words, the predetermined position is a position where the combine 1 can directly face the work path R2 when it changes a direction at the corner toward the next work path R2, and is a position within the width Wa from the outer end of the field F. In addition, when the outermost work path R1 is set at a position with a predetermined margin (a safety margin) inward from the outer end of the field F as a work end (a boundary line), the predetermined position will be a position of a width Wa from the work end (the boundary line). Furthermore, when the outermost work path R1 is set at a position outside the outer end of the field F (a position where jump-out is permitted) as a work end (a boundary line), the predetermined position will be a position of a width Wa from the work end (the boundary line).

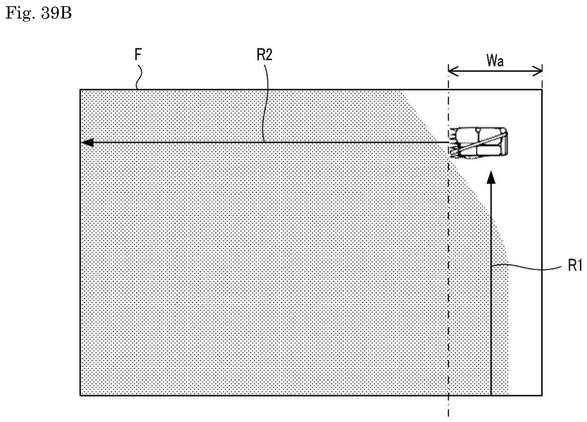

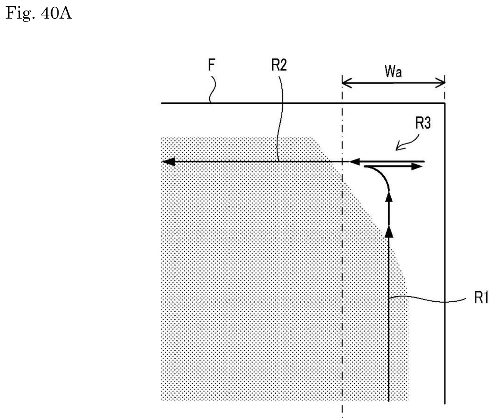

In addition, when the generation processing unit 312 determines that the reaping work at the corner of the field F has been completed up to the predetermined position (the width Wa), the generation processing unit 312 generates a movement path R3 (a direction change path) for changing direction of the combine 1 at the corner. For example, as shown in Fig. 39B, when the reaping work at the corner has been completed up to the width Wa in the first pass on the outermost periphery of the field F, the generation processing unit 312 generates a movement path R3 for moving from the work path R1 to the work path R2 at the corner in the second pass. Specifically, as shown in Fig. 40A, the generation processing unit 312 generates a movement path R3 including a turning path of a turning pattern including a forward straight path that travels on an extension line of the work path R1, a forward left turning path, a backward straight path, and a forward straight path.

In this way, when it is determined that the work at the corner has been completed up to the predetermined position, the generation processing unit 312 may generate the movement path R3 without generating a corner reaping path. Accordingly, when corner reaping work is not required, the combine 1 can work along the work path R1 without performing corner reaping work, and then change direction by traveling along the movement path R3 toward the work path R2 (see Fig. 40A).

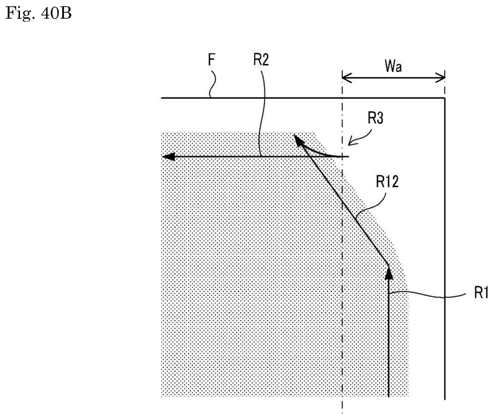

As another embodiment, as shown in Fig. 40B, the generation processing unit 312 may generate an inclined work path R12 (a corner reaping path) that follows the corner reaping work marks of the first pass, and generate a turning path (a movement path R3) that connects to the inclined work path R12. Specifically, the generation processing unit 312 generates a movement path R3 including a turning path of a turning pattern including a right backward turning path, a backward straight path, and a forward straight path that connect to the inclined work path R12. This allows the combine 1 to perform corner reaping work along the already cut area (the uncut area) and then turn around and move to the work path R2.

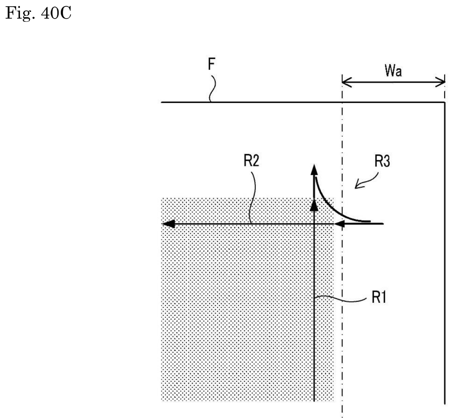

As another embodiment, as shown in Fig. 40C, when an area is secured at a corner where direction can be changed by turning backward, the generation processing unit 312 may generate a movement path R3 including the turning path of the turning pattern. The generation processing unit 312 may determine a turning pattern (a direction change pattern) for changing the direction of the combine 1 according to the width of the work completion area (the width of the possible turning area) at the corner.

In the above configuration, the generation processing unit 312 may execute a process of determining whether work at the corners has been completed up to the predetermined position (the width Wa) after work on the outermost periphery of the field F has been completed. For example, when the field F is registered after traveling and working on the outermost periphery of the field has been completed, and the operator creates a path after registering the field, the generation processing unit 312 determines whether the reaping work has been completed up to the predetermined position at the corner of the reaping target area.

In addition, when reaping work has been completed up to the predetermined position, the default setting is to generate a turning path as shown in Fig. 40A at the corner, and depending on the arbitrary setting of the operator, instead of the turning path, a corner reaping path may be generated to perform reaping work further inward at the corner of the reaping target area. In addition, the work and operation at the corner of the reaping target area may be settable such that reaping work and turning traveling can be performed by manual traveling and operation by the operator. For example, the setting may be configured such that the reaping work is performed by automatic traveling up to the corner, and once the corner is reached, the vehicle temporarily stops to switch to manual travel mode.

Similarly, when the reaping work has not been completed up to the predetermined position, the default setting is to generate a corner reaping path that cuts the corner of the reaping target area by automatic traveling until the corner of the reaping target area reaches the predetermined position, and depending on the arbitrary setting of the operator, the work and operation at the corner of the reaping target area may be settable such that reaping work and turning traveling can be performed by manual traveling and operation by the operator.

Furthermore, the generation processing unit 312 may display information that allows the predetermined position to be identified on the operation display unit 33 (an example of a display device of the present invention). For example, the generation processing unit 312 may display a line indicating the position of the width Wa shown in Figs. 39A and 39B superimposed on a map screen showing the field F. Accordingly, when it is necessary to perform reaping work to a certain position by manual traveling before starting reaping work by automatic traveling, the line can be used as a guide for the position at which reaping work by manual traveling will be completed. The generation processing unit 312 may display the line at the estimated position of the predetermined position until the field shape is registered by traveling on the outermost periphery and performing reaping work.

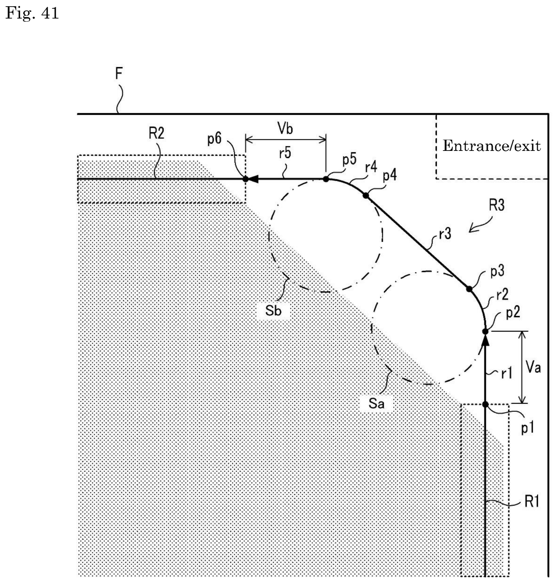

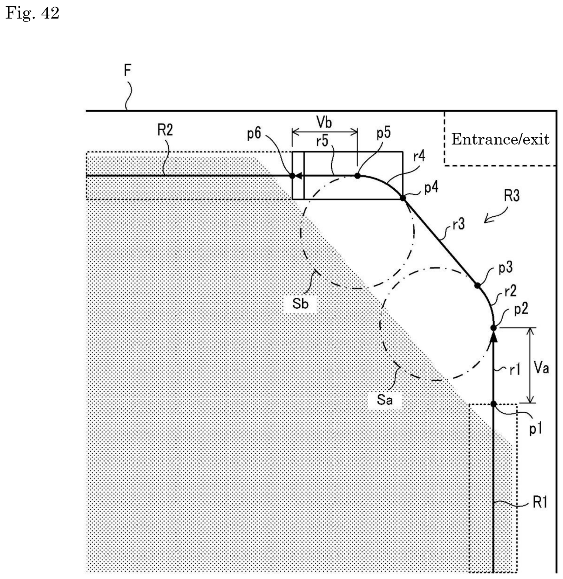

(14)
The generation processing unit 312 may generate the turning path (the movement path R3) after the corner reaping work by the method shown in Figs. 41 and 42. Fig. 41 shows a work path R1 after the corner reaping work ends and a work path R2 which is the target path for the next reaping work.

First, the generation processing unit 312 sets a terminal end p1 of the work path R1, and sets a turning start point p2 at a position in the direction of travel by a start point side distance Va from the terminal end p1. Here, the terminal end p1 of the work path R1 is set to the tip position of the uncut area adjacent to the work path R1 after the corner reaping work. The start point side distance Va is a distance obtained by adding a predetermined first margin (for example, 0.5 m) to the distance from the center position of the crawler of the combine 1 to the rear end of the combine 1. That is, the generation processing unit 312 sets the turning start point p2 to the center position of the crawler when the position obtained by adding the first margin to the rear end of the combine 1 reaches the terminal end p1.

Next, the generation processing unit 312 sets a turning circle Sa having a preset turning radius at a position tangent to the turning start point p2.

Next, the generation processing unit 312 sets a start end p6 of the work path R2, and sets a turning end point p5 at a position behind the start end p6 by an end point side distance Vb. Here, the start end p6 of the work path R2 is set to the tip position of the uncut area in the work width of the work path R2 after the corner reaping work. The end point side distance Vb is a distance obtained by adding a predetermined second margin (for example, 0.5 m) to the distance from the center position of the crawler of the combine 1 to a reaping tip position (a cutting blade position) of the combine 1. That is, the generation processing unit 312 sets the turning end point p5 to the center position of the crawler when the position obtained by adding the second margin to the reaping tip position reaches the start end p6. The second margin may be the same distance as the first margin or may be a different distance.

Next, the generation processing unit 312 sets a turning circle Sb having a preset turning radius at a position tangent to the turning end point p5. The turning radius of the turning circle Sa and the turning radius of the turning circle Sb may be the same or different. In addition, the operation control unit 31 may be able to adjust the turning radius (size of the turning circles Sa and Sb) depending on the position of the field outline, the size of the vehicle (the combine 1), the turning radius (or the turning angle) of the vehicle itself, and the like.

Next, the generation processing unit 312 generates a start point side turning path r2 along the turning circle Sa and an end point side turning path r4 along the turning circle Sb, and also generates a straight path r3 (a tangent to the turning circles Sa and Sb) connecting the start point side turning path r2 and the end point side turning path r4.

In this way, the generation processing unit 312 generates a movement path R3 between the work paths R1 and R2, which includes a straight path r1 with the terminal end of the work path R1 as the start end, a start point side turning path r2 with the terminal end of the straight path r1 (the turning start point p2) as the start end, a straight path r3 with the terminal end of the start point side turning path r2 (a turning end point p3) as the start end, an end point side turning path r4 with the terminal end of the straight path r3 (a turning start point p4) as the start end, and a straight path r5 with the terminal end of the end point side turning path r4 (the turning end point p5) as the start point and connecting to the start end p6 of the work path R2.

The generation processing unit 312 may generate the movement path R3 at the point in time when the corner reaping work has ended, or may generate the movement path R3 when generating the corner reaping path.

Here, in the above configuration, for example, when the range of the worked area (the already worked area) of the corner reaping work is not sufficient, the combine 1 may jump out of the field or enter the entrance/exit when traveling along the movement path R3. For example, as shown in Fig. 42, when the already worked area is narrow, if the combine 1 travels along the movement path R3 generated by the above configuration, there is a problem that the combine 1 may jump out of the field or enter the entrance/exit.

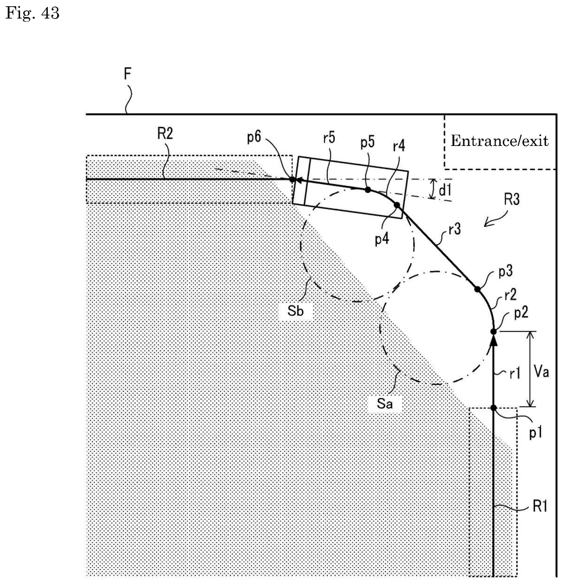

Therefore, the generation processing unit 312 generates a straight path r5 at a predetermined angle d1 with respect to the work path R2, as shown in Fig. 43. Specifically, the generation processing unit 312 generates a straight path r5 that passes through the start end p6 of the work path R2 and is at a predetermined angle d1 with respect to the work path R2. In addition, the generation processing unit 312 sets the center position of the crawler when the tip position of the reaping unit 15 (the divider 28 (see Fig. 2)) is aligned with the boundary between the unworked area and the already worked area to the terminal end of the end point side turning path r4 (the turning end point p5). The tip position of the divider 28 is located at the very front of the vehicle, further forward than the cutting blade.

For example, the generation processing unit 312 sets the predetermined angle d1 to 5 degrees and generates a straight path r5. Furthermore, in a case where the combine 1 jumps out of the field or enters the entrance/exit even with the movement path R3 when the predetermined angle d1 is set to 5 degrees, the generation processing unit 312 sets the predetermined angle d1 to an angle equal to or greater than 5 degrees (for example, 10 degrees) and regenerates the straight path r5. The generation processing unit 312 adjusts the predetermined angle d1 until the combine 1 can turn appropriately, and generates a straight path r5. According to the movement path R3 shown in Fig. 43, the combine 1 turns along the end point side turning path r4, then travels straight along the inclined straight path r5 and enters the work path R2.

However, when the predetermined angle d1 is set too large, there is a problem that the steering angle when entering the work path R2 becomes too large. Therefore, when the predetermined angle d1 is equal to or greater than a threshold, the generation processing unit 312 generates a movement path R3 including a backward path as shown below.

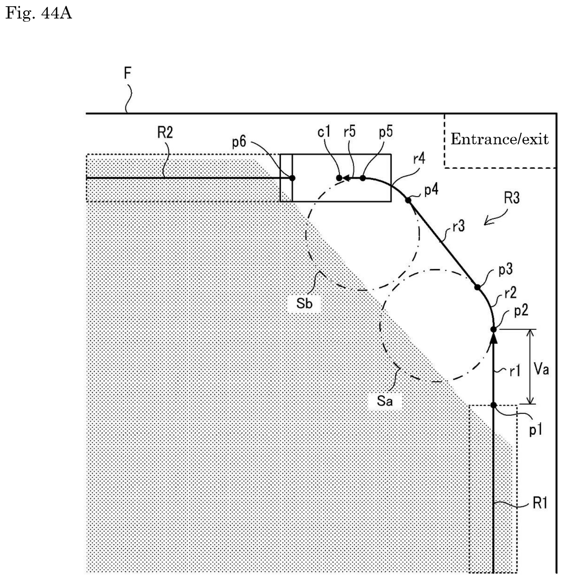

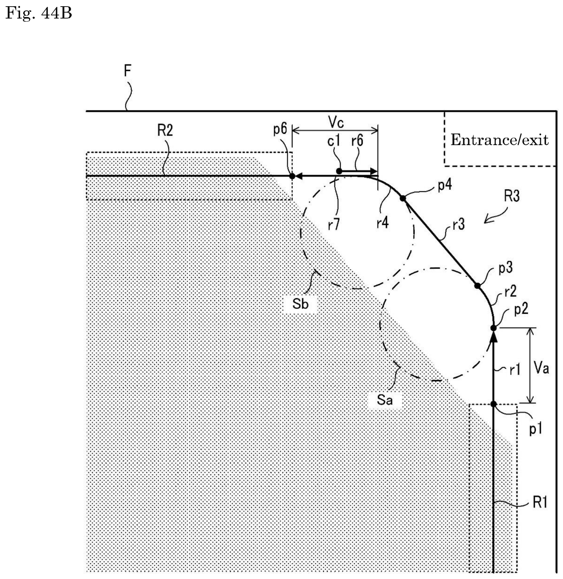

For example, as shown in Fig. 44A, the generation processing unit 312 sets a position c1 to the center position of the crawler when the reaping tip position (the cutting blade position) is aligned with the boundary between the unworked area and the already worked area, and generates a straight path r5 from the terminal end of the end point side turning path r4 (the turning end point p5), which has the same configuration as that shown in Fig. 42, to the position c1. Furthermore, the generation processing unit 312 generates a straight path r6 in the backward direction, with the terminal end (the position c1) of the straight path r5 as the start end, as shown in Fig. 44B. In addition, the generation processing unit 312 sets a distance Vc from the start end p6 of the work path R2 to the terminal end of the straight path r6 to a distance obtained by adding a third margin (for example, 1.5 m) longer than the second margin to the distance from the center position of the crawler of the combine 1 to the reaping tip position of the combine 1. The generation processing unit 312 then generates a straight path r7 with the terminal end of the straight path r6 as the start end and connecting to the start end p6 of the work path R2. According to the movement path R3 shown in Figs. 44A and 44B, the combine 1 turns along the end point side turning path r4, travels straight along the straight path r5 (see Fig. 44A), then travels backward along the straight path R6 (see Fig. 44B), and then travels straight along the straight path r7 to enter the work path R2.

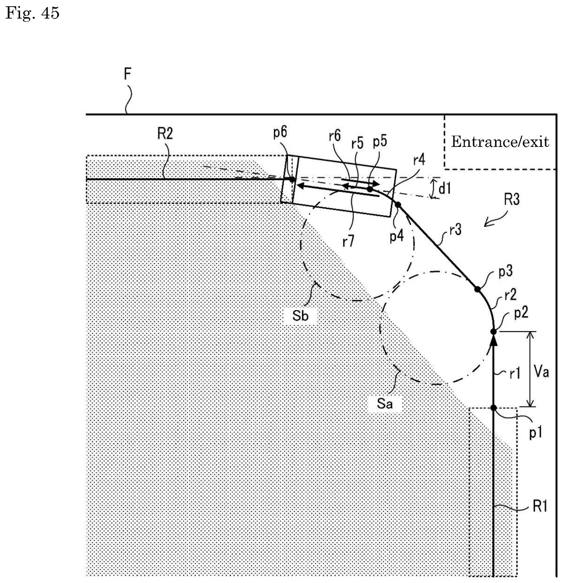

When the combine 1 cannot turn appropriately even with the movement path R3 shown in Figs. 44A and 44B, the generation processing unit 312 inclines the straight path r6 in the backward direction by a predetermined angle d1 with respect to the work path R2, as shown in Fig. 45. Specifically, the generation processing unit 312 inclines a straight path r6, which has the same configuration as that shown in Fig. 44B, by 5 degrees with respect to the work path R2. Furthermore, in a case where the combine 1 jumps out of the field or enters the entrance/exit even with the movement path R3 when the predetermined angle d1 is set to 5 degrees, the generation processing unit 312 sets the predetermined angle d1 to, for example, 10 degrees and regenerates the straight path r6.

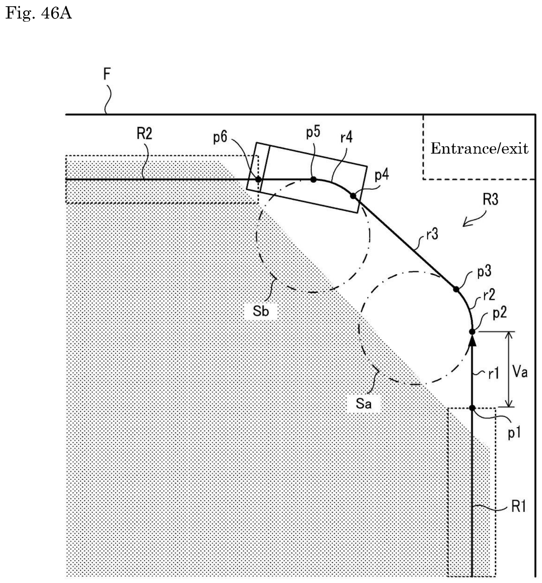

As another embodiment, for example, as shown in Fig. 46A, it is conceivable that the generation processing unit 312 generates a movement path R3 in which the combine 1 does not jump out of the field or enter an entrance/exit when traveling along the movement path R3. In this case, when the combine 1 travels along the movement path R3, as shown in Fig. 46A, the combine 1 will not be able to directly face the work path R2 when entering the work path R2, and there is a concern that the tip position (the divider 28) of the reaping unit 15 will push down the grain stalks in the uncut area.

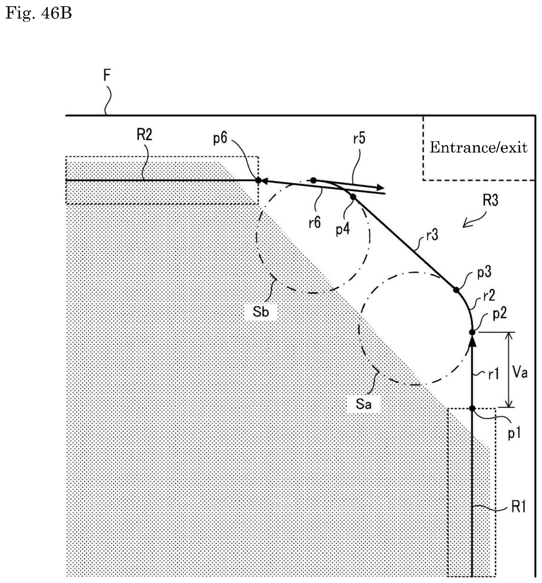

In this case, the generation processing unit 312 generates a straight path r5 in the backward direction from a state in which the vehicle orientation of the combine 1 is facing diagonally with respect to the work path R2, as shown in Fig. 46B, and generates a straight path r6 that connects the terminal end of the straight path r5 to the start end p6 of the work path R2. Accordingly, the combine 1 turns along the end point side turning path r4, then travels backward along the straight path r5, and then travels straight along the straight path r6 to enter the work path R2.

In addition, when it is difficult to move to the work path R2 even on the movement path R3 including backward travel, or when the operator does not permit backward travel when turning between work paths, the generation processing unit 312 generates a corner reaping path which can secure a wide corner reaping area (a turning area) at the corner.

As described above, the generation processing unit 312 may determine a turning pattern (a turning path) based on the already cut area and the uncut area, and generate the turning path. Furthermore, the vehicle control device 11 may cause the combine 1 to automatically travel along a turning path generated based on the already cut area and the uncut area. Specifically, the generation processing unit 312 determines whether the work at the corner of the field F has been completed up to a predetermined position (the width Wa) inside the field F, and when it is determined that the work at the corner has not been completed up to the predetermined position, the generation processing unit 312 generates a corner reaping path for performing the work at the corner. Furthermore, when it is determined that the work at the corner has been completed up to the predetermined position, the generation processing unit 312 generates a direction change path (the movement path R3) without generating a corner reaping path.

According to the above configuration, an area for the combine 1 to change direction at the corner can be secured, thereby preventing the combine 1 from contacting or trampling the object to be reaped. Therefore, it is possible to improve the work accuracy when working at the corner of the field F.

In each of the above-described embodiments, a combine 1 is given as an example of a work vehicle, but the work vehicle of the present invention is not limited to the combine 1 and may be various work vehicles such as a tractor, a rice transplanter, or a construction machine. Furthermore, in each of the above-described embodiments, a configuration has been described in which the work vehicle manually travels (manually steers) in the outermost peripheral area F0 and automatically travels (automatically steers) in the inner peripheral area F1, but the present invention may also be configured such that the work vehicle automatically travels (automatically steers) in both the outermost peripheral area F0 and the inner peripheral area F1.

### [Additional Note 1 of Invention]

Hereinafter, an outline of the invention extracted from the above-described embodiment (the above-described [method for generating inner peripheral path Rb (automatic travel path) (second configuration)]) will be additionally described. Note that configurations and processing functions described in the following additional notes can be selected and freely combined.

### <Additional Note 1>

A path generation method for generating a path for a work vehicle to perform predetermined work on a work target at a corner of a work area, the path generation method including:
generating a first path based on an outermost peripheral position of an unworked area in the work area or an outer end of the work area; and
generating a second path inside the first path based on the first path, at least a part of which has a predetermined inclination angle with respect to the first path.

### <Additional Note 2>

The path generation method according to Additional Note 1, in which
the first path and the second path are automatic travel paths generated in an inner area inside an outermost peripheral area of the work area, and
work in the inner area is performed after work in the outermost peripheral area ends.

### <Additional Note 3>

The path generation method according to Additional Note 2, further including generating the first path based on the outermost peripheral position of the unworked area specified when working on the outermost peripheral area.

### <Additional Note 4>

The path generation method according to Additional Note 2 or 3, further including generating the first path based on the outer end of the work area specified when working on the outermost peripheral area.

### <Additional Note 5>

The path generation method according to any one of Additional Notes 1 to 4, further including determining the inclination angle such that a body of the work vehicle does not jump out of the work area when the work vehicle moves from the first path to the second path.

### <Additional Note 6>

The path generation method according to any one of Additional Notes 1 to 5, further including determining the inclination angle based on a work width corresponding to the first path, a work width corresponding to the second path, and a distance that the work vehicle travels backward after completing work on the first path.

### <Additional Note 7>

The path generation method according to any one of Additional Notes 1 to 6, further including setting the inclination angle according to an operation of an operator.

### <Additional Note 8>

The path generation method according to Additional Note 7, further including causing an operation terminal to display an already worked area where the work has been ended and a predicted work area when the work is performed along the first path and the second path, and receiving an operation to set the inclination angle from the operator.

### <Additional Note 9>

The path generation method according to any one of Additional Notes 1 to 8, in which
the second path includes a plurality of inclined paths, and
the path generation method further includes:
generating a first inclined path inside the first path and having a first inclination angle with respect to the first path, and
generating a second inclined path inside the first inclined path and having a second inclination angle that is greater than the first inclination angle with respect to the first path.

### <Additional Note 10>

The path generation method according to any one of Additional Notes 1 to 9, in which when a gap occurs between a work width corresponding to the first path and the outermost peripheral position, the first path is shifted to eliminate the gap.

### <Additional Note 11>

The path generation method according to any one of Additional Notes 1 to 10, further including:
setting a work target line representing an outermost peripheral area of the work area, and
determining the inclination angle based on the work target line.

### <Additional Note 12>

A path generation program for generating a path for performing predetermined work on a work target at a corner of a work area, the path generation program for causing one or more processors to execute:
generating a first path based on an outermost peripheral position of an unworked area in the work area or an outer end of the work area; and
generating a second path inside the first path based on the first path, at least a part of which has a predetermined inclination angle with respect to the first path.

### <Additional Note 13>

A path generation system for generating a path for performing predetermined work on a work target at a corner of a work area,
in which the path generation system generates a first path based on an outermost peripheral position of an unworked area in the work area or an outer end of the work area, and generates a second path inside the first path based on the first path, at least a part of which has a predetermined inclination angle with respect to the first path.

### [Additional Note 2 of Invention]

Hereinafter, an outline of the invention extracted from the above-described embodiment (the above-described [method for controlling automatic traveling of combine 1 (third configuration)]) will be additionally described. Note that configurations and processing functions described in the following additional notes can be selected and freely combined.

### <Additional Note 1>

An automatic traveling method for causing a work vehicle to automatically travel along a target path including a plurality of work paths on which the work vehicle automatically travels while performing predetermined work in a work area, the automatic traveling method including
determining, for each work path, whether to cause the work vehicle to execute automatic travel, based on work site information including information on an unworked site in the work area where the work has not ended and information on an already worked site where the work has ended.

### <Additional Note 2>

The automatic traveling method according to Additional Note 1, further including determining the work path as a path on which the work vehicle is not caused to automatically travel when an entire work target area corresponding to the work path is the already worked site.

### <Additional Note 3>

The automatic traveling method according to Additional Note 1 or 2, further including determining the work path as a path on which the work vehicle is caused to automatically travel when at least a part of a work target area corresponding to the work path is the unworked site.

### <Additional Note 4>

The automatic traveling method according to Additional Note 3, further including causing the work vehicle to automatically travel to a terminal end of the unworked site in the work target area corresponding to the work path.

### <Additional Note 5>

The automatic traveling method according to Additional Note 3 or 4, in which even when the work path is determined as a path on which the work vehicle is caused to automatically travel, the work path is not caused to automatically travel when a predetermined operation by an operator is received.

### <Additional Note 6>

The automatic traveling method according to any one of Additional Notes 1 to 5, further including determining the unworked site and the already worked site based on a position where a work implement passes when the work vehicle is traveling, and registering a determination result in the work site information.

### <Additional Note 7>

The automatic traveling method according to Additional Note 6, further including dividing the work area into a plurality of sections, and determining whether the work area is the unworked site or the already worked site for each section.

### <Additional Note 8>

The automatic traveling method according to any one of Additional Notes 1 to 7, in which the plurality of work paths are generated corresponding to corners of the work area and include a first path and a second path inside the first path and having a predetermined inclination angle with respect to the first path.

### <Additional Note 9>

An automatic traveling program for causing a work vehicle to automatically travel along a target path including a plurality of work paths on which the work vehicle automatically travels while performing predetermined work in a work area, the automatic traveling program for causing one or more processors to execute:
determining, for each work path, whether to cause the work vehicle to execute automatic travel, based on work site information including information on an unworked site in the work area where the work has not ended and information on an already worked site where the work has ended.

### <Additional Note 10>

An automatic traveling system for causing a work vehicle to automatically travel along a target path including a plurality of work paths on which the work vehicle automatically travels while performing predetermined work in a work area,
in which the automatic traveling system determines, for each work path, whether to cause the work vehicle to execute automatic travel, based on work site information including information on an unworked site in the work area where the work has not ended and information on an already worked site where the work has ended.

### [Additional Note 3 of Invention]

Hereinafter, an outline of the invention extracted from the above-described embodiment (the above-described [operation control of work implement (reaping unit 15) (fourth configuration)]) will be additionally described. Note that configurations and processing functions described in the following additional notes can be selected and freely combined.

### <Additional Note 1>

An automatic traveling method for causing a work implement to perform predetermined work while causing a work vehicle to automatically travel along a target path in a work area, the automatic traveling method including
controlling an operation of the work implement based on work site information including information on an unworked site in the work area where the work has not ended and information on an already worked site where the work has ended.

### <Additional Note 2>

The automatic traveling method according to Additional Note 1, further including setting the work implement to a work position before the work vehicle enters the unworked site from the already worked site.

### <Additional Note 3>

The automatic traveling method according to Additional Note 1 or 2, further including setting the work implement to a non-work position after the work vehicle enters the already worked site from the unworked site.

### <Additional Note 4>

The automatic traveling method according to any one of Additional Notes 1 to 3, further including setting the work implement to a non-work position in a case where a distance from a start end of the already worked site to a start end of a next unworked site is equal to or greater than a predetermined distance when the work vehicle enters the already worked site from the unworked site.

### <Additional Note 5>

The automatic traveling method according to Additional Note 4, further including setting the work implement to a first position closer to a work position than the non-work position, or to a work position in a case where the distance from the start end of the already worked site to the start end of the next unworked site is less than the predetermined distance when the work vehicle enters the already worked site from the unworked site.

### <Additional Note 6>

The automatic traveling method according to Additional Note 5, in which
the work implement is movable up and down between a highest position, which is the non-work position, and a lowest position, which is the work position, and
the first position is the lowest position or a position between the lowest position and the highest position.

### <Additional Note 7>

The automatic traveling method according to any one of Additional Notes 1 to 6, further including determining an operation timing of the work implement based on a travel speed of the work vehicle and a movement time required for the work implement to move from a non-work position to a work position.

### <Additional Note 8>

The automatic traveling method according to any one of Additional Notes 1 to 7, further including controlling an operation of the work implement based on the work site information when the work vehicle is caused to automatically travel along a corner reaping path generated for a corner of the work area.

### <Additional Note 9>

The automatic traveling method according to Additional Note 8, further including setting the work implement to a first non-work position and causing the work vehicle to travel backward in the corner reaping path when the work vehicle enters the already worked site from the unworked site.

### <Additional Note 10>

The automatic traveling method according to Additional Note 8 or 9, further including setting the work implement to a highest position on a final path of the corner reaping path when the work vehicle enters the already worked site from the unworked site.

### <Additional Note 11>

The automatic traveling method according to any one of Additional Notes 8 to 10, in which the corner reaping path includes a first path and a second path inside the first path and having a predetermined inclination angle with respect to the first path.

### <Additional Note 12>

An automatic traveling program for causing a work implement to perform predetermined work while causing a work vehicle to automatically travel along a target path in a work area, the automatic traveling program for causing one or more processors to execute:
controlling an operation of the work implement based on work site information including information on an unworked site in the work area where the work has not ended and information on an already worked site where the work has ended.

### <Additional Note 13>

An automatic traveling system for causing a work implement to perform predetermined work while causing a work vehicle to automatically travel along a target path in a work area,
in which the automatic traveling system controls an operation of the work implement based on work site information including information on an unworked site in the work area where the work has not ended and information on an already worked site where the work has ended.

### [Additional Note 4 of Invention]

Hereinafter, an outline of the invention extracted from the above-described embodiment (the above-described (13)) will be additionally described. Note that configurations and processing functions described in the following additional notes can be selected and freely combined.

### <Additional Note 1>

A path generation method for generating an automatic travel path for a work vehicle to perform predetermined work on a work target in a work area, the path generation method including:
determining whether work at a corner of the work area has been completed up to a predetermined position inside the work area; and
generating a corner work path for performing the work at the corner when it is determined that the work at the corner of the work area has not been completed up to the predetermined position.

### <Additional Note 2>

The path generation method according to Additional Note 1, further including generating a direction change path for changing a direction of the work vehicle at the corner when it is determined that the work at the corner of the work area has been completed up to the predetermined position.

### <Additional Note 3>

The path generation method according to Additional Note 1 or 2, further including generating a direction change path for changing a direction of the work vehicle at the corner without generating the corner work path when it is determined that the work at the corner of the work area has been completed up to the predetermined position.

### <Additional Note 4>

The path generation method according to any one of Additional Notes 1 to 3, further including determining whether the work at the corner has been completed up to the predetermined position after work on an outermost periphery of the work area has been completed.

### <Additional Note 5>

The path generation method according to any one of Additional Notes 1 to 4, further including displaying information that allows the predetermined position to be identified on a display device.

### <Additional Note 6>

The path generation method according to any one of Additional Notes 1 to 5, in which the predetermined position is a position where the work vehicle can directly face a next work path when the work vehicle changes a direction at the corner toward the next work path.

### <Additional Note 7>

The path generation method according to any one of Additional Notes 1 to 6, in which the corner work path includes one or more inclined paths that are inclined with respect to an outer edge of the work area.

### <Additional Note 8>

The path generation method according to any one of Additional Notes 1 to 7, further including determining a direction change pattern for changing a direction of the work vehicle according to a width of a work completion area at the corner.

### <Additional Note 9>

A path generation program for generating an automatic travel path for a work vehicle to perform predetermined work on a work target in a work area, the path generation program for causing one or more processors to execute:
determining whether work at a corner of the work area has been completed up to a predetermined position inside the work area; and
generating a corner work path for performing the work at the corner when it is determined that the work at the corner of the work area has not been completed up to the predetermined position.

### <Additional Note 10>

A path generation system for generating an automatic travel path for a work vehicle to perform predetermined work on a work target in a work area, the path generation system including a generation processing unit configured to:
determine whether work at a corner of the work area has been completed up to a predetermined position inside the work area; and
generate a corner work path for performing the work at the corner when it is determined that the work at the corner of the work area has not been completed up to the predetermined position.

Note that the present invention can also employ a configuration in which the respective features of [Additional Notes 1 to 4 of Invention] are appropriately combined.

### LIST OF REFERENCE SIGNS

- 10: Traveling system (automatic traveling system)
- 1: Combine (work vehicle)
- 11: Vehicle control device
- 15: Reaping unit
- 111: Travel processing unit
- 112: Work processing unit
- 113: Registration processing unit
- 3: Operation terminal
- 31: Operation control unit
- 311: Setting processing unit
- 312: Generation processing unit
- 313: Output processing unit
- F: Field (work area)
- F0: Outermost peripheral area
- F1: Inner peripheral area
- Fc1: Outermost peripheral position
- C1: Work site information
- S: Start position
- G: End position
- H0: Non-working height
- H1: Working height
- H2: Intermediate height
- K: Section
- L0: Reference line
- L1: Inclined path
- L2: Inclined path
- La: Outer line
- Ls: Work target line
- R: Target path
- R1: Work path (first path)
- R21: First inclined path (second path)
- R22: Second inclined path (second path)
- Ra: Outermost peripheral path
- Rb: Inner peripheral path (automatic travel path)

## Claims

1. A path generation method for generating an automatic travel path for a work vehicle to perform predetermined work on a work target in a work area, the path generation method comprising:
determining whether work at a corner of the work area has been completed up to a predetermined position inside the work area; and
generating a corner work path for performing the work at the corner when it is determined that the work at the corner of the work area has not been completed up to the predetermined position.

2. The path generation method according to claim 1, further comprising generating a direction change path for changing a direction of the work vehicle at the corner when it is determined that the work at the corner of the work area has been completed up to the predetermined position.

3. The path generation method according to claim 1, further comprising generating a direction change path for changing a direction of the work vehicle at the corner without generating the corner work path when it is determined that the work at the corner of the work area has been completed up to the predetermined position.

4. The path generation method according to claim 1, further comprising determining whether the work at the corner has been completed up to the predetermined position after work on an outermost periphery of the work area has been completed.

5. The path generation method according to claim 1, further comprising displaying information that allows the predetermined position to be identified on a display device.

6. The path generation method according to claim 1, wherein the predetermined position is a position where the work vehicle can directly face a next work path when the work vehicle changes a direction at the corner toward the next work path.

7. The path generation method according to claim 1, wherein the corner work path includes one or more inclined paths that are inclined with respect to an outer edge of the work area.

8. The path generation method according to any one of claims 1 to 7, further comprising determining a direction change pattern for changing a direction of the work vehicle according to a width of a work completion area at the corner.

9. A path generation program for generating an automatic travel path for a work vehicle to perform predetermined work on a work target in a work area, the path generation program for causing one or more processors to execute:
determining whether work at a corner of the work area has been completed up to a predetermined position inside the work area; and
generating a corner work path for performing the work at the corner when it is determined that the work at the corner of the work area has not been completed up to the predetermined position.

10. A path generation system for generating an automatic travel path for a work vehicle to perform predetermined work on a work target in a work area, the path generation system comprising a generation processing unit configured to:
determine whether work at a corner of the work area has been completed up to a predetermined position inside the work area; and
generate a corner work path for performing the work at the corner when it is determined that the work at the corner of the work area has not been completed up to the predetermined position.
